# EUROPEAN PATENT SPECIFICATION

(11) **EP 4 547 080 B1**
(45) Date of publication and mention of the grant of the patent: **23.09.2026**
(21) Application number: 23739638.7
(22) Date of filing: 29.06.2023
(51) Int. Cl.: A47L 5/26, A47L 9/24

(54) **A WAND FOR VACUUM CLEANER**
EIN STAB FÜR EINEN STAUBSAUGER
UN MANCHE POUR UN ASPIRATEUR

(30) Priority: 29.06.2022 GB 202209549; 29.06.2022 GB 202209565; 09.11.2022 GB 202216680
(43) Date of publication of application: 07.05.2025
(60) Divisional application: 26198465.2; 26198470.2
(73) Proprietor: DYSON TECHNOLOGY LIMITED, Malmesbury Wiltshire SN16 0RP (GB)
(72) Inventor: JOLLY, Karl, Malmesbury Wiltshire SN16 0RP (GB); GRAY, Jonathan, Malmesbury Wiltshire SN16 0RP (GB); PARKER, Stephanie, Malmesbury Wiltshire SN16 0RP (GB)
(74) Representative: Dyson IP Department
(86) International application number: PCT/GB2023/051710
(87) International publication number: WO 2024/003564

(56) References cited:
- EP-A1- 2 989 957
- WO-A1-2021/255977
- GB-A- 2 586 995

## Description

### BACKGROUND

Vacuum cleaners may comprise one or more separation systems to separate dirt from an airflow drawn through the vacuum cleaner. WO2021/255977A1 discloses an extension pipe of a vacuum cleaner and a vacuum cleaner unit. EP2989957A1 discloses a cleaning apparatus.

### BRIEF DESCRIPTION OF THE DRAWINGS

Figure 1 is a perspective view of a vacuum cleaner;
Figure 2 is a perspective view of a main unit of the vacuum cleaner;
Figure 3 is an exploded view of the main unit;
Figure 4 is an exploded view of a bin assembly of the main unit;
Figure 5 is a rear perspective view of the bin assembly;
Figure 6 is a side sectional view through a portion of the bin assembly;
Figure 7 is a perspective view of an inlet valve assembly that forms part of the bin assembly;
Figure 8 is a perspective view of a portion of the bin assembly, wherein an inlet valve member of the inlet valve assembly is in (a) a closed position and (b) an open position;
Figure 9 is an exploded view of a wand interlock mechanism of the bin assembly;
Figure 10 is a front perspective view of the bin assembly;
Figure 11 is the same front perspective view as that of Figure 10, wherein a bin cover forming part of the bin assembly has been omitted and the wand interlock mechanism is in a first configuration;
Figure 12 is the same front perspective view as that of Figure 11, wherein the wand interlock mechanism is in a second configuration;
Figure 13 is the same front perspective view as that of Figures 11 and 12, wherein the wand interlock mechanism is in a third configuration;
Figure 14 is a perspective view of a section through a portion of the bin assembly, wherein a wand interlock slider, forming part of the wand interlock assembly, is in a second position;
Figure 15 is the same perspective view as that of Figure 14, wherein the wand interlock slider is in a third position;
Figure 16 is a perspective view of a bin body of the bin assembly;
Figure 17 is a top plan view of the bin body;
Figure 18 is a front perspective view of the bin assembly, wherein a base of the bin assembly is in an open position;
Figure 19 is a perspective view of a bin closure mechanism that forms part of the bin assembly;
Figure 20 is a side view of the base of the bin assembly;
Figure 21 is a plan sectional view through a portion of the bin assembly;
Figure 22 is a front perspective view of a primary separation system of the main unit;
Figure 23 is a rear perspective view of the primary separation system;
Figure 24 is a top plan view of the primary separation system;
Figure 25 is a bottom plan view of the primary separation system;
Figure 26 is a top plan view of the primary separation system, wherein an electrical harness and components of a dirt detection assembly are omitted;
Figure 27 is a sectional slice through the primary separation system of Figure 26 in the plane A--A;
Figure 28 is a sectional slice through the primary separation system of Figure 26 in the plane B--B;
Figure 29 is a sectional slice through the primary separation system of Figure 26 in the plane C--C;
Figure 30 is a sectional slice through the primary separation system of Figure 26 in the plane D--D;
Figure 31 is a perspective view of a primary filter that forms part of the primary separation system;
Figure 32 is a top plan view of the primary filter;
Figure 33 is a perspective view of auxiliary filters that form part of the primary separation system;
Figure 34 is an exploded view of a dirt detection assembly of the primary separation system;
Figure 35 is a first perspective assembled view of a compaction assembly;
Figure 36 is a second perspective assembled view of the compaction assembly;
Figure 37 is an exploded view of a compaction assembly of the main unit;
Figure 38 is a front perspective view of a runner assembly of the main unit;
Figure 39 is a rear perspective view of the runner assembly;
Figure 40 is an exploded view of the runner assembly;
Figure 41 is an exploded view of a secondary separation system of the main unit;
Figure 42 is an exploded view of sub-components of the secondary separation system;
Figure 43 is a cross-sectional view through the secondary separation system;
Figure 44 is a schematic view of a valve actuator assembly of the secondary separation system;
Figure 45 is a perspective view of a cone pack of the secondary separation system;
Figure 46 is same cross-sectional view as that of Figure 27, wherein a valve assembly of the secondary separation system is in (a) a first position and (b) a second position;
Figure 47 is a schematic cross-sectional view of a motor assembly of the main unit;
Figure 48 is a front perspective view of a housing and handle assembly of the main unit;
Figure 49 is a first cross-sectional view through the housing and handle assemble, taken along a central longitudinal axis of the housing and handle assembly;
Figure 50 is a second cross-sectional view through the housing and handle assemble, taken orthogonal to the central longitudinal axis of the housing and handle assemble;
Figure 51 is a side view of a handle portion of the housing and handle assemble;
Figure 52 is a cross sectional side view of the housing and handle assemble;
Figure 53 is a side view of a battery assembly of the main unit;
Figure 54 is a cross sectional side view of the battery assembly;
Figure 55 is an exploded view of a filter assembly of the housing portion;
Figure 56 is a perspective view of the filter assembly;
Figure 57 is a first cross-sectional view of the filter assembly;
Figure 58 is an exploded view of a cap sub-assembly of the filter assembly;
Figure 59 is an exploded view of a pre-filter sub-assembly of the filter assembly;
Figure 60 is an exploded view of a post-filter sub-assembly of the filter assembly;
Figure 61 is a second cross-sectional view of the filter assembly;
Figure 62 is a perspective view of a wand of the vacuum cleaner;
Figure 63 is an exploded view of the wand;
Figure 64 is a cross-sectional view through a first connecting cuff of the wand;
Figure 65 is a cross-sectional view through a second connecting cuff of the wand;
Figure 66 is a first partial perspective plan view of the second connecting cuff and nozzle, wherein the outer wall and the second connecting cuff housing has been removed;
Figure 67 is a second partial perspective plan view of the second connecting cuff and nozzle, wherein the outer wall and the second connecting cuff housing has been removed;
Figure 68 is a perspective view of a cleanerhead of the vacuum cleaner;
Figure 69 is a perspective view of the neck portion of the cleanerhead;
Figure 70 is a cross-sectional view through a part of the main unit, taken in a first plane orthogonal to the central longitudinal axis of the main unit, illustrating an airflow path through the main unit; and
Figure 71 is a cross-sectional view through the main unit, taken along the central longitudinal axis of the main unit, illustrating an airflow path through the main unit.

### DETAILED DESCRIPTION

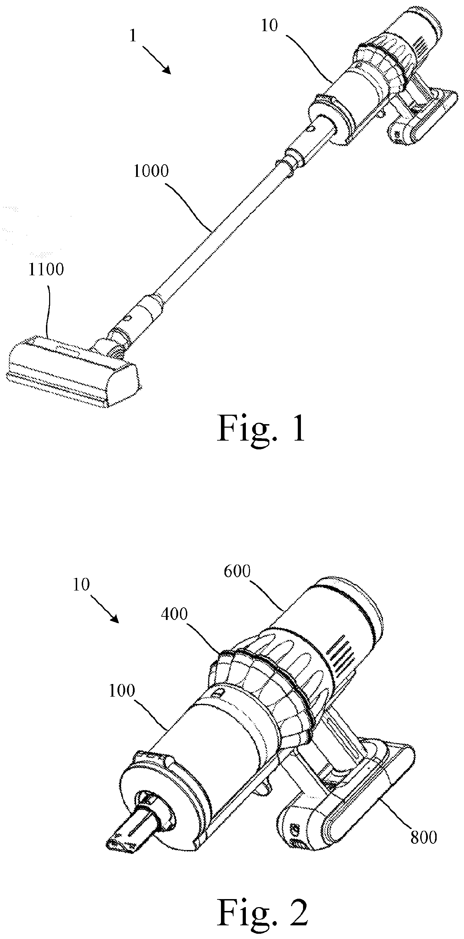

A vacuum cleaner 1 is illustrated in Figure 1. The vacuum cleaner 1 comprises a main unit 10, a wand 1000, and a cleanerhead 1100. The vacuum cleaner 1 is typically referred to as a stick vacuum cleaner. The wand 1000 and the cleanerhead 1100 are removeable from the main unit 10, which can then be used as a standalone handheld vacuum cleaner, as shown in Figure 2.

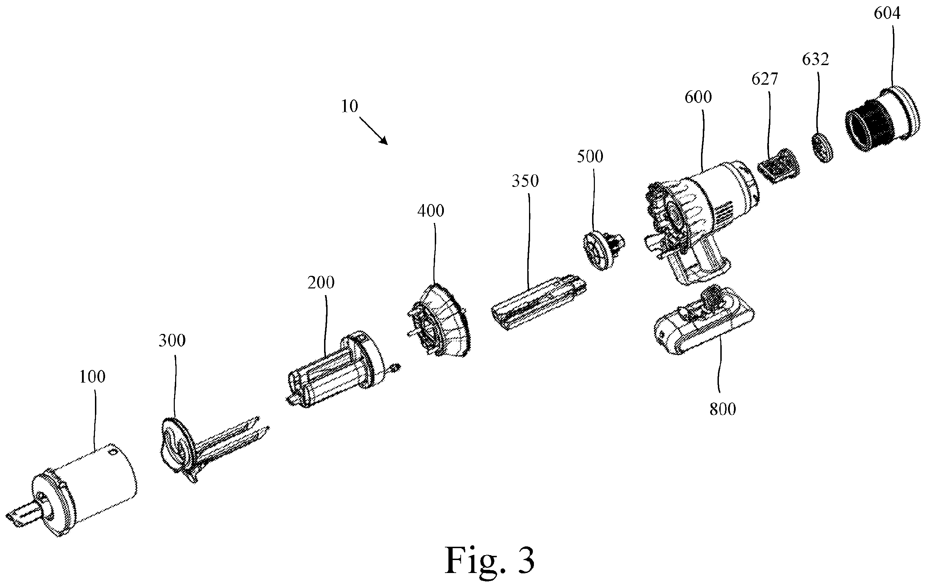

The main unit 10 is illustrated in isolation in Figure 2 and 3, and comprises a bin assembly 100, a primary separation system 200, a compaction assembly 300, a runner assembly 350, a secondary separation system 400, a suction motor 500, a housing and handle assembly 600, a PCB assembly 627, a user interface 632, a filter assembly 604, and a battery assembly 800.

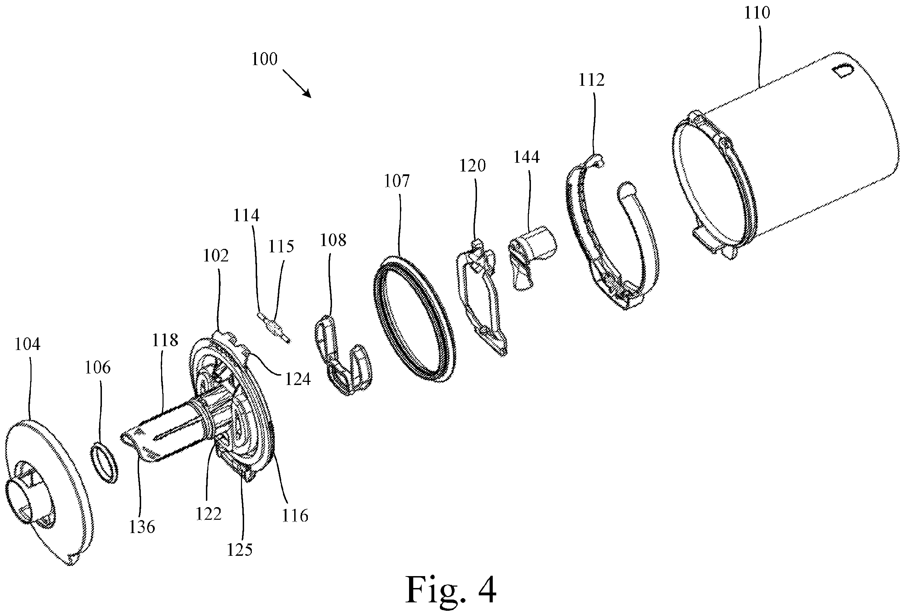

The bin assembly 100 is shown in Figures 4 to 21. The bin assembly 100 comprises a bin base 102, a bin base cover 104, a cuff seal 106, a bin base seal 107, a dirt collection chamber seal 108, a bin body 110, a bin closure clasp 112, a wand interlock mechanism 120, and an inlet valve assembly 144.

The bin base 102 comprises a base plate 116 and a base nozzle 118.

The base plate 116 is generally circular in form, and comprises a base plate aperture 122 and a base hinge portion 124. The base plate aperture 122 is shaped and dimensioned to receive an electrical connector 238 of the primary separation system 200 therethrough. The base hinge portion 124 defines a first half of a hinged connection between the bin base 102 and the bin body 110. The base hinge portion 124 is located on an upper side of the base plate 116 when the main unit 10 is positioned in a horizontal orientation. The base hinge portion 124 defines a hinge axis 123.

A lower region of the base plate 116 comprises a bin push-rod engaging protrusion 125. The bin push-rod engaging protrusion 125 extends from the base plate 116 such that the bin push-rod engaging protrusion 125 extends below the bin body 110 when the bin base 102 is in a closed position. The bin push-rod engaging protrusion 125 comprises a bin hook aperture 126 through which a hook 188 of the bin body 110 projects, when the bin base 102 is in the closed position, as described below in more detail.

The base nozzle 118 extends through the base plate 116, and comprises a major portion that extends from a first side of the base plate 116 in a direction away from the bin body 110. The base nozzle 118 is hollow in form and comprises an airflow inlet 134 at one end, through which airflow enters the interior of the bin assembly 100 during use, when the bin base 102 is in a closed position. In some examples, the base nozzle 118 may be omitted, and the airflow inlet 134 may be defined by an aperture formed in the bin base 102. The base nozzle 118 has a generally round cross-sectional profile when viewed in a plane orthogonal to the longitudinal axis 119 of the base nozzle 118. The longitudinal axis 119 of the base nozzle 118 defines a central axis along which airflow enters the bin assembly 100 during use, which is discussed further below.

A distal end 136 of the base nozzle 118, distal to the base plate 116, is chamfered in shape and comprises a flat portion 138 and an angled portion 140. The flat portion 138 extends in a plane normal to the longitudinal axis 119 of the base nozzle 118 and therefore generally parallel to the base plate 116. The angled portion 140 is longer than the flat portion 138 and extends rearwardly from the flat portion 138 in a plane that is angled relative to the longitudinal axis 119 of the base nozzle 118. In this example, the angled portion 140 extends in a plane that forms an acute angle of around 45 degrees relative to the longitudinal axis 119 of the base nozzle 118.

The base nozzle 118 comprises a plurality of bleed holes 141 that extend through the wall of the base nozzle 118. The bleed holes 141 are located towards the distal end 136 of the base nozzle 118 and, in this example, are grouped into three sets. A first set is located on the top of the base nozzle 118, and the other two sets are located on opposing sides of the base nozzle 118. No bleed holes are located on the bottom of the base nozzle 118.

An outer surface of the base nozzle 118 comprises four tapered ribs 142. The four tapered ribs 142 are each shaped and dimensioned to be received within a corresponding channel formed on an internal surface of a cuff 1006 of the wand 1000, when attached to the main unit 10, which is discussed further below.

The base nozzle 118 comprises an inlet valve stop 143 located on the inside of the base nozzle 118 at an end proximal the base plate 116. The inlet valve stop 143 takes the form of a protrusion that protrudes upward from the bottom of the inner surface of the base nozzle 118. In this example, the inlet valve stop 143 is wedge-shaped and resembles a right triangle in cross-section. The inlet valve stop 143 is therefore ramped and increases gradually in height in a direction towards the proximal end of the base nozzle 118. As discussed further below, the inlet valve stop 143 acts to stop or limit movement of the inlet valve member 146. The ramped profile of the inlet valve stop 143 helps reduce any disturbance caused by the inlet valve stop 143 to the airflow moving through the base nozzle 118.

The inlet valve assembly 144 is attached to the base plate 116. More particularly, the inlet valve assembly 144 is attached to a second side of the base plate 116 at a location above the base nozzle 118.

The inlet valve assembly 144 comprises an inlet valve member 146, a fabric hinge 148, and an inlet valve guard 150.

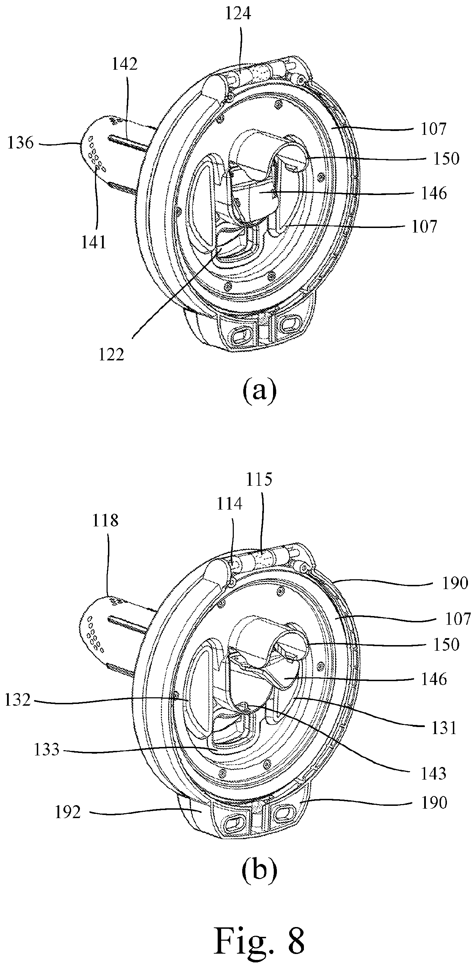

The inlet valve member 146 is attached to the inlet valve guard 150 by the fabric hinge 148 such that the inlet valve member 146 is movable relative to the inlet valve guard 150. More particularly, the inlet valve member pivots, via the fabric hinge 148, between a closed position in which the airflow inlet 134 is obstructed by inlet valve member 146, shown in Figure 8(a)), and an open position in which the airflow inlet 134 is unobstructed by the inlet valve member 146, shown in Figure 8(b).

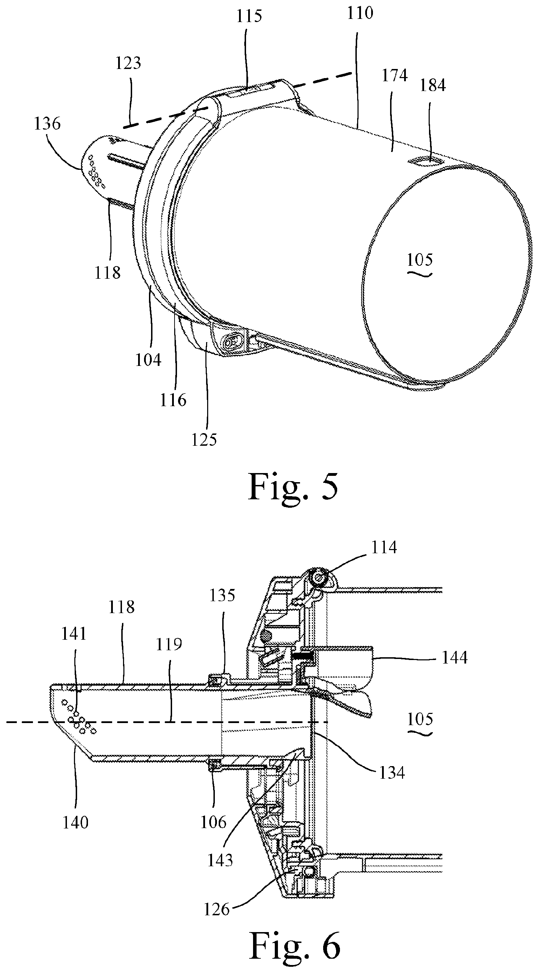

The inlet valve member 146 is shaped such that, when in the open position, the inlet valve member 146 shapes the airflow entering the bin body 110 through the airflow inlet 134. More particularly, the inlet valve member 146 shapes the airflow such that the profile of the airflow better corresponds to a surface of a primary filter 204 and first core portion 212 of the primary separation system 200, as described below in more detail. To this end, the inlet valve member 146 is downwardly convex in shape. The depth of the convex surface of the inlet valve member 146 increases from a first, upstream end of the inlet valve member 146, which attached to the fabric hinge 148, to a second, downstream end. When in the open position, the inlet valve member 146 is spaced radially from the longitudinal axis 119 of the base nozzle 118. The convex surface of the inlet valve member 146 projects towards the axis 119, and the depth of the convex surface increases from the upstream end to the downstream end; this is perhaps best seen in Figure 6. Consequently, the radial distance between upstream end of the inlet valve member 146 and the longitudinal axis 119 of the base nozzle 118 is greater than the radial distance between downstream end and the longitudinal axis 119. When the inlet valve member 146 is in the open position, the inlet valve member 146 deflects the upper part of the airflow 110 in a downward direction, and thus the airflow entering the bin chamber 105 does so as a generally U-shaped column of air.

The fabric hinge 148 is attached to both the inlet valve member 146 and the inlet valve guard 150. The fabric hinge 148 enables movement of the inlet valve member 146 relative to the inlet valve guard 150 from the closed position to the open position. By employing a fabric hinge 148, the force required to move the inlet valve member 146 to the open position is relatively low. As a result, the inlet valve member 146 moves to the open position in response to relatively low flow rates moving through the base nozzle 118. More accurately, the inlet valve member 146 moves in response to suction generated by the suction motor 500. This suction creates a pressure difference across the inlet valve member 146, which in turn causes air on the upstream side of the inlet valve member 146 to push and move the inlet valve member 146 to the open position. The inlet valve member 146 pivots about a horizontal axis. The inlet valve member 146 therefore moves to the open position in an upward direction. When the suction is removed, the inlet valve member 146 returns to the closed position under the force of gravity. The inlet valve member 146 may therefore be said to be biased to the closed position, and moves to the open position in response to suction generated by the suction motor 500. In this example, the fabric hinge 148 is formed of nylon, but other fabrics or materials capable of providing a low hinge torque may be used.

The inlet valve guard 150 is shaped as a concave hood that overlies the inlet valve member 146. The inlet valve guard 150 comprises abutment portions 151 which engage with corresponding abutment portions 147 on the inlet valve member 146, when the inlet valve member 146 is in the open position. This then prevents over-rotation of the inlet valve member 146, which might otherwise cause the inlet valve member 146 to become jammed within the inlet valve guard 150.

When the inlet valve member 146 is in the closed position, as shown in Figure 8(a), the inlet valve member 146 abuts the inlet valve stop 143. This then prevents the inlet valve member 146 from potentially jamming within the base nozzle 118 when returning to the closed position.

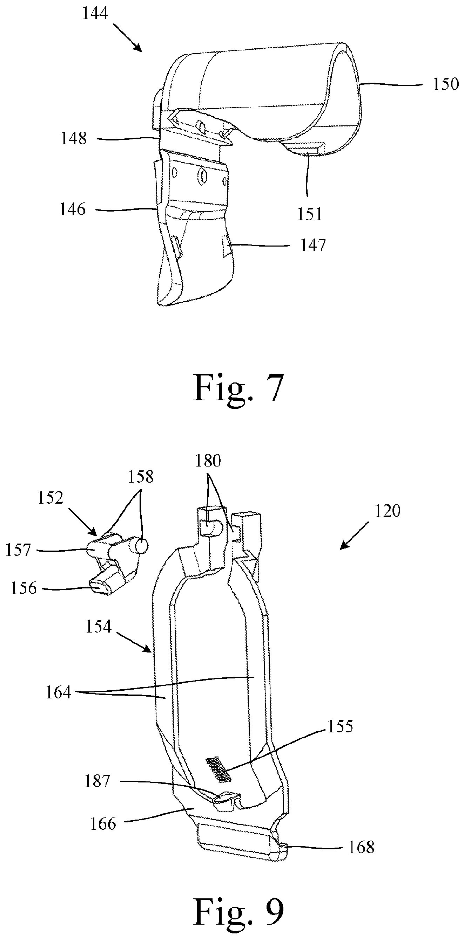

The wand interlock mechanism 120 is shown in Figures 9 to 11. The wand interlock mechanism 120 comprises a wand interlock actuator 152, a wand interlock slider 154, and a wand interlock spring 155.

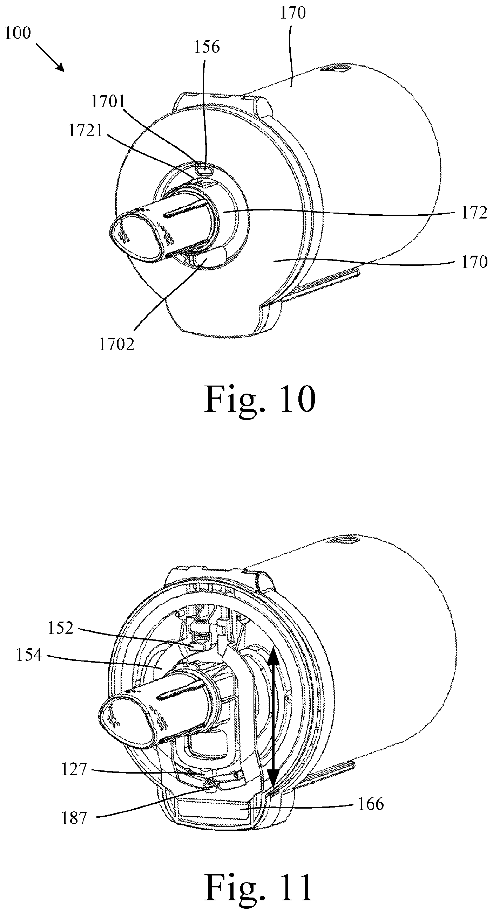

The wand interlock actuator 152 comprises a wand abutment portion 156, a pivot pin 157, and a pair of push arms 158. The wand interlock actuator 152 is pivotally mounted to the base plate 116 by means of the pivot pin 157, which is received within a notch in the base plate 116, best seen in Figure 11. The wand abutment portion 156 projects through an opening 1701 in the bin base cover 104, which can be seen in Figure 10. The wand interlock actuator 152 pivots relative to the base plate 116 about an axis that is parallel to the hinge axis 123.

The push arms 158 are received within corresponding notches 180 of the wand interlock slider 154. In response to pivoting of the wand interlock actuator 152, the push arms 158 engage with the wand interlock slider 154 to cause the wand interlock slider 154 to move or translate in a direction normal to the pivot axis of the wand interlock actuator 152; the direction of movement of the wand interlock slider 154 is indicated by the arrow in Figure 11. Movement of the wand interlock actuator 152 and the wand interlock slider 154 are therefore coupled, which is to say that movement of one of the wand interlock actuator 152 and the wand interlock slider 154 causes movement of the other.

The wand interlock slider 154 comprises a pair of arms 164 attached to a base portion 166. The arms 164 are generally elongate in form, and extend upwardly from opposite ends of the base portion 166. The free end of each arm 164 (i.e., the end distal the base portion 166) comprises a notch 180 for receiving a respective push arm 158 of the wand interlock actuator 152. The arms 164 extend upwardly on opposite sides of the base nozzle 118.

The base portion 166 comprises a hook 168 for selectively engaging with the bin body 110. The base portion 166 further comprises a recess or pocket 187 that receives one end of the wand interlock spring 155. The base plate 116 comprises a similar recess or pocket 127 that receives the opposite end of the wand interlock spring 155. As a result, the wand interlock spring 155 is held between the base plate 116 and the wand interlock slider 154.

The wand interlock mechanism 120 has three configurations. In a first configuration, the wand interlock mechanism 120 prevents attachment of the wand 1000 or other attachment to the base nozzle 118 when the bin base 102 is in the open position. In a second configuration, the wand interlock mechanism 120 permits attachment of the wand 1000 or other attachment to the base nozzle 118 when the bin base 102 is in the closed position. And in a third configuration, the wand interlock mechanism 120 prevents movement of the bin base 102 from the closed position to the open position when the wand 1000 or other attachment is attached to the base nozzle 118.

The first configuration of the wand interlock mechanism 120 is shown in Figure 11. The wand interlock mechanism 120 adopts the first configuration when the bin base 102 is in the open position. The wand interlock spring 155 is held between the base plate 116 and the wand interlock slider 154. When the bin base 102 is in the open position, the wand interlock spring 155 biases the wand interlock slider 154 to a first position, which in turn biases the wand interlock actuator 152 to a first position. In this example, the wand interlock spring 155 biases the wand interlock slider 154 in a downward direction. The first position of the wand interlock slider 154 may therefore be regarded as a lowermost position. The wand interlock actuator 152, on the other hand, pivots to an uppermost position in its first position. As noted above, the wand interlock actuator 152 projects through an opening 1701 in the bin base cover 104. As the wand 1000 or other attachment is inserted over the base nozzle 118 for attachment, the wand interlock actuator 152 abuts the wand 1000 or attachment to prevent further travel of the wand 1000 or attachment along the base nozzle 118, thereby preventing the wand 1000 or attachment from attaching to the base nozzle 118.

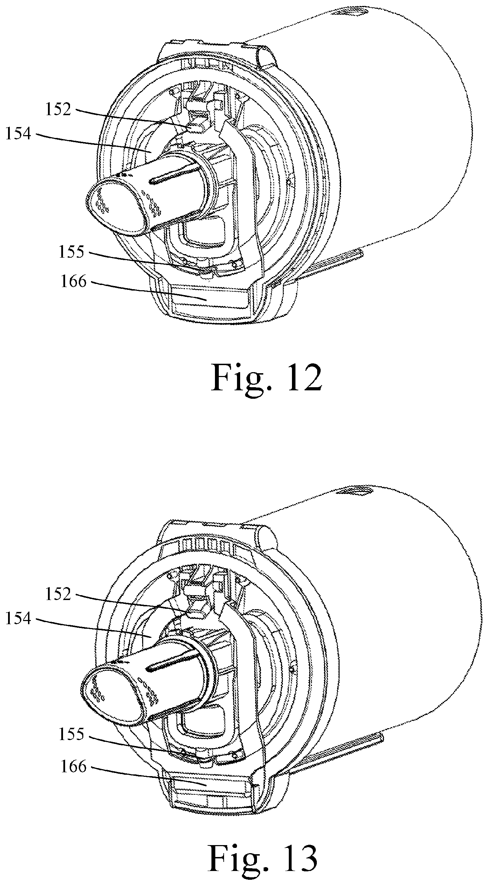

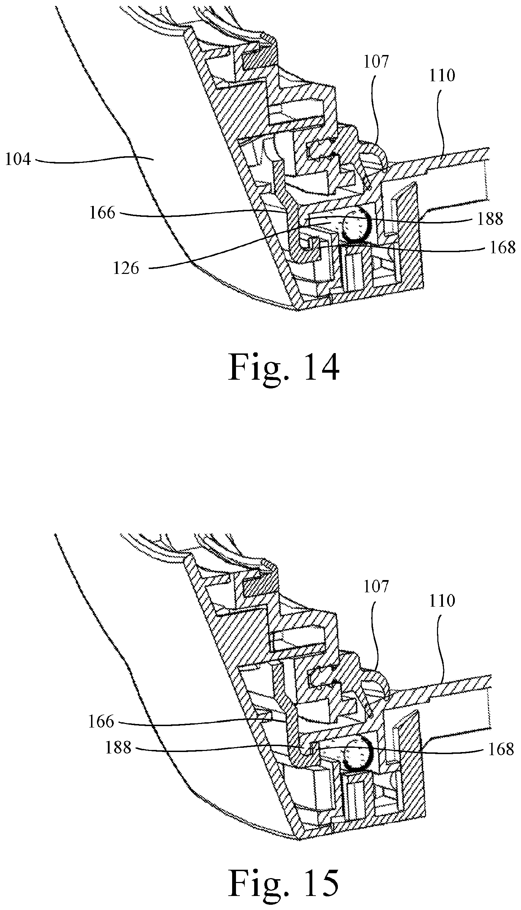

The second configuration of the wand interlock mechanism 120 is shown in Figures 12 and 14. In response to moving the bin base 102 to the closed position, the wand interlock mechanism 120 moves from the first configuration to the second configuration. More particularly, as the bin base 102 moves to the closed position, the bin body 110 engages the base portion 166 of the wand interlock slider 154 and moves the wand interlock slider 154, against the biasing force of the wand interlock spring 155, from its first position to a second position. In response, the wand interlock actuator 152 pivots from its first position to a second position. In this particular example, the wand interlock slider 154 translates upward from its first position to its second position, and the wand interlock actuator 152 pivots downward from its first position to its second position. As the wand 1000 or other attachment is inserted over the base nozzle 118 for attachment, the wand 1000 or attachment engages the wand interlock actuator 152. Owing to its lower second position, the wand interlock actuator 152 no longer prevents the wand 1000 or attachment from attaching to the base nozzle 118. Instead, upon engaging the wand interlock actuator 152, further travel of the wand 1000 or attachment along the base nozzle 118 causes the wand interlock actuator 152 to pivot downward, against the biasing force of the wand interlock spring 155, from its second position to a third position. In response, the wand interlock slider 154 translates from its second position to a third position. In this particular example, the wand interlock actuator 152 pivots downward from its second position to its third position, and the wand interlock slider 154 translates upward from its second position to its third position. Figure 14 shows the position of the wand interlock slider 154 in the second portion, and Figure 15 shows the position on the wand interlock slider 154 in the third position.

The third configuration of the wand interlock mechanism 120 is shown in Figures 13 and 15. In the third configuration, the wand interlock actuator 152 and the wand interlock slider 154 are in their third positions. When the wand interlock slider 154 is in its third position, the base portion 166 of the wand interlock slider 154 engages the bin body 110 to prevent movement of the bin base 102 from the closed position. More particularly, the hook 168 of the wand interlock slider 154 engages with a hook 188 of the bin body 110 to prevent movement of the bin base 102 from the closed position. As a result, it is not possible to open the bin assembly 100 when the wand 1000 or other attachment is attached to the base nozzle 118.

When the wand 1000 or attachment is subsequently detached from the base nozzle 118, the wand interlock mechanism 120 moves from the third configuration to the second configuration. In particular, the wand interlock actuator 152, under the biasing force of the wand interlock spring 155, moves from its third position to its second position. In response, the wand interlock slider 154 moves from its third position to its second position. The hook 168 of the wand interlock slider 154 therefore disengages with the hook 188 of the bin body 110 and thus the bin base 102 is free to move from the closed position to the open position.

When the bin base 102 is subsequently moved from the closed position to the open position, the wand interlock mechanism 120 moves from the second configuration to the first configuration. In particular, the wand interlock slider 154 no longer engages with the bin body 110 and thus the wand interlock slider 154, under the biasing force of the wand interlock spring 155, moves from its second position to its first position. In response, the wand interlock actuator 152 moves from its second position to its first position, to thus prevent the wand 1000 or other attachment from attaching to the base nozzle 118.

The bin base cover 104 comprises a first portion 170 that overlies and covers the base plate 116 and wand interlock mechanism 120, and a second portion 172 that overlies and covers of a portion of the base nozzle 118. The first portion 170 comprises a first opening 1701 through which the wand interlock actuator 152 projects and a second opening 1702 through which the electrical connector 238 projects, as can be seen in Figure 10. The second portion 172 comprises an opening 1721 through which a wand catch 1022 of the wand 1000 may extend so as to engage with a locking projection 135 on the base nozzle 118, as will be discussed in more detail below.

The cuff seal 106 is annular in form, surrounds the base nozzle 118, and sits between the base nozzle 118 and the second portion 172 of the bin base cover 104. As a result, the second portion 172 of the bin base cover 104 overlies and protects the cuff seal 106.

The bin base seal 107 is annular in form and is secured to the second side of the base plate 116. When the bin base 102 is in a closed position (described below in more detail), the bin base seal 107 forms an airtight seal against the bin body 110. In this particular example, the bin base seal 107 comprises a pair of lip seals that seal against the inner surface of the bin body 110.

The dirt collection chamber seal 108 comprises a first seal 131, a second seal 132 and a third seal 133. The first and second seals 131,132 form airtight seals against the walls of the first and second dirt collection chambers 228,230, described below. In the present example, the ends of the first and second dirt collection chambers 228,230 are shaped as circular segments, and thus the first and second seals 131,132 are likewise shaped as circular segments. The third seal 133 forms an airtight seal against the electrical connector 238 that extends through the bin base 102. The electrical connector 238 is roughly rectangular in shape and thus the third seal 133 is similarly rectangular in shape. In the present example, the first and second seals 131,132 each comprise a lip seal that seals against an inner surface of the respective dirt collection chambers 228,230, and the third seal 133 comprises a lip seal that seals against the outer surface of the electrical connector 238.

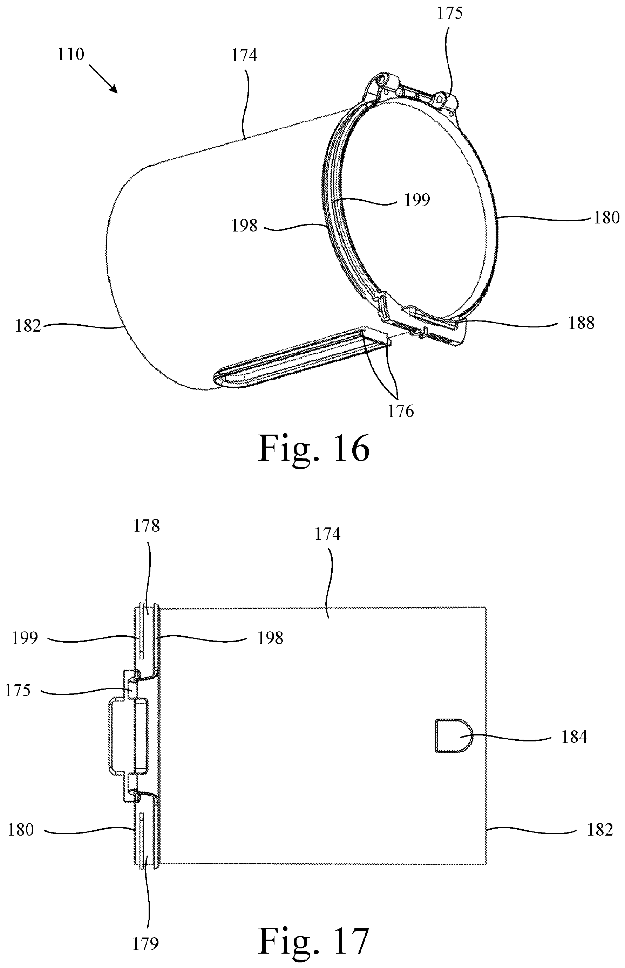

Referring now to Figures 16 and 17, the bin body 110 comprises a bin case 174, a bin hinge portion 175, a pair of rails 176, first and second channels 178,179 and a bin base hook 188. In this example, the bin case 174, the bin hinge portion 175, the rails 176, the channels 178,179, and the bin base hook 188 are all integrally formed.

The bin case 174 is generally cylindrical in form and comprises an opening 184 located towards a second end 182 of the bin case 174. In this example, the opening 184 is located on an upper side of the bin case 174. When the bin assembly 100 is attached to the primary separation system 200, the opening in the bin case 174 receives a bin-release catch 252. A user is then able to release and remove the bin assembly 100 by depressing the bin-release catch 252.

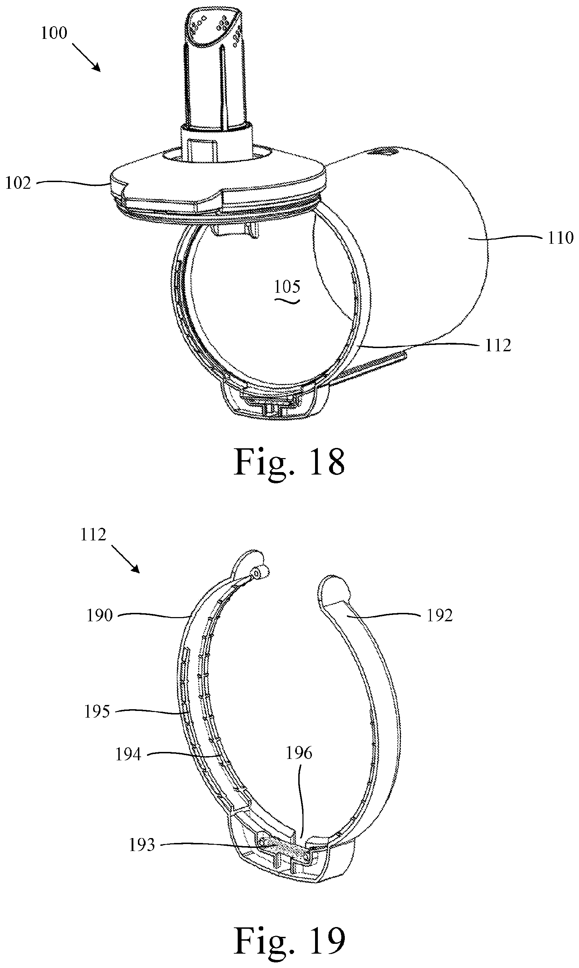

The bin hinge portion 175 is located at the first end 181 of the bin case 174 and defines a second half of a hinged connection between the bin base 102 and the bin body 110. More particularly, the bin hinge portion 175 and the base hinge portion 124 are held together by a hinge pin 114 to define the hinged connection. The bin hinge portion 175 is located on an upper side of the bin case 174 when the vacuum cleaner 1 is positioned in a horizontal orientation. The bin base 102 is moveable relative to the bin body 110 about the hinge axis 123. The bin base 102 is moveable between a closed position, shown in Figure 10, and an open position, shown in Figure 18. In this example, the bin assembly 100 comprises a torsion spring 115 that surrounds the hinge pin 114 and biases the bin base 102 to the open position.

The rails 176 are located on an outer surface of the bin case 174. In this example, the rails 176 are located on a lower side of the bin case 174 and extend along a major length of the bin case 174. The rails 176 are used to attach the bin assembly 100 to the runner assembly 350, which is described below in more detail.

The channels 178,179 are located at the first end 181 of the bin case 174 on opposite sides of the bin hinge portion 175. Each of the channels 178,179 is formed by a pair of parallel projections or tracks 198,199 that extend partly around the bin case 174. As explained below, the channels 178,179 receive and retain the bin closure clasp 112.

The bin base hook 188 extends from the first end 181 of the bin case 174. When the bin base 102 is in the closed position, the bin base hook 188 extends through the bin hook aperture 126 in the base plate 116. As noted above, the wand interlock slider 154 selectively engages with the bin base hook 188 to prevent and permit movement of the bin 102 from the closed position.

Referring now to Figures 19 to 21, the bin closure clasp 112 comprises first and second clasps 190,192 and an extension spring 193. Each of the clasps 190,192 is generally arcuate or C-shaped and is seated within a respective channel 178,179 of the bin body 110. Each clasp 190,192 is attached at a first end to the bin body 110. In this example, the first end of each clasp 190,192 is attached to the base hinge portion 175 of the bin body 110. Each clasp body 190,192 is then attached at a second opposite end to the extension spring 193. The extension spring 193 therefore extends between the two clasps 190,192. The extension spring biases the second ends of the claps 190,192 together. As a result, the clasps 190,192 clamp around the first end 181 of the bin body 110.

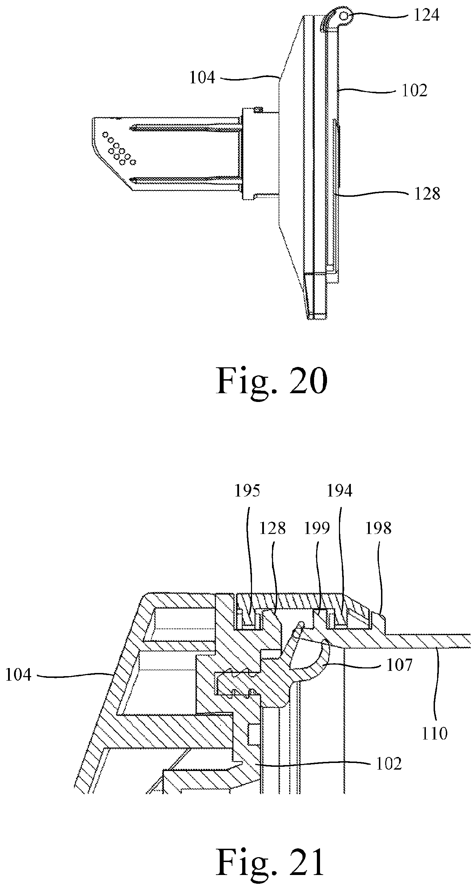

The width of each clasp 190,192 is such that the clasps 190,192 extend beyond the first end 181 of the bin body 110. Each clasp 190,192 comprises a pair of projections 194,195 provided on the inner surface of the arcuate portion of the clasp 190,192. As can be seen in Figure 21, the clasps 190,192 are retained within a respective channel 178,179 of the bin body 110 by the projections or tracks 198,199. Movement of the clasps 190,192 in an axial direction (i.e., in a direction parallel to the longitudinal axis of the bin assembly 100) is then opposed by the tracks 198,199 of the bin body 110. In particular, axial movement of each clasp 190,192 in a first direction (to the left in Figure 21) causes the first projection 194 of the clasp 190,192 to abut against the second track 199 of the bin body 110, and axial movement of each clasp 190,192 in a second opposite direction (to the right in Figure 21) causes an end of the clasp 190,192 to abut against the first track 198 of the bin body 110.

The second projection 195 of each clasp 190,192 is provided on that part of the clasp 190,192 that extends beyond the first end 181 of the bin body 110. The second projections 195 of the clasps 190,192 then engage with a pair of projections 128 on the bin base 102 when the bin base 102 is in the closed position. Figure 20 shows just one of the pair of projections 128, which engages with the second clasp 192. A corresponding projection 128 is provided on the opposite side of the bin base 102 and can be seen in Figure 21.

The bin base 102 comprises a pair of projections 128 each of which extends circumferentially around a part only of the base plate 116 of the bin base 102. Likewise, the second projection 195 of each clasp 190,192 extends circumferentially around a part only of the clasp 190,192. When the bin base 102 is in the closed position, as shown in Figure 21, the second projection 195 of the first clasp 190 engages with one of the pair of projections 128 of the bin base 102, and the second projection 195 of the second clasp 192 engages with the other of the pair of projections 128. As a result, movement of the bin base 102 from the closed position to the open position is prevented.

The bin closure clasp 112 has a contracted configuration and an expanded configuration. The bin closure clasp 112 is shown in the contracted configuration in Figures 18, 19 and 21. When the bin base 102 is in the closed position and the bin closure clasp 112 is in the contracted configuration, the bin closure clasp 112 retains the bin base 102 in the closed position. In order to release the bin base 102 from the closed position, the bin closure clasp 112 is moved to the expanded configuration.

In order to move the bin closure clasp 112 to the expanded configuration, a bin push rod 356, forming part of the runner assembly 350 and described below in more detail, is pushed in the direction of the bin base 102. The end of the bin push rod 356 projects into a gap 196 between the two clasps 190,192. The end of the bin push rod 256 is wedge-shaped. Consequently, as the bin push rod 356 is pushed towards the bin base 102, the bin push rod 356 engages and pushes apart the two clasps 190,192 against the biasing force of the extension spring 193. As the clasps 190,192 are pushed apart, each clasp 190,192 flexes or pivots outwardly about the first end that is attached to the bin body 110. As the clasps 190,192 pivot, the second projections 195 of the clasps 190,192 disengage or clear the projections 128 of the bin base 102. As a result, the bin base 102 is no longer retained by the bin closure clasp 112 and is free to move to the open position.

The first projections 194 of the clasp 190,192 and the tracks 198,199 of the bin body 110 have a greater circumferential extension. Consequently, whilst the second projections 195 of the clasps 190,192 disengage the projections 128 of the bin base 110, the first projections 194 continue to engage the projections 199 of the bin body 110. As a result, each clasp 190,192 continues to be retained within the channels 178,179 of the bin body 110.

The clasps 190,192 of the bin closure clasp 112 are moved apart in the expanded configuration. More particularly, the second ends of the clasps 190,192 are moved apart, whilst the first ends of the clasps 190,192 remain positionally fixed. In moving apart, the clasps 190,192 effectively expand in an outward direction away from the bin body 110 and the bin base 102. The clasps 190,192 can perhaps be thought collectively as a band or c-clip that surrounds an end the bin body 110 and the bin base 102. The diameter of this band or c-clip then expands in the expanded configuration and contracts in the contracted configuration. The clasps 190,192 may therefore be said to have a first equivalent diameter in the contracted configuration and a second, larger equivalent diameter in the second configuration.

The projections 128 of the bin base 110 are ramped; this can be seen in Figure 21. When the bin closure clasp 112 is in the contracted configuration and the bin base 102 is moved from the open position to the closed position, the ramped faces of the projections 128 contact the second projections 195 of the clasps 190,192. As the bin base 110 continues to be moved to the closed position, the second projections 195 of the clasps 190,192 ride up the ramped faces of the projections 128 of the bin base 110. This causes the clasps 190,192 to pivot outwardly about the first ends that are attached to the bin body 110. The two clasps 190,192 are therefore pushed apart, with the push force used to move the bin base 110 acting in opposition to the biasing force of the extension spring 193. Finally, as the bin base 110 completes the move to the closed position, the second projections 195 of the clasps 190,192 ride over the top of the projections 128 of the bin base 110. The biasing force of the extension spring 193 then causes the two clasps 190,192 to snap down over the projections 128 of the bin base 110. As a result, the bin base 110 is again retained in the closed position by the bin closure clasp 112. The ramped faces of the projections 128 of the bin base 102 therefore enable the bin closure clasp 112 to move from the contracted configuration to the expanded configuration during closure of the bin base 102.

In some examples, each of the clasps 190,192 may comprise a roller, a bearing or a low-friction bushing against which the end of the bin push rod 356 engages. This may then reduce friction and thus wear of the clasps 190,192 and/or the bin push rod 356.

The bin base 102 and the bin body 110 together define an internal chamber 105 of the bin assembly 100. As described below in more detail, in use, airflow enters the chamber 105 via the airflow inlet 134. Dirt entrained in the airflow is then separated by the primary separation system 200 and retained within the chamber 105 of the bin assembly 100. The chamber 105 is then emptied by moving the bin base 102 to the open position.

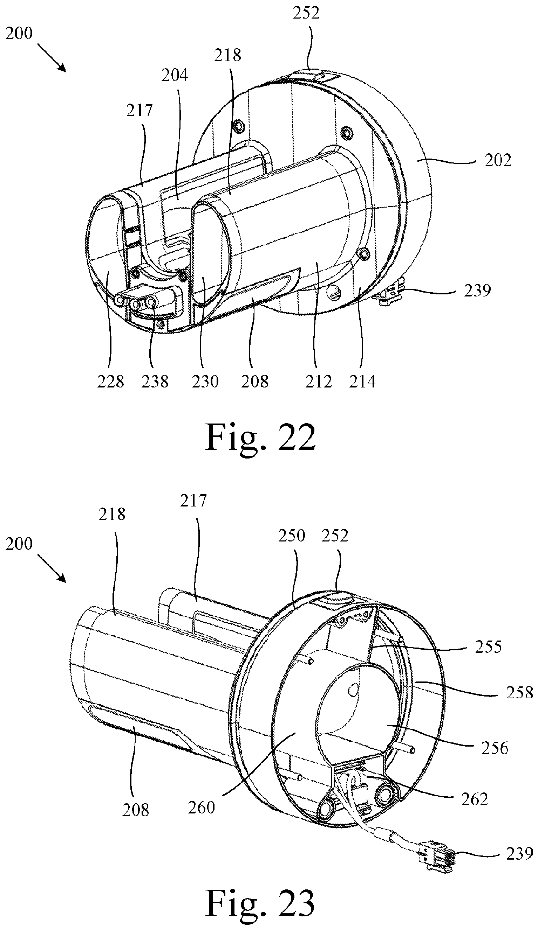

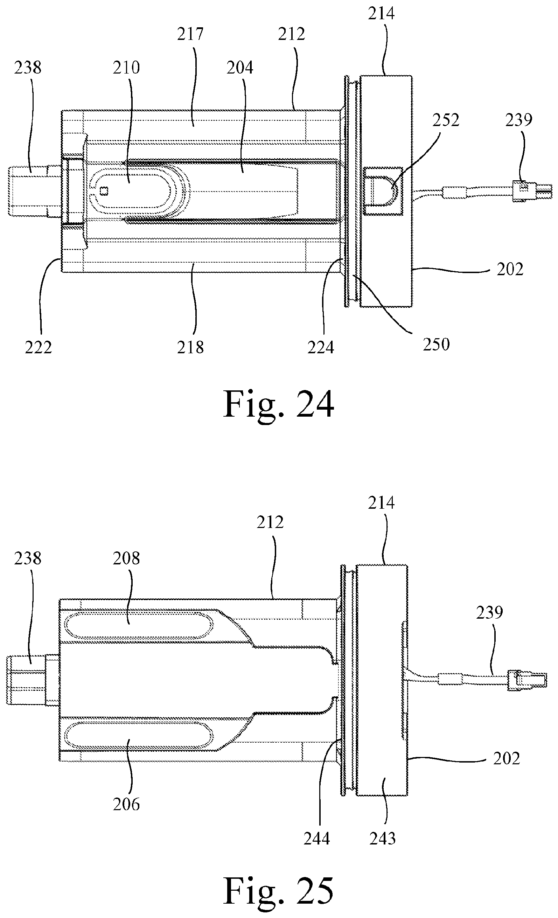

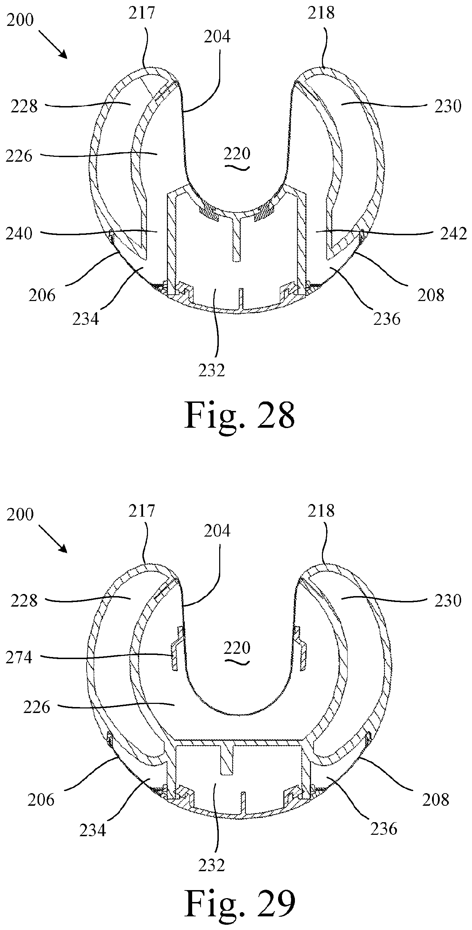

The primary separation system 200 is illustrated in Figures 22 to 33, and comprises a core 202, a primary filter 204, first and second auxiliary filters 206,208, a dirt detection assembly 210, an electrical connector 238, an electrical harness 239, a bin body seal 250, and a bin release catch 252. The primary separation system 200 is a non-cyclonic separation system, as will be described in more detail hereinafter.

The core 202 comprises a first core portion 212 and a second core portion 214. The first core portion 212 is located within the chamber 105 of the bin assembly 100, and the second core portion 214 closes the open end of the bin assembly 100.

The first core portion 212 is generally U-shaped along its length. The cross-sectional shape of the first core portion 212 is substantially uniform along its length. The outer profile of the first core portion 212 may be said to comprise a concave portion and a convex portion. The concave portion defines a trough or airflow channel 220 that extends along the length of the first core portion 211. The first core portion 212 may be thought of as comprising a first arm 217 and a second arm 218, each of which is arcuate and forms one half of the U-shaped core 212.

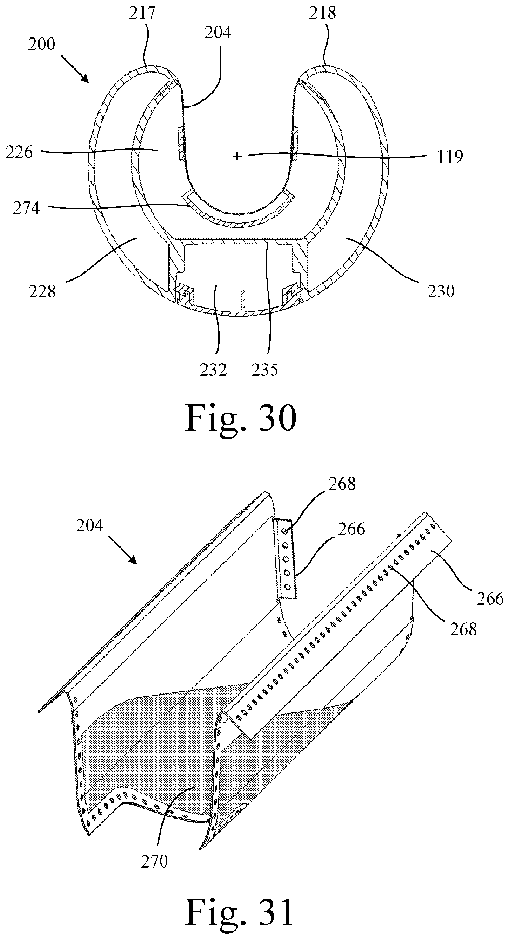

The first core portion 212 is positioned within the bin assembly 100 and extends from the first end 181 to the second end 182 of the bin body 110. The first core portion 212 is positioned within the bin assembly 100 such that the chamber 105 of the bin assembly 100 completely surrounds first core portion 212. The first core portion 212 extends in a direction parallel to the longitudinal axis 119 of the base nozzle 118. The first core portion 212 is therefore generally U-shaped in cross-section in a plane normal to the longitudinal axis 119. The first core portion 212 extends partly around the longitudinal axis 119 of the base nozzle 118; this can be seen in Figure 30, which shows the location of the longitudinal axis 119. The first and second arms 217,218 may be said to extend upwardly on opposite sides of the longitudinal axis 119. The airflow channel 220 of the first core portion 212 then extends parallel to the longitudinal axis 119. Moreover, the longitudinal axis 119 extends through the airflow channel 220.

The first core portion 212 has a first end 222 proximal the bin base 102 and thus proximal the airflow inlet 134 defined by the base nozzle 118, and a second end 224 distal the bin base 102 and thus distal the airflow inlet 134. The first core portion 212 is generally hollow in form, and comprises internal walls 225 or partitions that partition the interior of the first core portion 212. More particularly, the internal walls 225 define a primary outlet passage 226, a first dirt collection chamber 228, a second dirt collection chamber 230, a looming passage 232, a first auxiliary outlet passage 234, and a second auxiliary outlet passage 236.

The primary outlet passage 226 spans both the first 217 and second 218 arms of the first core portion 212. The primary outlet passage 226 is located at radially inner regions of the first 217 and second 218 arms of the first core portion 212, and is positioned to underlie the primary filter 204. The primary outlet passage 226 begins partway along the axial length of the first core portion 212, as measured from the first end 222 of the first core portion 212, and extends to the second end 224 of the first core portion 212.

The first dirt collection chamber 228 is located in the first arm 217 of the first core portion 212. The first dirt collection chamber 228 extends along the entire length of the first core portion 212, and surrounds a part of the primary outlet passage 226. The first dirt collection chamber 228 shares common walls with the primary outlet passage 226, the first auxiliary outlet passage, and the looming passage 232 at various points along the length of the first dirt collection chamber 228. An end of the first dirt collection chamber 228 at the second end 224 of the first core portion 212 is in fluid communication with the dirt outlets of a first subset 474 of cyclone bodies 464 of the secondary separation stage 400, as will be discussed in more detail hereinafter. An opposite end of the first dirt collection chamber 228 at the first end 222 of the first core portion 212 is open. When the bin base 102 is in the closed position, the base plate 116 and the dirt collection chamber seal 108 (more specifically the first seal 131) close and seal the end of the first dirt collection chamber 228.

The second dirt collection chamber 230 is located in the second arm 218 of the first core portion 212. The second dirt collection chamber 230 extends along the entire length of the first core portion 212, and surrounds a part of the primary outlet passage 226. The second dirt collection chamber 230 shares common walls with the primary outlet passage 226, the second auxiliary outlet passage 236, and the looming passage 232 at various points along the length of the second dirt collection chamber 230. An end of the second dirt collection chamber 230 at the second end 224 of the first core portion 212 is in fluid communication with dirt outlets of a second subset 476 of cyclone bodies 464 of the secondary separation stage 400, as will be discussed in more detail hereinafter. An opposite end of the second dirt collection chamber 230 at the first end 222 of the first core portion 212 is open. When the bin base 102 is in the closed position, the base plate 116 and the dirt collection chamber seal 108 (more specifically the second seal 132) close and seal the end of the second dirt collection chamber 230.

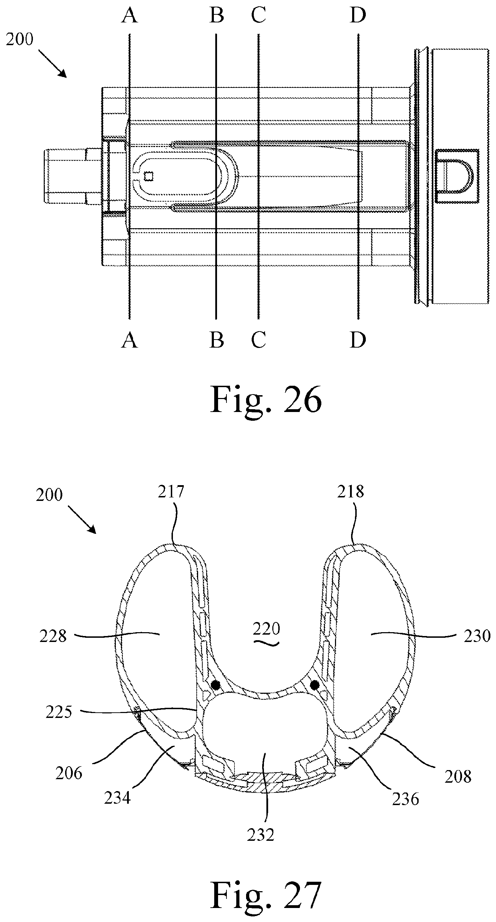

The looming passage 232 is hollow in form and houses the electrical harness 239 and the dirt detection assembly 210. In order to better illustrate the looming passage, the electrical harness 239 and components of the dirt detection assembly 210 have been omitted from Figures 26 to 30. The looming passage 232 is located between the first and second dirt collection chambers 228,230, and below the primary outlet passage 226, within the generally U-shaped cross-section of the first core portion 212. The looming passage 232 extends along the full length of the first core portion 212. An end of the looming passage 232 at the first end 222 of the first core portion 212 is closed by the electrical connector 238, which couples with a corresponding electrical connector 1026 of the wand 1000 to provide both power and communication signals from the main unit 10 to the wand 1000 and the cleanerhead 1100. The electrical harness 239 comprises a first portion that extends between the electrical connector 238 and the circuit board 290 of the dirt detection assembly 210 and a second portion that extends from the circuit board 290 to the housing and handle assembly 600.

The first auxiliary outlet passage 234 is located within the first arm 217 of the first core portion 212. The first auxiliary outlet passage 234 is located below the first dirt collection chamber 228 and extends from the first end 222 of the first core portion 212 along a part of the first core portion 212. The first auxiliary outlet passage 234 is closed at both ends, which is to say that the passage 234 is closed at the first end 22 of the first core portion 212, and is closed at an opposite end. The first auxiliary outlet passage 234 is located at a radially outer region of the first core portion 212. The first auxiliary outlet passage 234 is in fluid communication with the primary outlet passage 226 via a first linking passage 240, which extends through the first dirt collection chamber 228.

The second auxiliary outlet passage 236 is located within the second arm 218 of the first core portion 212. The second auxiliary outlet passage 236 is located below the second dirt collection chamber 230 and extends from the first end 222 of the first core portion 212 along a part of the first core portion 212. The second auxiliary outlet passage 236 is closed at both ends, which is to say that the passage 236 is closed at the first end 222 of the first core portion 212, and is closed at an opposite end. The second auxiliary outlet passage 236 is located at a radially outer region of the first core portion 212. The second auxiliary outlet passage 236 is in fluid communication with the primary outlet passage 226 via a second linking passage 242, which extends through the second dirt collection 230. The first and second auxiliary outlet passages 234,236 are located on opposite sides of the looming passage 232.

The second core portion 214 is generally cylindrical in shape and comprises a side wall 243 and an end wall 244. The second core portion 214 is located at the second end 224 of the first core portion 212, with the end wall 244 abutting the second end 224. In this example, the second core portion 214 is formed integrally with the first core portion 212. The outer diameter of the second core portion 214 is greater than that of the first core portion 212. Consequently, the end wall 244 extends radially outward beyond the second end 224 of the first core portion 212.

The end wall 244 closes an end of the airflow channel 220 of the first core portion 212. The airflow channel 220 is therefore open at the first end 222 of the first core portion 212 and closed by the end wall 244 at the second end 224 of the first core portion 212.

The second core portion 214 comprises an annular channel and a catch recess formed on an outside of the side wall 243. The bin body seal 250 is seated in the annular channel 246, and the bin release catch 252 is seated in the catch recess. The second core portion 214 further comprises internal walls 255 or partitions that partition the interior of the second core portion 214. More particularly, the internal walls 255 define an outlet passage 256, a first dirt transfer passage 258, a second dirt transfer passage 260, and a looming passage 262.

The outlet passage 256 is generally cylindrical in form and is located at the centre of the interior of the second core portion 214. The outlet passage 256 is in fluid communication with the primary outlet passage 226 of the first core portion 212. The outlet passage 256 may therefore be regarded as an extension of the primary outlet passage 226. The end of the outlet passage 256 defines an air outlet of the primary separation system 200.

The first and second dirt transfer passages 258,260 are generally c-shaped, are located on opposite sides of the outlet passage 256, and extends about a major portion of the outlet passage 256. One end of the first dirt transfer passage 258 is in fluid communication with the first dirt collection chamber 228, and an opposite end is in fluid communication with the dirt outlets of the first subset 474 of cyclone bodies 464 of the secondary separation stage 400. The first dirt transfer passage 258 acts as a conduit through which dirt from the first subset 474 of cyclone bodies 464 is transferred to the first dirt collection chamber 228. Similarly, one end of the second dirt transfer passage 260 is in fluid communication with the second dirt collection chamber 230, and an opposite end is in fluid communication with the dirt outlets of the second subset 476 of cyclone bodies 464 of the secondary separation stage 400. The second dirt transfer passage 260 then transfers dirt from the second subset 476 of cyclone bodies 464 to the second dirt collection chamber 230.

The looming passage 262 is located below the outlet passage 256, when the main unit 10 is positioned in a horizontal orientation. The looming passage 262 and the dirt transfer passages 258,260 collectively surround the outlet passage 256. The looming passage 262 is in communication with and may be regarded as an extension of the looming passage 232 of the first core portion 212. The looming passage 262 thus houses the electrical harness 239.

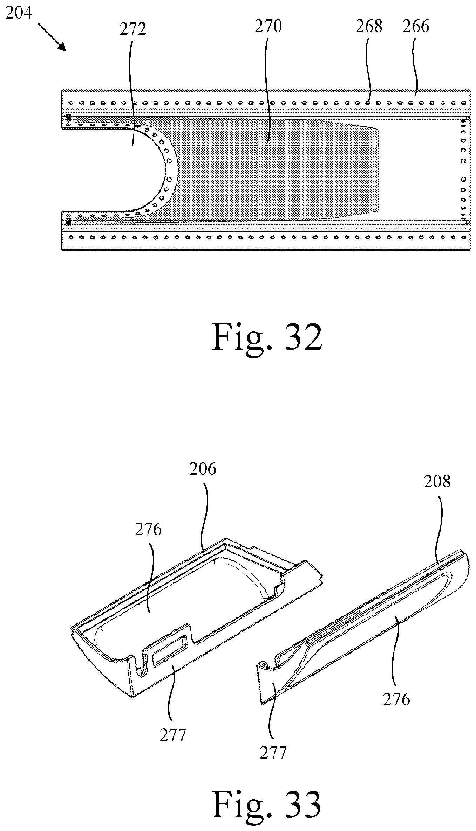

The primary filter 204 is illustrated in isolation in Figures 31 and 32. The primary filter 204 is generally U-shaped in cross-section and corresponds in shape to the profile of the concave portion of the first core portion 212. The primary filter 204 is attached to the core 202, and more particularly to the concave portion of the first core portion 212. In this example, the core 202 is overmoulded onto the primary filter 204, and the primary filter 204 comprises features (e.g., flanges 266 and oversized holes 268) that assist in providing a good securement between the core 202 and the primary filter 204. The primary filter 204 provides a continuation of the profile of the concave portion of the first core portion 212. The first core portion 212 and the primary filter 204 therefore collectively define an outer surface that is concave and which defines the airflow channel 220.

The primary filter 204 is formed of metal and comprises a perforated region or mesh 270 having a plurality of holes. The holes of the mesh 270 have a hole size (i.e., diameter or equivalent diameter) of between 0.2 mm and 0.5 mm, and the mesh has an open area of between 20% and 35%. Furthermore, a ratio of the cross-sectional area of the airflow inlet 134 to the total open area of the mesh is between 0.4 and 0.6. That is to say that the cross-sectional area of the airflow inlet 134 is between two-fifths and three-fifths of the total open area of the primary filter 204.

For the purposes of clarity, the mesh 270 is shown as the shaded region in Figures 31 and 32. The mesh 270 is U-shaped in cross-section. The width of the mesh 270 tapers along the length of the mesh 270. That is to say that the width of the mesh 270 decreases along a portion of the length of the primary filter 204. Since the mesh 270 is U-shaped in cross-section, the width of the mesh 270 should be understood to mean the arc length of the mesh 270 and not, for example, the width of the airflow channel 220 which is constant along the length of the primary filter 204. Since the mesh 270 tapers along the length of the primary filter 204, the open area of the primary filter 204 decreases along its length. The primary filter 204 comprises a notch 272 at one end, which accommodates the dirt detection assembly 210.

The primary filter 204, like that of the first core portion 212 has a length extends in a direction parallel to the longitudinal axis 119 of the base nozzle 118. The primary filter 204 is therefore generally U-shaped in cross-section in a plane normal to the longitudinal axis 119. The primary filter 204 extends partly around the longitudinal axis 119 of the base nozzle 118. The primary filter 204 is spaced radially from the longitudinal axis 119 along the length of the primary filter. In this example, the radial distance between the longitudinal axis 119 and the outer, upstream surface of the primary filter 204 is between 0.7 and 1.2 times the radius of the airflow inlet 134. That is to say that, if the airflow inlet 124 has an effective radius of R1 and the radial distance between the longitudinal axis 119 and the primary filter 204 is R2, then the ratio R2/R1 is between 0.7 and 1.2.

As noted, the open area of the primary filter 204 decreases along a portion of the length of the primary filter 204. More particularly, the open area of the primary filter 204 decreases in a direction away from the open end of the airflow channel 220, and towards the closed end of the airflow channel 220. The open area of the primary filter 204 therefore decreases in a direction away from the airflow inlet 134.

The primary filter 204 covers an opening or inlet of the primary outlet passage 226. As described below in more detail, airflow entering the chamber 105 flows along the airflow channel 220 and over the primary filter 204. A first portion of the airflow then passes through the primary filter 204 and flows along the primary outlet passage 226.

An insert 274 is located in the primary outlet passage 226. The insert 274 corresponds in shape and underlies a peripheral edge of part of the mesh 270 of the primary filter 204. In this example, the insert 274 is shaped and underlies the peripheral edge of the mesh 270 located towards the second end 224 of the first core portion 212, i.e., the edge of the mesh 270 furthest from the airflow inlet 134. The insert 274 is located below the peripheral edge and acts to restrict airflow through the peripheral edge, where flow rates through the primary filter 204 may otherwise be comparatively high.

The first and second auxiliary filters 206,208 are illustrated in isolation in Figure 33. Each of the auxiliary filters 206,208 comprises a mesh 276 attached to a surrounding frame 277. Each of the auxiliary filters 206,208 is generally arcuate in cross-section and corresponds in shape to the profile of the convex portion of the first core portion 212. The auxiliary filters 206,208 are attached to the core 202, and more particularly to the convex portion 216 of the first core portion 212. In this example, the first core portion 212 and the frame 277 of each auxiliary filter 206,208 comprise interlock features to attach the auxiliary filters 206,208 to the first core portion 212. The first auxiliary filter 206 covers an opening or inlet of the first auxiliary outlet passage 234, and the second auxiliary filter 208 covers an opening or inlet of the second auxiliary outlet passage 236.

The mesh of the auxiliary filters 206,208 are formed of metal. The holes of the mesh have a hole size of between 0.2 mm and 0.5 mm, and the mesh has an open area of between 20% and 35%. The auxiliary filters 206,208 have a combined total open area that is less than the total open area of the primary filter 204.

In use, airflow entering the chamber 105 flows along the airflow channel 220 and over the primary filter 204. A first portion of the airflow then passes through the primary filter 204. A second portion of the airflow, on reaching the closed end of the airflow channel 220, leaves the airflow channel 220 and returns along the chamber 105 of the bin assembly 100. A second portion of the airflow then passes through the auxiliary filters 206,208 and flows along the auxiliary outlet passages 234,236. The first portion is between 65% and 85% of the airflow, and thus the second portion is between 15% and 35% of the airflow. In this particular example, the first portion is around 75% of the airflow.

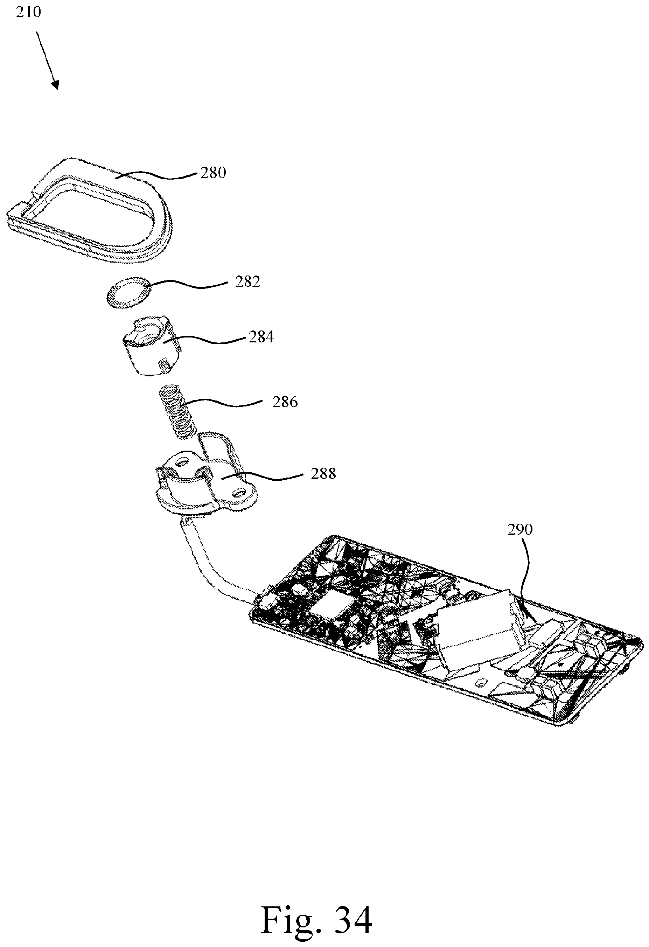

The dirt detection assembly 210 is illustrated in exploded view in isolation in Figure 34, and comprises an impact area 280 which forms part of the core 202, a piezoelectric acoustic sensor 282, a pressure plate 284, a spring 286, a cap 288, and a dirt detection assembly circuit board 290.

The impact area 280 is formed as part of the surface of the first core portion 212. The impact plate area 280 is shaped and dimensioned to fit within the notch 272 of the primary filter 204, whilst also extending out of the notch 272 towards the airflow inlet 134. Thus the primary filter 204 extends partly along the sides of the impact area 280. The piezoelectric acoustic sensor 282, the pressure plate 284, the spring 286, and the cap 288, underlie the impact area 280, and are located within the looming passage 232 of the first core portion 212, along with the dirt detection assembly circuit board 290. Components of the dirt detection assembly 210 can enable dirt impacting on the impact area 280 to be detected, and in some examples the vacuum cleaner 1 can be automatically controlled in response to the dirt that is detected. In an alternative embodiment, a separate impact plate may form the impact area. The impact plate may be mounted to an upper surface of the first core portion by a vibration isolating component.

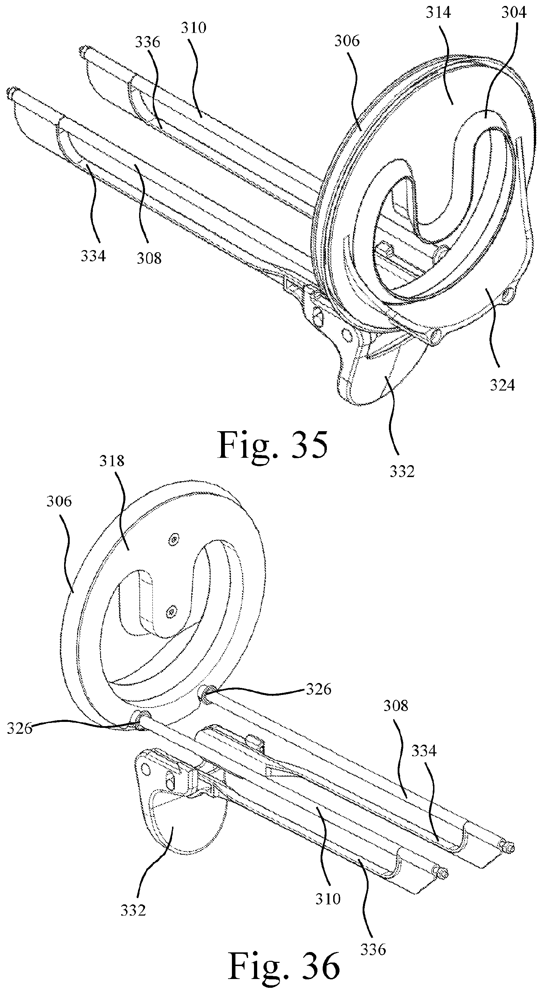

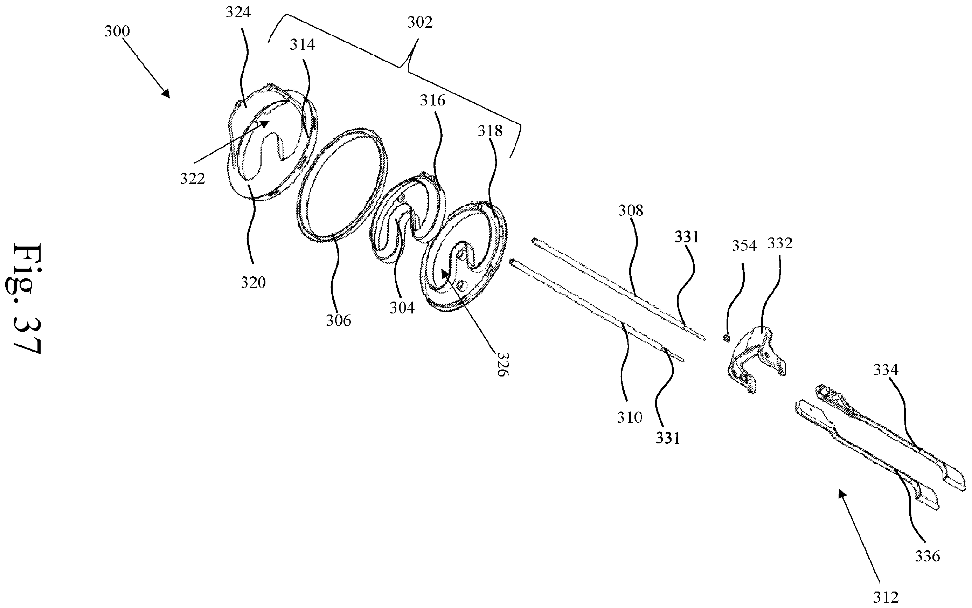

The compaction assembly 300 is illustrated in isolation in Figures 35 to 37. The compaction assembly 300 may be considered to be a compaction mechanism. The compaction assembly 300 comprises a compaction plate sub-assembly 302, a core wiping member 304 (which may be considered to be a filter wiping member), a bin wiping member 306, first 308 and second 310 compaction rods, and a compaction handle assembly 312. The compaction assembly 300 or various components thereof may be considered to form a wiping mechanism, which in this case is configured to wipe an inner surface of the bin body 110, the primary mesh 204 and the first 206 and second 208 auxiliary meshes in response to a single actuation of the wiping mechanism. It is to be appreciated, though, that in other examples there may be a separate compaction assembly 300 and wiping mechanism.

The compaction plate sub-assembly 302 comprises a front plate 314, a middle plate 316, and a rear plate 318. At least one of the plates of the compaction plate sub-assembly 302 may be considered to be a plate of the wiping mechanism and/or a compaction plate of the compaction assembly 300 and each of these plates is slidably mounted substantially perpendicular to a longitudinal axis of the chamber 105 (which in this case is coaxial with the central longitudinal axis 119 of the base nozzle 118). The front plate 314 comprises a compaction body 320, a front plate through-hole 322, and a front flange 324. The compaction body 320 is generally circular in form, and defines a generally flat compaction surface. The compaction body 320 has a diameter that is slightly less than an internal diameter of the bin body 110. The front plate through-hole 322 is generally U-shaped in form, and is shaped and dimensioned to slidably receive the first core portion 212 of the primary separation system 200. The front plate through-hole 322 is formed in the compaction plate 320. The front flange 324 is generally U-shaped in form, and curves about a base of the generally U-shaped front plate through-hole 322. The front flange 324 extends only partway along the arms of the generally U-shaped front plate through-hole 322. The front flange 324 extends from the compaction body 320 such that the front flange 324 is located on an opposite side of the compaction plate sub-assembly 302 to the first 308 and second 310 compaction rods. The front flange 324 is integrally formed with the compaction body 320, and extends from the compaction body. In alternative embodiment, the front flange 324 may be omitted.

The middle plate 316 has substantially the same form as the compaction body 320, and is located on an opposite side of the compaction body 320 to the front flange 324.

The rear plate 318 has substantially the same form as the middle plate 316, and further includes rod receiving apertures 326. The rear plate 318 is located on an opposite side of the middle plate 316 to the front plate 314, and the rod receiving apertures 326 face in a direction away from the front plate 314. Each rod receiving aperture 326 is shaped and dimensioned to receive a corresponding one of the first 308 and second 310 compaction rods.

Each of the rear plate 318, middle plate 316 and front plate 314 includes rod receiving apertures, which are shaped and dimensioned to receive a corresponding one of the first 308 and second 310 compaction rods.

The core wiping member 304 is generally U-shaped in form, and is shaped and dimensioned to correspond to a periphery of the front plate through-hole 322, and to correspond to a periphery of the first core portion 212 of the primary separation system 200. The core wiping member 304 is formed of a resiliently deformable material, such as rubber, and is mounted to the middle plate 316 about the periphery of the middle plate 316 through-hole such that a periphery of the core wiping member 304 is angled toward the front plate through-hole. In other words, the core wiping member 304 extends at an oblique angle from the periphery towards the airflow inlet 134, towards the central longitudinal axis of the chamber 105. In this example, the core wiping member 304 is mounted along the entire periphery of the front plate through-hole 322 but in other cases, the core wiping member 304 may instead be mounted along part but not all of this periphery. In an alternative embodiment, the core wiping member is mounted to the front plate 314 about the periphery of the front plate through-hole 322 such that a periphery of the core wiping member 304 is angled toward to the front plate through-hole 322.

The bin wiping member 306 is generally annular in form, and is shaped and dimensioned to correspond to an outer periphery of the front plate 314. The bin wiping member 306 is formed of a resiliently deformable material, such as rubber, and is mounted to the front plate 314 about the periphery of the front plate 314 such that an outer rim of the bin wiping member 306 is angled away from the front plate 314. In other words, the bin wiping member 306 extends at an oblique angle from the outer periphery towards the airflow inlet 134, away from the central longitudinal axis of the chamber 105. In this example, the bin wiping member 306 is mounted along the entire outer periphery of the front plate 314 but in other cases, the bin wiping member 306 may instead be mounted along part but not all of this outer periphery.

The core wiping member 304 and the bin wiping member 306 have substantially similar widths, such that the core wiping member 304 and the bin wiping member 306 extend forwardly of the front plate 314 by a similar degree.

The first 308 and second 310 compaction rods are each generally cylindrical and elongate in form between a first end and a second end. The first 308 and second 310 compaction rods can be received within the rod receiving apertures 326 of the rear plate 318 and through corresponding apertures in the middle plate 316 and front plate 314. In some examples, the rod receiving apertures 326 can comprise an overmould to ensure that the first 308 and second 310 compaction rods are received within the rod receiving apertures 326 with an interference or friction fit. Abutment features 331 are located in the region of the second end of each of the first 308 and second 310 compaction rods. The abutment features 331 extend annularly about the respective first 308 and second 310 compaction rods, and constitute regions of increased diameter relative to the remainder of the first 308 and second 310 compaction rods.

The compaction handle assembly 312 comprises a compaction handle 332, first 334 and second 336 compaction handle connectors, and a compaction magnet 354 . The magnet 354 forms part of the compaction sensor assembly. The compaction handle 332 is generally semi-circular in form and is pivotally mounted to the first 334 and second 336 compaction handle connectors. The first 334 and second 336 compaction handle connectors are aligned with and slidably mounted on compaction rails 364 of a runner assembly 350 so that the first compaction handle 334 slides along a first compaction rail and the second compaction handle slides along a second compaction rail. Details of the runner assembly 350 are described in further detail below.

The compaction sensor assembly comprises a magnet 354 and a hall sensor. The hall sensor is mounted within the bin assembly 100. In alternative embodiments, the hall sensor may be mounted on the underside of the bin assembly 100. The magnet 354 is coupled to the compaction handle 332, such that pivoting of the compaction handle 334 relative to the first 334 and second 336 compaction handle connectors moves the magnet 354 relative to the hall sensor. The hall sensor is in communication with a controller 526 of the suction motor 500, as will be discussed in more detail hereinafter.

The compaction handle assembly 312 has an axial length that is less than an axial length of the first 308 and second 310 compaction rods. With the compaction handle assembly 312 located in position relative to the first 308 and second 310 compaction rods, and the first 308 and second 310 compaction rods received within the rod receiving apertures 326 of the rear plate 318 of the compaction plate sub-assembly 302, the compaction handle 332 is spaced rearwardly from the compaction plate sub-assembly 302.

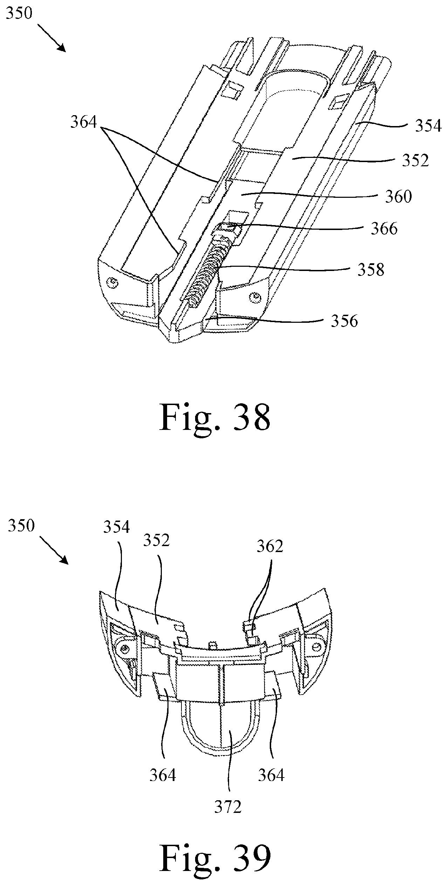

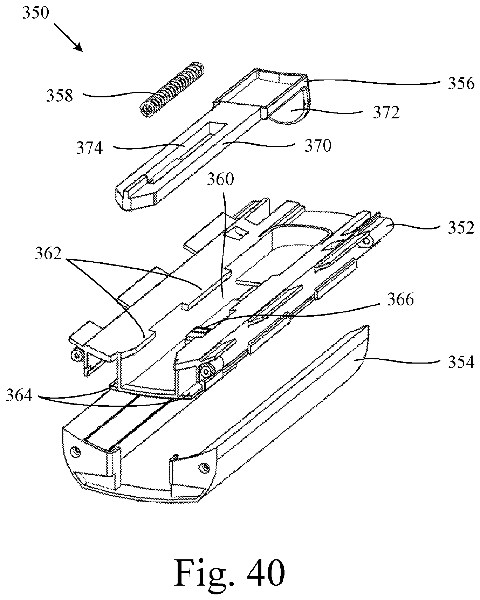

The runner assembly 350 is attached to the housing and handle assembly 600 and is shown in isolation in Figures 38 to 40. The runner assembly 350 comprises a runner body 352, a runner body cover 354, bin push rod 356, and a compression spring 358.

The runner body 352 comprises a push-rod channel 360, a set of runners 362, and a pair of compaction rails 364. The bin push rod 356 is received within the push-rod channel 360. The set of runners 362 comprises two pairs of runners, each pair located on opposite sides of the push-rod channel 360. The runners 362 are received within the bin rails 176 of the bin assembly 100. More particularly, the runners 362 slide along the bin rails 176 during attachment and detachment of the bin assembly 100 from the main unit 10. The compaction rails 364 receive the compaction handle assembly 312, which is slidably mounted within the compaction rails 364. More particularly, the compaction handle connectors 334,336 are received within and slide along a respective compaction rail 364.

The bin push rod 356 comprises a body portion 370 and a handle portion 372. The body portion 370 is elongate in form and is attached at one end to the handle portion 372. In this example, the body portion 370 and the handle portion 372 are integrally formed. The opposite end of the body portion 370 is wedge-shaped and engages with the bin closure clasp 112 when opening the bin assembly 100. The handle portion 372 projects downwardly from an end of the body portion 370 and is generally semi-circular in shape. The bin push rod 356 is slidably mounted within the push-rod channel 360 of the runner body 352. The runner body 352 comprises a projection 366 that projects through an elongate slot 374 in the body portion 370. The bin push rod 356 is then free to move relative to the runner body 152 in the direction of the elongate slot 374. The bin push rod 356 is moveable between a retracted position and an extended position. The compression spring 358 is attached to both the bin push rod 356 and the runner body 352 and acts to bias the bin push rod 356 to the retracted position. The bin push rod 356 is moved to the extended position by gripping the handle portion 372 and pushing the bin push rod 356 in the direction of the bin base 102. In response, the wedge-shaped end of the bin push rod 356 engages the bin closure clasp 112 to move the bin closure clasp to the expanded configuration and thus release the bin base 102 from the closed position. Further movement of the bin push rod 356 then causes the end of the bin push rod 356 to push the bin base 102 in a direction away from the bin body 110, and thus move the bin base 102 from the closed position to the open position. The bin push rod 356 may therefore be regarded as bin opening mechanism which, when actuated, causes the bin closure clasp 112 to release the bin base 102 and then push the bin base 102 from the closed position.

The runner body cover 354 is attached to and covers the underside of the runner body 352.

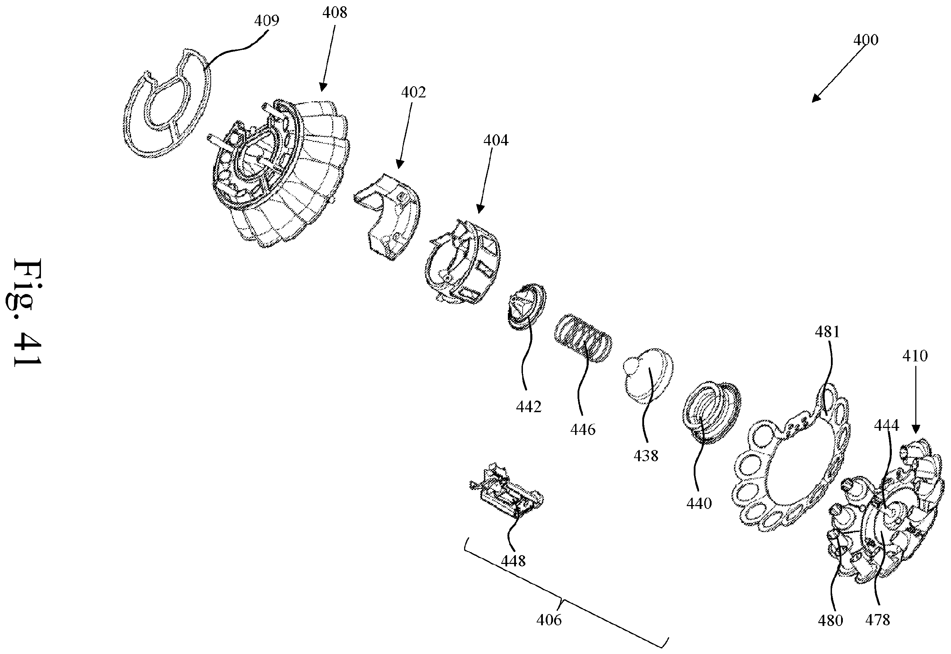

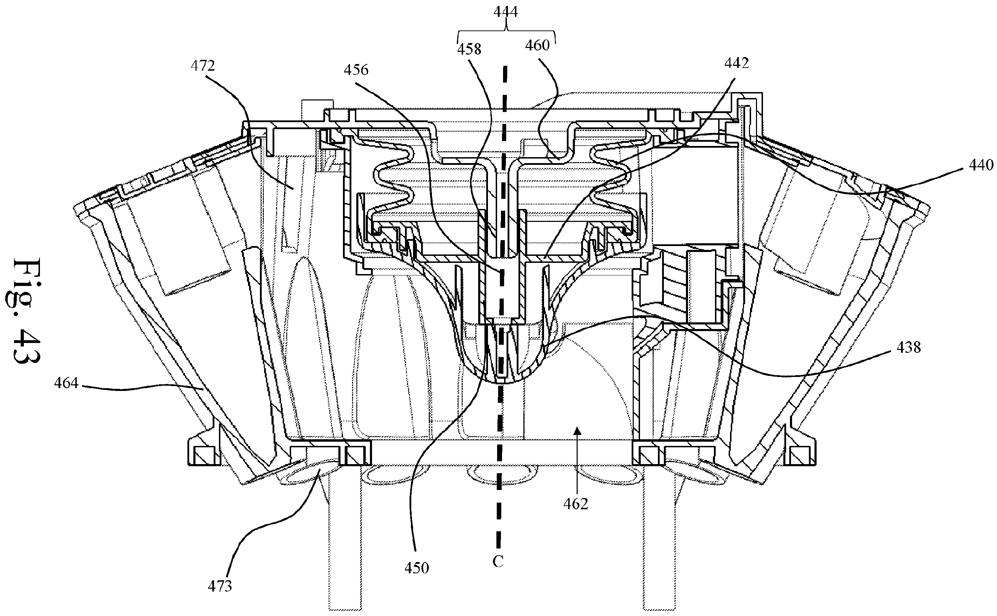

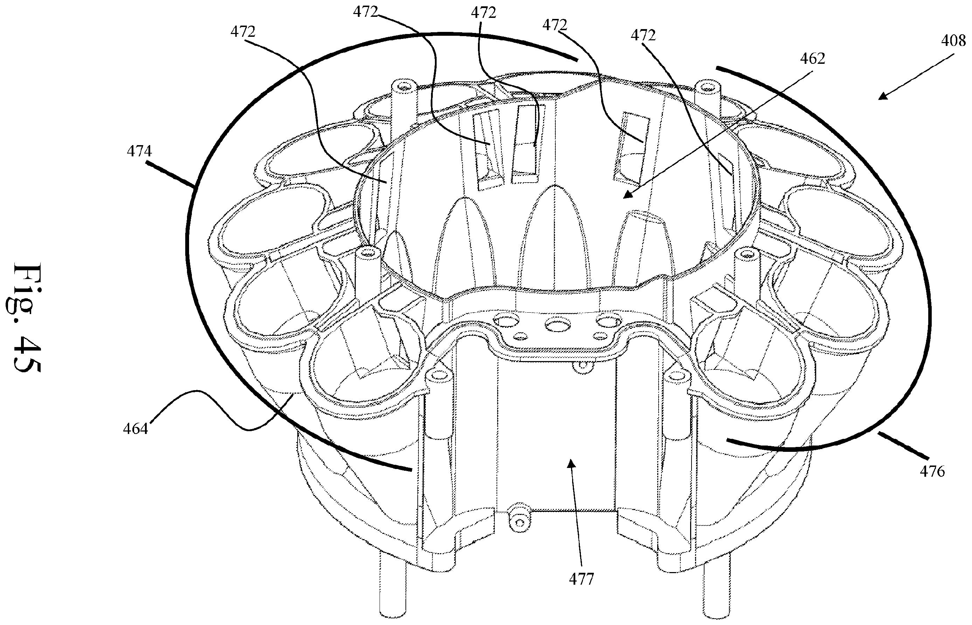

The secondary separation system 400 is illustrated in Figures 41 to 46, and comprises an aerodynamic insert 402, a flow separator 404, a valve assembly 406, a cone assembly 408, a vortex plate 410 and a dirt collector seal 409. The secondary separation system 400 is a cyclonic separation system, as will be discussed in more detail hereinafter.

The aerodynamic insert 402 is generally semi-circular in form, having a lower end 412 and a upper end 414. The upper 414 comprises a duct lip 416, which is shaped and dimensioned to correspond with an edge portion 417 of the flow separator 404.

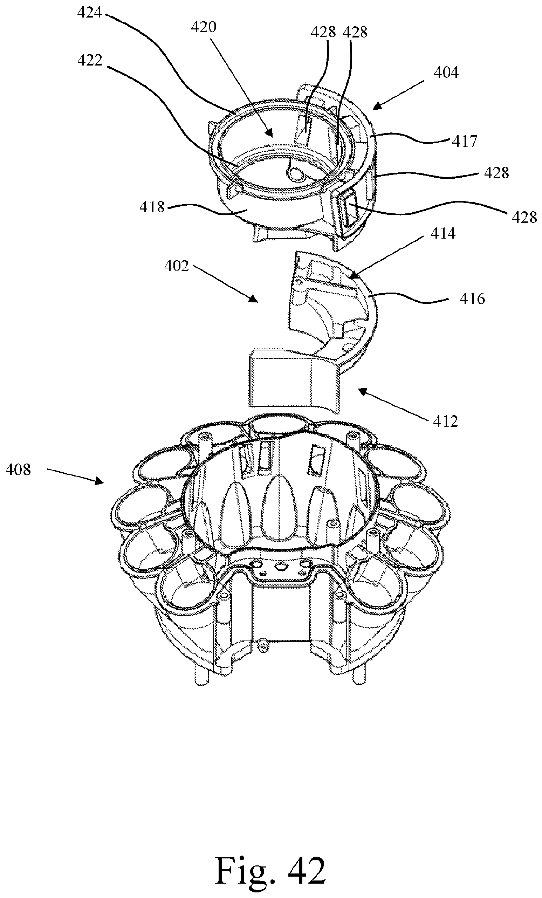

The flow separator 404 is illustrated in greater detail in Figure 42, and comprises an separator body 418, a central bore 420, a valve seat 422, an expansion member seat 424, and outlet apertures 428. The separator body 418 has a first end and a second end. The central bore 420 extends between the first end and the second end.

The valve seat 422 is annular in form, and is located on an internal surface of a wall that defines the central bore 420. The valve seat 422 is defined by a region of reduced diameter of the internal surface of a wall of the central bore 420, and is shaped and dimensioned to selectively engage with a valve member 438 of the valve assembly 406, as will be described in more detail hereinafter.

The expansion member seat 424 is also annular in form, and is defined by an upper surface of the internal surface of a wall of the central bore 420. The expansion member seat 424 is shaped and dimensioned to receive an expansion member 440 of the valve assembly 406, as will be described in more detail hereinafter.

The outlet apertures 428 extend through the separator body and is in fluid communication with the central bore 420, and lies between the valve seat 422 and the expansion member seat 424. The outlet apertures 428 are shaped, dimensioned and positioned to correspond the cyclone inlets 472 of a second subset 476 of cyclone bodies 464 of the cone assembly 408. Collectively, the central bore 420 and the outlet apertures 428 define inner flow paths through the flow separator 404.

The valve assembly 406 comprises a valve member 438, an expansion member 440, a sealing unit 442, a spring 446, and a valve actuator assembly 448.

The valve member 438 is generally conical in form and comprises a rod receiving channel 450 that extends rearwardly from an apex of the valve member 438. The rod receiving channel 450 is shaped and dimensioned to receive an end of a connecting rod formed as part of the vortex plate 410. The valve member 438 as a whole is shaped and dimensioned to selectively engage with the valve seat 422 of the flow separator 404. The valve member 438 is formed of a resiliently deformable material, such as rubber.

The expansion member 440 is hollow and formed of a resiliently deformable material such as rubber. The expansion member 440 is shaped to allow linear extension and contraction by means of buckling, rolling, concertina, or other similar effects. The expansion member 440 has a first end connected to the valve member 438 and the sealing unit 442, and a second end that is connected to the expansion member seat 424.

The sealing unit 442 comprise a central aperture 456 through which the connecting rod 444 extends. The sealing unit 442 is located internally within the expansion member 440 at the first end of the expansion member 440.

The connecting rod 444 is formed as part of the vortex plate 410, has a generally T-shaped cross-sectional shape, and comprises a body portion 458 and a head portion 460. The body portion 458 is elongate in form and has a diameter generally corresponding to the diameters of the rod receiving channel 450 of the valve member 438 and the central aperture 456 of the sealing unit 442. In some examples, the body portion 548 can comprise one or more engagement features, such as splines, for engaging with corresponding splines on any of the valve member 438 and the sealing unit 442. The head portion 460 has a diameter greater than that of the body portion 458.

The spring 446 is a coil spring and is connected at one end to the head portion 460 of the connecting rod 444, and at an opposite end to the vortex plate 410. The spring 446 is biased to an extended configuration in the absence of an applied force.

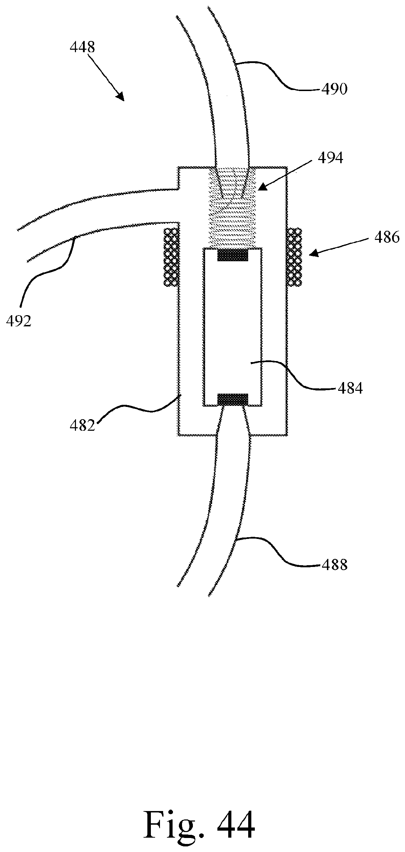

The valve actuator assembly 448 as shown in Figure 44 comprises a housing 482, a blocking member 484 movable within the housing 482, a coil 486 for selectively moving the blocking member 484, and first 488, second 490, and third 492 airflow paths in fluid communication with the housing 482.

The blocking member 484 takes the form of a solenoid core. The blocking member 484 is resiliently biased by a spring 494 to a position where the blocking member 484 blocks airflow through the first airflow path 488, and allows airflow through the second 490 and third 492 airflow paths. The blocking member 484 may comprise appropriate sealing surfaces. The coil 486 is configured to be energised in response to operation of a user input to move the blocking member 484. Alternatively, the coil 486 is configured to be energised automatically and in response to a sensor of the device. For example, the coil 486 is configured to be energised according to the output of a piezoelectric sensor 282, which will be described in more detail hereinafter. The first airflow path 488 is in fluid communication with a location upstream of an electric motor 502 of the suction motor 500. The second airflow path 490 is in fluid communication with a location downstream of the electric motor 502. It will be appreciated that the terms downstream and upstream are utilised in relation to a direction of fluid flow through the vacuum cleaner in use. The third airflow path 492 is in fluid communication with the expansion member 440. Operation of the valve actuator assembly 448 will be described in more detail hereinafter.

The valve member 438, expansion member 440, sealing unit 442, and spring 446 of the valve assembly 406 are located principally within the central bore 420 of the flow separator 404, with the valve member 438 movable between an extended position in which airflow through the inner flow path and the outlet apertures 428 is inhibited, and a retracted position in which airflow through the inner flow path and the outlet apertures 428 is enabled by the valve member 438, as will be described in more detail hereinafter.

The valve actuator assembly 448 is positioned with the housing 482, the blocking member 484, and the coil 486 within a channel 477 of the cone assembly 408, and the relevant and first 488, second 490, and third 492 airflow paths in fluid communication with the respective locations described above. Other positions of the valve actuator assembly 448 are also envisaged.

The cone assembly 408 comprises a single moulded body that defines a central channel 462, and eleven cyclone bodies 464 arranged about the central channel 462. The central channel 462 is defined by a frustoconical wall. The central channel 462 has a channel inlet defined by the frustoconical wall, and a base of the frustoconical wall defines duct receiving channel for receiving the duct lip 416 of the aerodynamic insert 402. The central channel 462 also receives the flow separator 404.

The cyclone bodies 464 are each hollow and generally conical in form, and are arranged about the central channel 462 such that the cyclone bodies are inclined towards a central axis C of the cone assembly 408. Each of the cyclone bodies 464 may be said to have a central cyclone body axis. The cyclone bodies 464 are then inclined such that cyclone body axes converge towards the central axis C of the cone assembly 408. Each of the cyclone bodies 464 has substantially the same form, and has a cyclone inlet 472 that is in fluid communication with the central channel 462 when the cone assembly 408 is viewed in isolation. Each of the cyclone bodies 464 has a cyclone dirt outlet 473 that faces towards the central axis C of the cone assembly 408. The cyclone dirt outlets 473 are arranged generally in a U-shape.

The cyclone bodies 464 are divided into a first subset 474 of six cyclone bodies 464, and a second subset 476 of five cyclone bodies 464. The first 474 and second 476 subsets of cyclone bodies 464 follow one another about a circumference of the cone assembly 408, with the first subset 474 of cyclone bodies 464 occurring one after the other, and the second subset 476 of cyclone bodies 464 then occurring one after the other. A channel 477 is located between ends of first 474 and second 476 subsets of cyclone bodies 464. The first 474 and second 476 subsets of cyclone bodies 464 are arranged with their cyclone inlets 472 at a common distance along the central axis C of the cone assembly 408.

The skilled person would understand that the number of total cyclone bodies 464 as well as the number of cyclone bodies 464 that make up the first subset 474 and the second subset 476 can vary depending on the requirements of the vacuum cleaner 1. Further, each of the cyclone bodies 464 can have different dimensions and sizes depending on the requirements of vacuum cleaner 1.

The first subset 474 of cyclone bodies 464 are arranged in parallel fluid communication with one another, and the second subset 476 of cyclone bodies 464 are arranged in parallel fluid communication with one another. As will be discussed in more detail hereinafter, in different operating modes of the vacuum cleaner 1, either the first subset 474 of cyclone bodies 464 or both the first 474 and second subsets 476 of cyclone bodies 464 can be utilised. In such a latter configuration, the first 474 and second 476 subsets of cyclone bodies 464 are arranged in parallel fluid communication with one another.

The vortex plate 410 comprises a plate body 478, the connecting rod 444 and eleven vortex finders 480. The plate body 478 is shaped to correspond to a top of the cone assembly 408. The vortex finders 480 depend from an underside of the plate body 478, and comprise hollow tubular members with central bores that extend through the plate body 478. The vortex plate 478 sits on top of the cone assembly 408 such that each vortex finder 480 extends into a corresponding one of the cyclone bodies 464 of the cone assembly 408. The vortex finders 480 define air outlets of the secondary separation system 400. In some examples, a vortex plate seal 481 is located between the vortex plate 410 and the cone assembly 408 to prevent airflow leakage between the vortex plate 410 and the cone assembly 408.

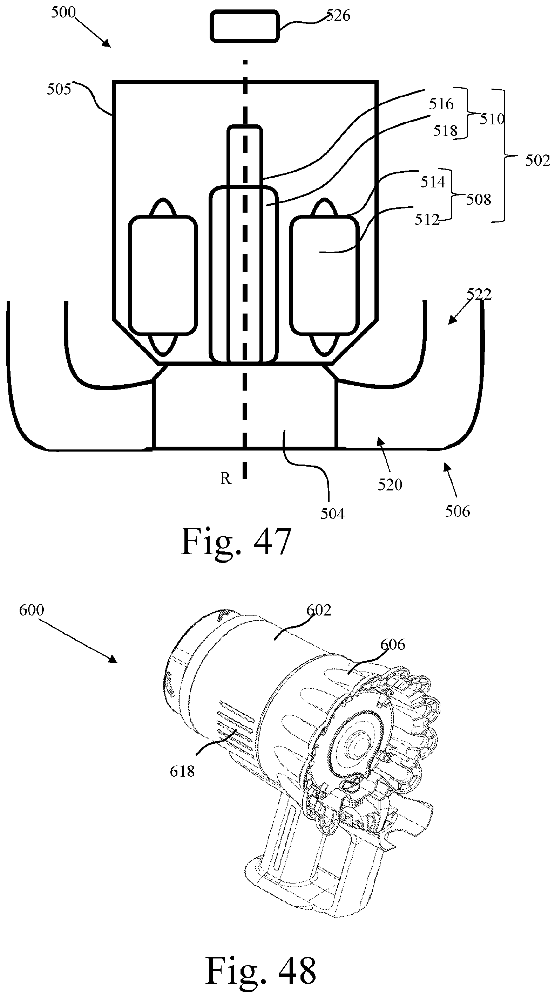

The suction motor 500 is illustrated schematically in isolation in Figure 47, and comprises an electric motor 502, an impeller 504, a motor can 505, and a diffuser 506. The electric motor 502 comprises a stator assembly 508, and a rotor assembly 510. One example of a motor may be the Dyson V10 digital motor, produced and sold by Dyson Technology Limited at the filing date of the present application. Another example motor is that described in UK patent publication GB2608832A. In either case, such a stator assembly may comprise a single phase stator assembly, although three-phase stator assemblies are also envisaged.

The stator assembly 508 comprises a stator core 512, and a winding 514 wound about the stator core 512. It will be appreciated that a number of different stator assembly arrangements are envisaged. The rotor assembly 510 comprises a shaft 516, and a permanent magnet 518 mounted to the shaft 516. The shaft 516 defines a rotational axis R of the electric motor 502.

The impeller 504 is mounted to the shaft 516 downstream of the permanent magnet 518, such that the electric motor 502 is an inlet-cooled motor. The impeller 504 is a mixed-flow impeller.

The motor can 505 defines a casing for the electric motor 502, and houses the stator assembly 508 and the rotor assembly 510. The motor can 505 at least partly defines both an inlet passage for the electric motor 502 and an outlet passage for the electric motor 502, and in some examples at least partly acts as a shroud for the impeller 504.

The diffuser 506 is located downstream of the impeller 504 and comprises a radial portion 520 and an axial portion 522. The radial portion 520 is in fluid communication with an outlet of the impeller 504 and extends in a direction substantially orthogonal to the shaft 516, and hence substantially orthogonal to the rotational axis R of the electric motor 502. The axial portion 522 is downstream of, and in fluid communication with, the radial portion 520. The axial portion 522 extends in a direction substantially parallel to the shaft 516, and hence substantially orthogonal to the rotational axis R of the electric motor 502. The axial portion 522 extends in a direction away from the impeller 504, toward an opposite end of the shaft 516 to the end of the shaft 516 to which the impeller 504 is mounted. A transition between the radial portion 520 and the axial portion 522 is smooth and curved in form. The radial portion 520 and the axial portion 522 are integrally formed, and collectively define an airflow outlet channel downstream of the impeller 504.

In this example, the diffuser 506 does not comprise vanes that extend into the radial portion 520, but has vanes that extend into the axial portion 522, although other examples where different arrangements of vanes are present are also envisaged. A controller 526 of the suction motor 500 is mounted to a control printed circuit board (PCB) 628 of the vacuum cleaner 1.

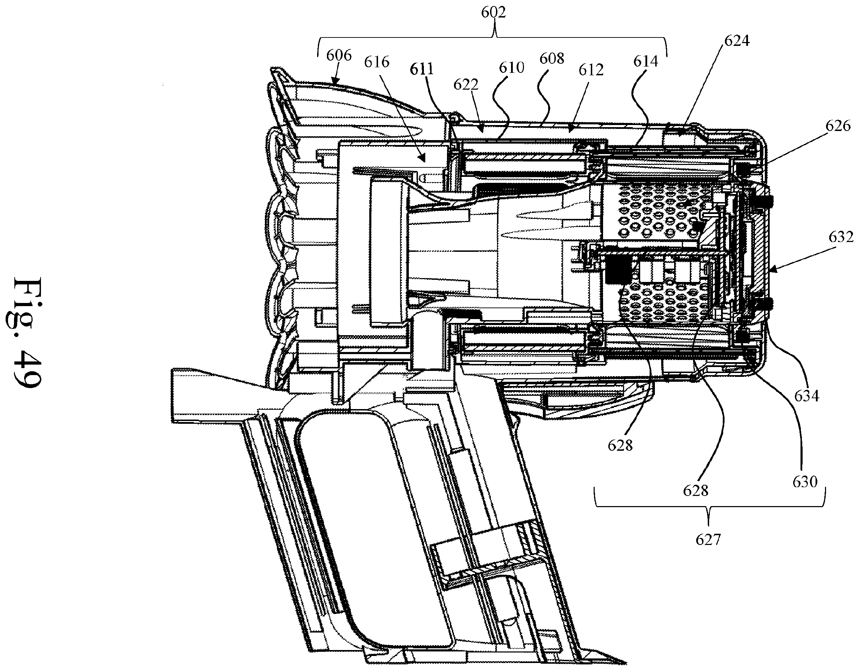

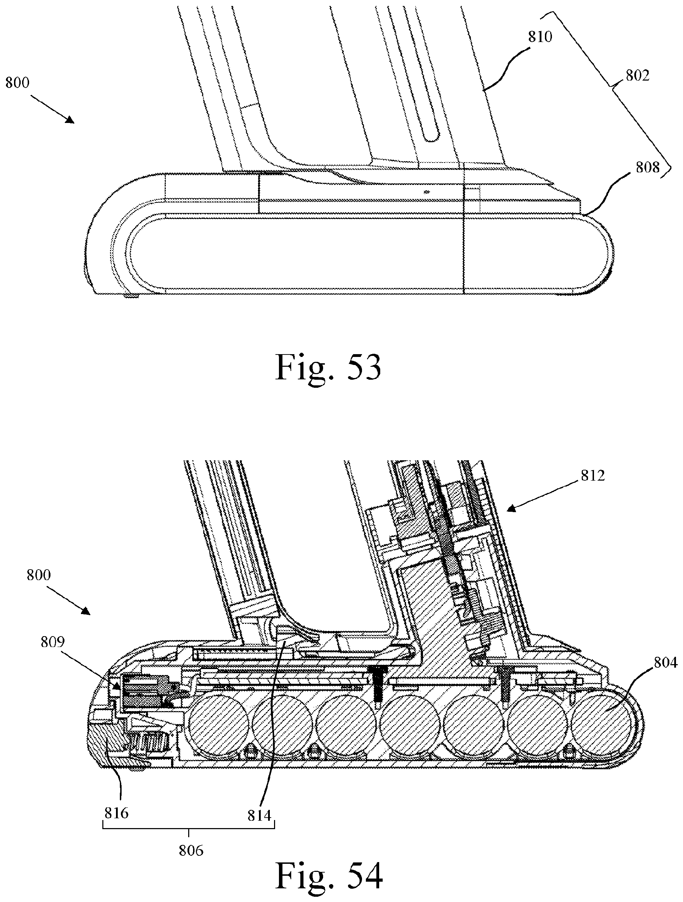

The housing and handle assembly is illustrated in figures 48 to 54. The housing and handle assembly 600 comprises a main housing body 602 and a handle portion 700.

The main housing body 602 comprises eleven cyclone parts 606, an outer wall 608, an inner wall 610, a motor inlet passageway or first passageway 612, an inner housing portion 614, a motor outlet passageway or a second passageway 616, and first 618 and second 620 housing outlets.

The cyclone parts 606 are each tubular, curved, and hollow in form, and are in fluid communication with the motor inlet passageway 610. The cyclone parts 606 thereby at least partly define outlets of the secondary separation system 400. Each cyclone outlet 606 has substantially the same shape and dimensions.

The outer wall 608 is curved and generally cylindrical in form. The outer wall 608 defines an outer surface of the main housing body 602.

The inner wall 610 is also curved and generally cylindrical in form, with the curvature generally matching the curvature of the outer wall 608. The inner wall 610 has a shorter axial extend than the outer wall 608, such that the outer wall 608 overhangs the inner wall 610 at a downstream end of the inner wall 610.

The motor inlet passageway 612 is a generally annular channel that comprises an upstream end 622 and a downstream end 624. The upstream end 622 is defined by the outer wall 608 and the inner wall 610, whilst the downstream end 624 is defined by the overhang of the outer wall 608 and a pre-filter sub-assembly 648 of a filter assembly 604, described in detail below. The motor inlet passageway 612 is located at a radially outer side of the main housing body 602.

The inner housing portion 614 is generally cylindrical and hollow in form, with a curved surface of the inner housing portion comprising a plurality of inlet apertures 626. The inner housing portion is positioned at an upstream end of the motor can 505, between the motor can 505 and the motor inlet passageway 612. Mounted to the inner housing portion 614 are a control printed circuit board (PCB) 628, a user interface PCB 630, a user interface 632, and an end cap 634. The control printed circuit board (PCB) 628, a user interface PCB 630 form the PCB assembly 627.

The control PCB 628 is mounted internally of the inner housing portion 614, and comprises first and second orthogonal portions, such that the control PCB 628 is generally T-shaped in form. The control PCB 628 is located in a region of the inlet apertures 626. Various electronic components, such as one or more processors for controlling the vacuum cleaner 1, are mounted to the control PCB.

The user interface PCB 630 is mounted internally of the inner housing portion 614 and is generally circular in form. The user interface PCB 630 is located further away from the electric motor 502 of the suction motor 500 than the control PCB 628. The user interface PCB 630 is mounted in a region of the inner housing portion that does not include the inlet apertures 626. The user interface PCB 630 is in electrical communication with the control PCB 628.

The user interface 632 comprises a display screen 636, and first 638 and second 640 buttons. The display screen is configured to present information to a user of the vacuum cleaner 1 in use. The first 638 and second 640 buttons are depressible by a user, and can be utilised to turn on the vacuum cleaner 1, and/or switch between different modes of operation of the vacuum cleaner 1, as will be discussed in more detail hereinafter.

The end cap 634 is generally circular in form, and is mounted to an end of the inner housing portion 614 that is distal the electric motor 502. The end cap 634 has a through-hole through which the first 638 and second 640 buttons extend, and through which electrical connections of the display screen 636 can extend. The display screen 636 is mounted to the end cap 634 such that the display screen 636 overlies the through hole.

The motor outlet passageway 616 is generally annular in form, and is located downstream of the axial portion 522 of the diffuser 506 of the suction motor 500. The motor outlet passageway 616 is defined by a radial extension 611 of the inner wall 610, the motor can 505, and a post-filter sub-assembly 650 of the filter assembly 604. The motor outlet passageway 616 is located radially inwardly of the motor inlet passageway 612.

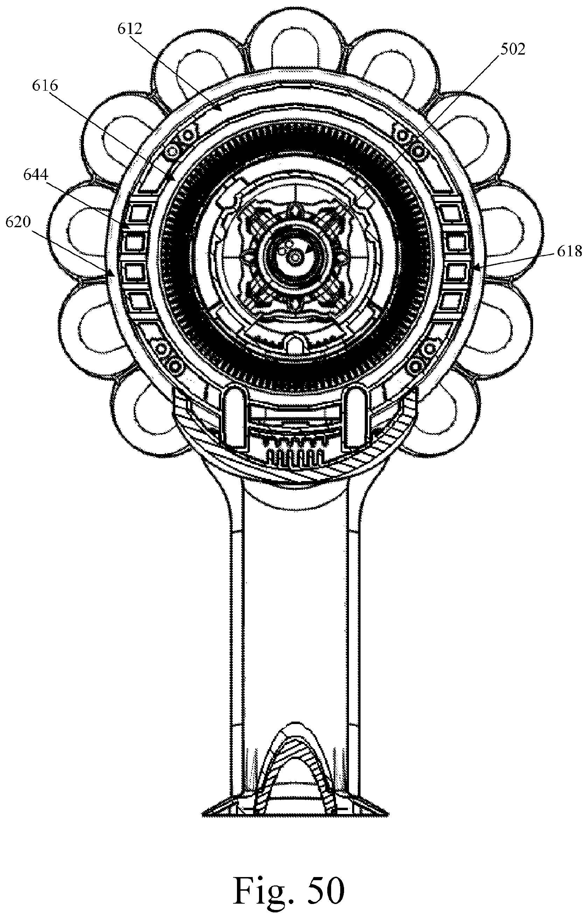

The first 618 and second 620 housing outlets are located on opposing sides of the main housing body 602, and are each defined by a series of discrete, spaced apart, channels 644. The channels are defined by tubes that extend from an annular passageway 645 downstream of the post-filter 650 to the first 618 and second 620 housing outlets. It will be appreciated that the tubes may not necessarily have a circular cross-sectional shape, or indeed a uniform cross-section along their length. The channels 644 are in fluid communication with the motor outlet passageway 616, and extend through the motor inlet passageway 612 before venting to an ambient external environment of the vacuum cleaner 1. In such a manner the motor inlet passageway 612 can wrap around the channels 644. In particular, the tubes that define the channels 644 can extend through the motor inlet passageway 612 such that the motor inlet passageway 612 surrounds the tubes. This can be seen in the cross-sectional view of Figure 50.

The first 618 and second 620 housing outlets are located generally mid-way along an axial length of the main housing body 602.

The handle portion 700 comprises a main handle body 702, a guard body 704, a battery connection body 706.

The main handle body 702 is integrally formed with, and projects outwardly from, the outer wall 608 of the main housing body 602 of the housing and handle assembly 600. The main handle body 702 extends from a first end 710 proximal to the outer wall 608, to a second end 712 distal to the outer wall 608. The first end 710 of the main handle body 702 extends from the outer wall 608 at a region axially between the cyclone outlets 608 and the first 614 and second 616 housing outlets of the main housing body 602.

The main handle body 702 is hollow in form, and houses electrical connections, alongside a battery terminal connection 714 for connecting to a battery connector 812 of the battery assembly 800, as will be described in further detail hereinafter. The main handle body 702 is shaped and dimensioned to receive the battery connector within the main handle body 702.

The main handle body 702 is shaped and dimensioned to be grasped by a single hand of a user in use. The main handle body 702 has a generally obround cross-sectional shape when viewed in a plane orthogonal to a longitudinal axis M of the main handle body 702. The maximal width of the cross-sectional shape of the main handle body 702 extends in a direction generally parallel to the shaft 516 of the rotor assembly 510 of the suction motor 500. The main handle body 702 is obliquely angled relative to the outer wall 608 of the main housing body 602.

The guard body 704 has a generally obround cross-sectional shape, with a major axis of the obround cross-sectional shape of the guard body 704 arranged generally orthogonally relative to a major axis of the obround shaped of the main handle body 702. The guard body 704 has a first end 716 proximal to the outer wall 608 of the main housing body 602, and a second end 718 distal to the outer wall 608 of the main housing body 602.

The guard body 704 is spaced from the main handle body 702. The spacing between the main handle body 702 and the guard body 704 is substantially constant along a length of the main handle body 702. The guard body 704 is positioned forwardly of the main handle body 702, with the guard body 704 positioned closer to the primary separation system 200 and the secondary separation system 400 than the main handle body 702.

The battery connection body 706 extends between the main handle body 702 and the guard body 704, and comprises a hook 720 for engaging with a corresponding catch member 814 of the battery pack release mechanism 806.

The battery assembly 800 comprises a battery pack housing 802, seven battery cells 804, and a battery pack release mechanism 806. The batty pack housing 802 comprises a cell housing portion 808, and a terminal housing portion 810. The cell housing portion 808 is shaped and dimensioned to house the battery cells 804. A lower surface of the cell housing portion 808 is substantially planar in form. A front end of the cell housing portion 808 comprises a charge port 809 for receiving an electrical connector to recharge the battery cells 804. The terminal housing portion 810 projects outwardly from the cell housing portion 808, and houses a battery connector 812 for connection to the battery terminal connection 714 of the main handle body 702. The terminal housing portion 810 is shaped to be received within the second end 712 of the main handle body 702.

The battery cells 804 are cylindrical Lithium ion cells.

The battery pack release mechanism 806 comprises a catch member 814, and a push button 816. The catch member 814 is sprung such that movement of the push button 816 by a user moves the catch member 814.

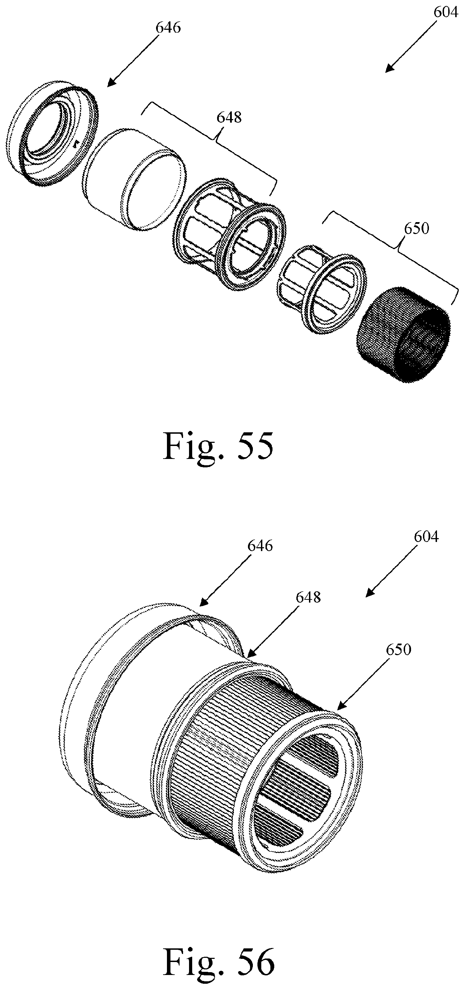

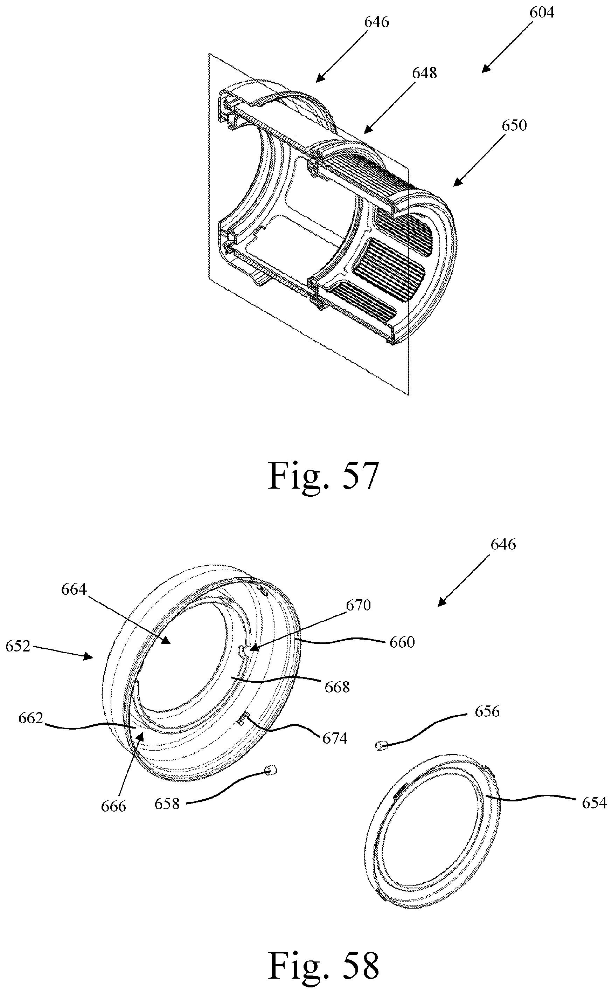

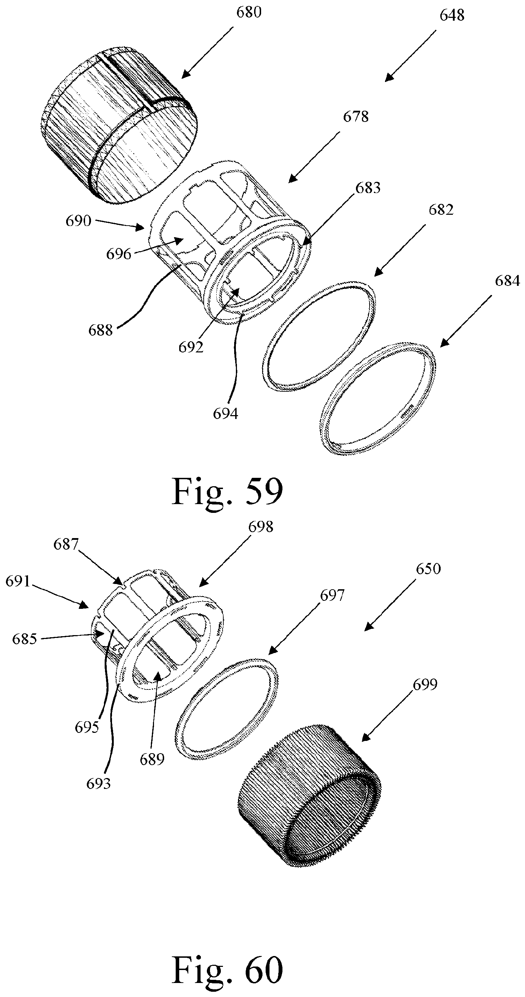

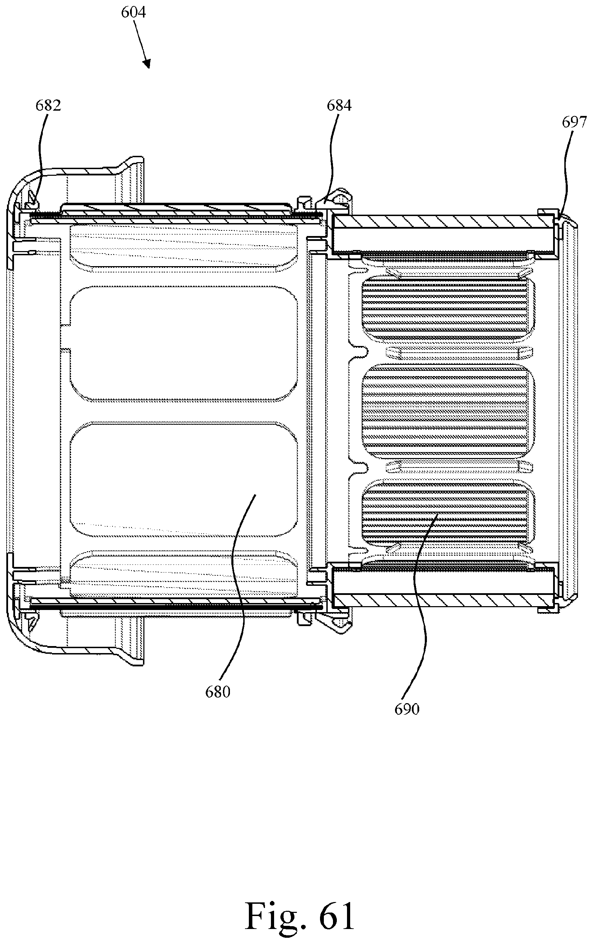

The filter assembly 604 is shown in isolation in Figures 55 to 61. The filter assembly 604 comprises a cap sub-assembly 646, a pre-filter sub-assembly 648, and a post-filter sub-assembly 650.

The cap sub-assembly 646 comprises a cap body 652, a cap seal 654, and first 656 and second 658 magnets. The cap body 652 comprises a side wall 660 and an end wall 662. The side wall 660 is generally annular in form, and has a diameter substantially corresponding to a diameter of the outer wall 608 of the main housing body 602. An end of the side wall 660 distal from the end wall 662 tapers slightly outwardly. The end wall 662 is generally circular in form, and comprises a through-hole 664. The through-hole 664 is shaped and dimensioned to correspond substantially to a shape and dimension of the display screen, such that the display screen is visible through the through-hole 662 when the filter assembly 604 is mounted to the main housing body 602.

Collectively, the side wall 660 and the end wall 662 define a chamber 666 for receiving a portion of the pre-filter sub-assembly 648. A locating wall 668 extends from the end wall 662 into the chamber 666. The locating wall 668 is annular in form, and is dimensioned to correspond substantially to an end of the inner housing portion 614. The locating wall 668 comprises notches 670 for receiving the first 656 and second 658 magnets. The cap seal 654 is annular in form, and sits around the locating wall 668 and engages with the end of the inner housing portion 614 when the filter assembly 604 is mounted to the main housing body 602.

The side wall 660 comprises first and second locating tabs 674 that mate with corresponding features on the end of the inner housing portion 614 to releasably attach the filter assembly 604 to the main housing body 602. In some examples, the corresponding features are located on the end of the outer wall 608 distal from the cyclone outlets 608 which is tapered in form, and relative rotation between the cap sub-assembly 646 and the outer wall 608 may make and/or release the connection between the filter assembly 604 and the main housing body 602.

The pre-filter sub-assembly 648 comprises a pre-filter frame 678, a pre-filter media 680, a first outer seal 682, a second outer seal 684, and an inner seal 686.

The pre-filter frame 678 is generally cylindrical in form, having a frame sidewall 688, a first open end 690, and a second open end 692. Connecting protrusions 694 extend axially away from the second open end 692. The second open end 692 comprises an annular channel 683, with an inner circumference of the annular channel 683 defined by the connecting protrusions 694. The annular channel 683 extends radially inwardly from an outer diameter of the frame sidewall 688. The frame sidewall 688 comprises a plurality of pre-filter inlet apertures 696, each of which is generally rectangular in form. The frame sidewall 688 has that is less than the diameter of the sidewall 660 of the cap body 650 of the cap sub-assembly 646.

The pre-filter media 680 is formed of layers of filter media, including a layer of scrim or web material, a non-woven filter medium such as fleece, followed by a further layer of scrim or web material. An electrostatic filter medium could also be included if desired., The pre-filter media 680 is arranged annularly about an outer surface of the frame sidewall 688, such that the pre-filter media 680 overlies the pre-filter inlet apertures 696. The pre-filter media 680 is non-pleated in form.

The first outer seal 682 is generally annular in form and is shaped and dimensioned to fit around the first open end 690 of the pre-filter frame 678. The first outer seal 682 is configured to seal against an inner surface of the outer wall 608 of the main body housing 602, when the filter assembly 604 is attached to the main housing body 602.

The second outer seal 684 is generally annular in form, and is shaped and dimensioned to fit around an outer surface of the second open end 692 of the pre-filter frame 678. The second outer seal 684 is configured to seal against an inner surface of the inner wall 610 of the main body housing 602, when the filter assembly 604 is attached to the main housing body 602.

The post-filter sub-assembly 650 comprises a post-filter frame 698, a post-filter media 699, and a face seal 697. The post-filter frame 698 comprises a frame sidewall 695, a frame lip 693, a first open end 691, and a second open end 689. Connecting notches 687 are formed in the first open end 691 of the post-filter frame 698, and are shaped and dimensioned to receive the connecting protrusions of the pre-filter frame 678.

The frame sidewall 695 of the post-filter frame 698 comprises a plurality of post-filter outlet apertures 685, each of which is generally rectangular in form. The frame sidewall 695 of the post-filter frame 698 has a diameter that is less than the diameter of the frame sidewall 688 of the pre-filter frame 678.

The frame lip 693 defines a post-filter media receiving channel 681 at the second open end 689 of the post-filter frame 698. The post-filter media receiving channel 681 is shaped and dimensioned to receive an end of the post-filter media 699. An outer diameter of the post-filter media receiving channel 681 corresponds substantially to an outer diameter of the frame sidewall 688 of the pre-filter frame 678.The post-filter media 699 is formed of any suitable filter material, or combination of materials, typically found in post-motor filters. In the present embodiment, the post-motor filter media 699 is formed of a pleated HEPA-standard filter medium. The post-filter media 699 is arranged annularly about an outer surface of the frame sidewall 695 of the post-filter frame 698, such that the post-filter media 699 overlies the post-filter outlet apertures 685. The post-filter media 699 is pleated in form. The post-filter media 699 is received within the frame lip 693 of the post-filter frame 698 and the annular channel 683 of the pre-filter frame 678.

The face seal 697 is generally annular in form. The face seal 697 and is shaped and dimensioned to fit around the second open end 689 of the post-filter frame 698. The face seal 697 is configured to seal against the radial extension 611 of the inner wall 610 of the main body housing 602, when the filter assembly 604 is attached to the main housing body 602.

With the filter assembly 604 assembled, as shown in cross-section in Figure 56, the pre-filter media 680 is located axially between the post-filter media 699 and the cap sub-assembly 464, with the pre-filter media 680 also located radially outwardly relative to the post-filter media 699.

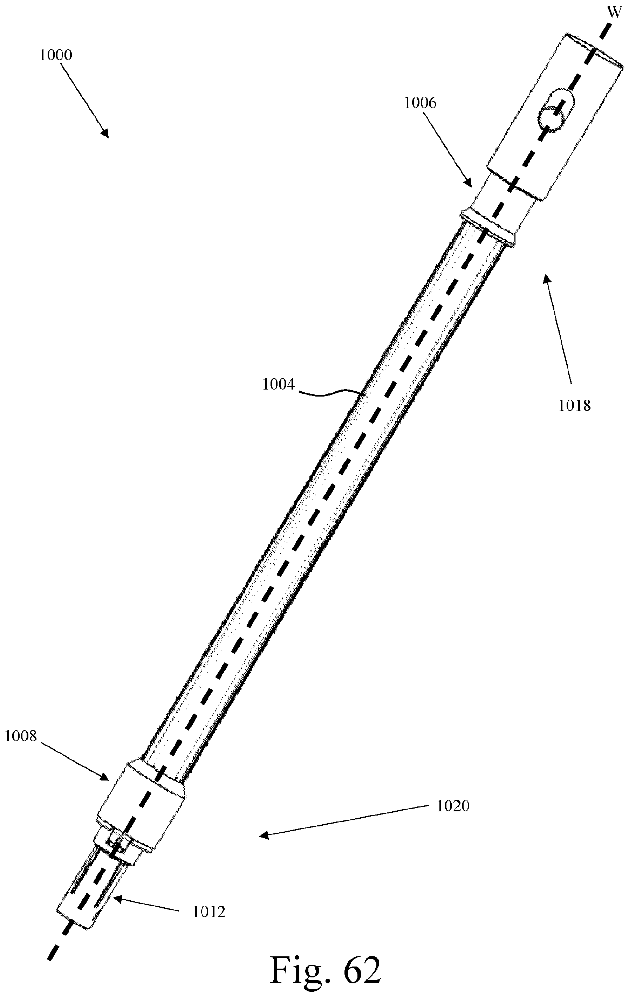

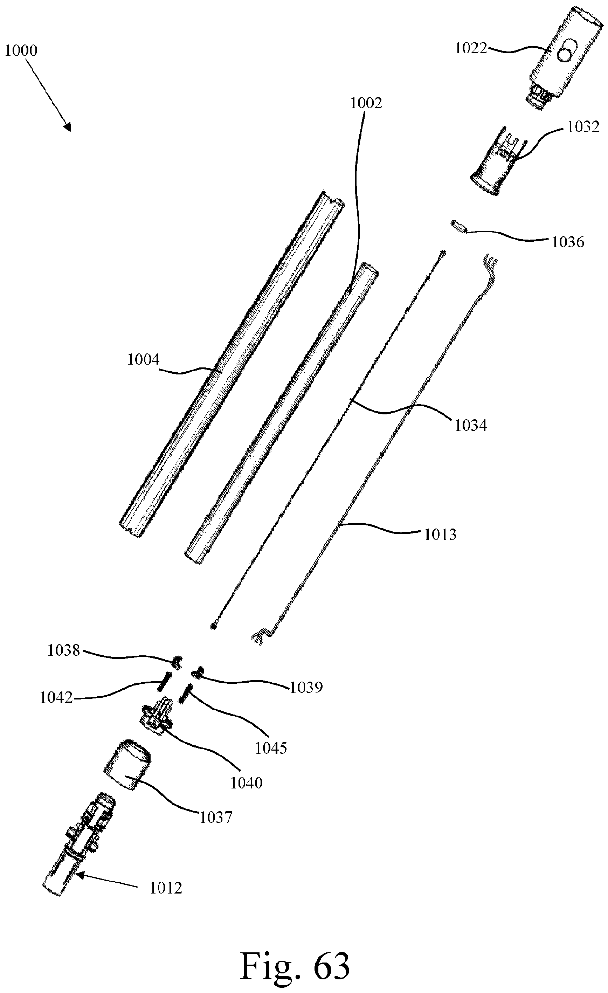

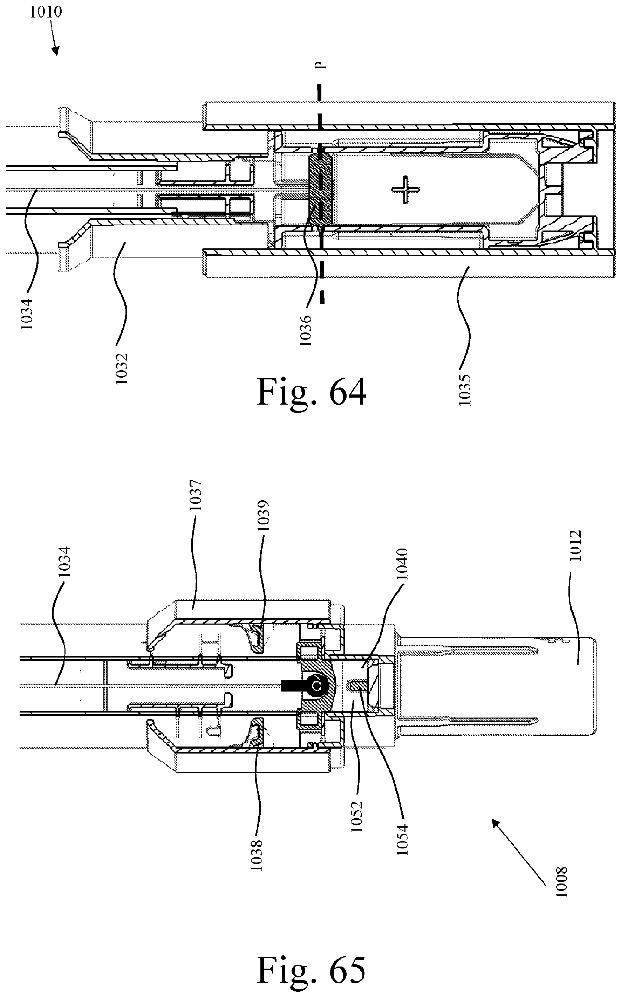

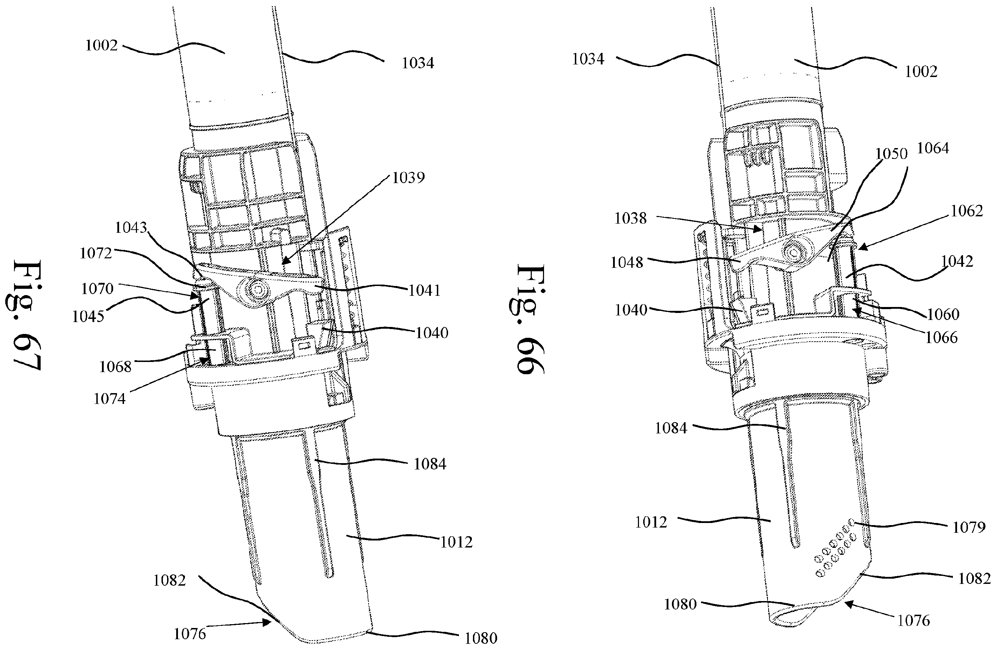

The wand 1000 is shown in isolation in Figures 62 to 67. The wand 1000 comprises an inner wall 1002, an outer wall 1004, a first connecting cuff 1006, a second connecting cuff 1008, a connection release mechanism 1010, a cleaning nozzle 1012, and a wand electrical connection 1013.

The inner wall 1002 is generally cylindrical in form. The inner wall 1002 is shaped and dimensioned to receive the base nozzle 118 of the bin base 102 therein. The inner wall 1002 extends between the first connecting cuff 1006 and the second connecting cuff 1008.. An inner surface of the inner wall 1002 defines a wand flow path, with the inner surface being substantially smooth and uninterrupted in form.

The outer wall 1004 is generally cylindrical in form, and extends between the first connecting cuff 1006 and the second connecting cuff 1008. An outer surface of the outer wall 1004 defines an external surface of the wand 100. An inner surface of the outer wall 1004, together with an outer surface of the inner wall 1002 defines a hollow chamber 1016.

The first connecting cuff 1006 is located at a first end 1018 of the wand 1000, and the second connecting cuff 1008 is located at a second end 1020 of the wand 1000 opposite to the first end 1018 of the wand 1000.

The first connecting cuff 1006 comprises a wand catch 1022, a contact member 1024, and a first connecting cuff electrical connector 1026. The wand catch 1022 comprises a biased hook 1027 for releasably engaging the locking projection 135 of the base nozzle 118 of the bin assembly 100. The first connecting cuff 1006 is shaped and dimensioned to extend about the cylindrical cover portion 168 when the wand 1000 is connected to the main unit 10. The contact member 1024 is defined by a generally planar end surface of the first connecting cuff 1006. The contact member 1024 is shaped to engage with the wand abutment portion 152 of the bin assembly, as will be described in more detail hereinafter. The first connecting cuff electrical connector 1026 is configured to engage with the electrical connection 238 of the primary separation system 200 when the wand 1000 is connected to the main unit 10. The first connecting cuff electrical connector 1026 is located diametrically opposite to the wand catch 1022.

The second connecting cuff 1008 comprises a cleanerhead connecting portion 1028, and a second connecting cuff electrical connector 1030. The cleanerhead connecting portion 1028 is shaped and dimensioned to receive a portion of a cleanerhead catch 1124 of the cleanerhead 1100 therein, as will be described in more detail hereinafter. The cleanerhead connecting portion 1028 is located on a same side of the wand 1000 as the wand catch 1022 of the first connecting cuff 1006. The second connecting cuff electrical connector 1030 is configured to engage with an electrical connection member of the cleanerhead 1100. The second connecting cuff electrical connection is positioned on an opposite side of the second connecting cuff 1008 to the cleanerhead connecting portion 1028, and on a same side of the wand 1000 as the first connecting cuff electrical connector 1026.

The connection release mechanism 1010 comprises a user actuable collar or portion 1032, a connecting cable 1034, a pulley 1036, a first rocker 1038, a second rocker 1039, a breaking wedge or connection breaking member 1040, a first push member 1042, and a second push member 1045. The user actuable collar 1032 is located about the first connecting cuff 1006 and the outer wall 1004, at the first end 1018 of the wand 1000. The user actuable collar 1032 is slidably mounted such that the user actuable collar 1032 is movable from a first position relative to the first connecting cuff 1006, to a second position relative to the first connecting cuff 1006. The first position is closer to a free end of the first end 1018 of the wand 1000, with movement of the user actuable collar 1032 in a direction toward the second end 1020 of the wand 1000 moving the user actuable collar from the first position to the second position, and vice versa. In some examples, the user actuable collar 1032 is biased toward the first position by a spring or the like.

The connecting cable 1034 is formed of steel. Alternatively, the connecting cable could be formed of any other suitable metal wire, woven thread, plastic wire or any other suitable material. A first end of the connecting cable 1034 is connected to the user actuable collar 1032, and a second end 1046 of the connecting cable 1034, opposite to the first end 1044 of the connecting cable 1034, is connected to the breaking wedge 1040. The connecting cable 1034 is housed within the hollow chamber between the inner wall 1002 and the outer wall 1004 of the wand 1000.

The pulley 1036 is rotatably mounted within a first connecting cuff housing 1035 of the wand 1000, the first connecting cuff housing 1035 houses a portion of the actuable collar 1032. The pulley 1036 defines a surface over which the connecting cable 1034 is looped between the first and second ends. A rotational pulley axis P of the pulley 1036 extends substantially orthogonally to the central longitudinal wand axis W.

The first rocker 1038 is pivotally mounted between the inner wall 1002 and a second connecting cuff housing 1037, in a region proximal to the second connecting cuff 1008, and comprises a first rocker arm 1048 and a second rocker arm 1050. The pivotal mounting of the first rocker 1038 is such that the first rocker 1038 is rotatable about a rocker axis that is parallel to the rotational pulley axis P, and orthogonal to the central longitudinal wand axis W. The pivotal mounting of the first rocker 1038 is located around 90 degrees around the circumference of the wand 1000 from the connecting cable 1034.

The first rocker arm 1048 of the first rocker 1038 extends on a first side of the rocker axis toward the breaking wedge 1040 such that a free end of the first rocker arm 1048 of the first rocker 1038 is aligned with the breaking wedge 1040 in a direction parallel to the central longitudinal wand axis W. The second rocker arm 1050 of the first rocker 1038 extends on a second side of the rocker axis, opposite to the first side of the rocker axis, toward the first push member 1042 such that a free end of the second rocker arm 1050 of the first rocker 1038 is aligned with the first push member 1042 in a direction parallel to the central longitudinal wand axis W.

The second rocker 1039 is pivotally mounted between the inner wall 1002 and the second connecting cuff housing 1037, in a region proximal to the second connecting cuff 1008, and comprises a first rocker arm 1041 and a second rocker arm 1043. The pivotal mounting of the second rocker 1039 is such that the second rocker 1039 is rotatable about the rocker axis that is parallel to the rotational pulley axis P, and orthogonal to the central longitudinal wand axis W. The pivotal mounting of the second rocker 1039 is located around 90 degrees around the circumference of the wand 1000 from the connecting cable 1034, and is such that the second rocker 1039 is located diametrically opposite on the wand 1000 to the first rocker 1038.

The first rocker arm 1041 of the second rocker 1039 extends on a first side of the rocker axis toward the breaking wedge 1040 such that a free end of the first rocker arm 1041 of the second rocker 1041 is aligned with the breaking wedge 1040 in a direction parallel to the central longitudinal wand axis W. The second rocker arm 1043 of the second rocker 1039 extends on a second side of the rocker axis, opposite to the first side of the rocker axis, toward the second push member 1045 such that a free end of the second rocker arm 1043 of the second rocker 1039 is aligned with the second push member 1045 in a direction parallel to the central longitudinal wand axis W.

The breaking wedge 1040 comprises a body portion 1052 and a projecting wedge 1054. The body portion 1052 is shaped and dimensioned to underlie the cleanerhead connecting portion 1028 of the second connecting cuff 1008. The body portion 1052 has a first end and a second end opposite to the first end. The first end of the body portion 1052 is connected to a second end of the connecting cable 1034. In some examples, the body portion 1056 is overmoulded onto the second end of the connecting cable 1034. The first end is aligned with the free ends of the first rocker arm 1048 of the first rocker 1038 and the first rocker arm 1041 of the second rocker 1039, in a direction parallel to the central longitudinal wand axis W.

The projecting wedge 1054 protrudes outwardly from the body portion 1052, and extends from a central region of the body portion toward the second end of the body portion 1052. The projecting wedge 1054 is angled such that the projecting wedge 1054 increases in height relative to the body portion 1052 in a direction from the central region of the body portion 1052 to the second end 1058 of the body portion 1052.

The first push member 1042 is generally cylindrical in form, and is mounted between the inner wall 1002 and the second connecting cuff housing 103 7of the wand 1000 by a first sliding channel 1060, such that the first push member 1042 is slidable in a direction parallel to the central longitudinal wand axis W. The first push member 1042 is slidable within the first sliding channel 1060 such that a first end 1062 of the first push member 1042 can move past an end of the second connecting cuff 1008. The first push member 1042 comprises a first abutment portion 1064 that can abut a wall of the first sliding channel 1060 to inhibit a second end 1066 of the first push member 1042, opposite to the first end 1062 of the first push member 1042, from leaving the wand 1000 via the end of the second connecting cuff 1008. The first push member 1042 is located closer to a side of the wand 1000 corresponding to the second connecting cuff electrical connector 1030 than to the cleanerhead connecting portion 1028.

The second push member 1045 is generally cylindrical in form, and is mounted between the inner wall 1002 and second connecting cuff housing 1037 the wand 1000 by a second sliding channel 1068, such that the second push member 1045 is slidable in a direction parallel to the central longitudinal wand axis W. The second push member 1045 is located on an opposing side of the wand 1000 to the first push member 1042. The second push member 1045 is slidable within the second sliding channel 1068 such that a first end 1070 of the second push member 1045 can move past an end of the second connecting cuff 1008. The second push member 1045 comprises a second abutment portion 1072 that can abut a wall of the second sliding channel 1068 to inhibit a second end 1074 of the second push member 1045, opposite to the first end 1070 of the second push member 1045, from leaving the wand 1000 via the end of the second connecting cuff 1008. The second push member 1045 is located closer to a side of the wand 1000 corresponding to the second connecting cuff electrical connector 1030 than to the cleanerhead connecting portion 1028. In some examples, each of the first 1042 and second 1045 push members is biased away from the cleanerhead 1100, when the cleanerhead 1100 is connected to the second end 1020 of the wand 1000.

The cleaning nozzle 1012 extends from the second connecting cuff 1008 in a direction away from the first connecting cuff 1006 along the central longitudinal wand axis W. The cleaning nozzle 1012 has substantially the same shape and dimensions as the base nozzle 118 of the bin assembly 100.

The cleaning nozzle 1012 is hollow in form, such that the cleaning nozzle 1012 defines a wand airflow inlet 1076 into the wand 1000. The cleaning nozzle 1012 has a generally or substantially round cross-sectional profile when viewed in a plane orthogonal to the central longitudinal wand axis W or in a plane orthogonal to a central longitudinal axis of the nozzle 1012. A dimension of the cleaning nozzle 1012 is such that the cleaning nozzle 1012 can be received within a neck portion 1104 of the cleanerhead 1100, as will be discussed in more detail hereafter. In some examples, the cleaning nozzle 1012 may be obround.

A free end of the cleaning nozzle 1012, distal to the second connecting cuff 1008, is profiled such that the free end of the cleaning nozzle 1012 comprises a flat portion 1080 and an angled portion 1082. The flat portion 1080 extends in a direction corresponding to a radial direction of the wand 1000, with the angled portion 1082 extending obliquely relative to the flat portion 1080. The profile of the free end 1078 of the cleaning nozzle 1012 thus leads to the cleaning nozzle 1012 having different axial lengths, measured in a direction parallel to the central longitudinal wand axis W of the wand 1000. The free end 1078 of the cleaning nozzle 1012 comprises a plurality of bleed holes 1079 that extend through a wall of the free end 1078 of the cleaning nozzle 1012.

The cleaning nozzle 1012 is configured to be coupled to a cleanerhead 1100. An outer surface of the cleaning nozzle 1012 comprises four tapered ribs 1084. The four tapered ribs 1084 are each shaped and dimensioned to be received within a corresponding rib receiving channel 1128 formed on an intemal surface of a movable duct 1118 of a neck portion 1104 of the cleanerhead 1100, as will be discussed in more detail hereafter. In other examples the outer surface of the cleaning nozzle 1012 may comprise more or fewer tapered ribs 1084 than four, such as at least one. The ribs 1084 are tapered such that a width of the ribs 1084 decreases in a direction away from the bin 110. The ribs 1084 and rib receiving channels 1128 are respective co-operable features that cooperate to guide movement of the cleanerhead 1100 relative to the wand 1000, and specifically movement of the cleanerhead 1100 away from the wand 1000 during disconnection of the cleanerhead 1100 from the wand 1000.

The wand electrical connection 1013 comprises three electrical cables 1086 that extend between the first connecting cuff electrical connector 1026 of the first connecting cuff 1006 and the second connecting cuff electrical connector 1030 of the second connecting cuff 1008. The electrical cables 1086 are disposed within the hollow chamber 1016 between the inner wall 1002 and the outer wall 1004 of the wand 1000. The electrical cables 1086 begin and end aligned with the first connecting cuff electrical connector 1026 and the second connecting cuff electrical connector 1030 in a direction parallel to the central longitudinal wand axis W, yet extend within the hollow chamber 1016 at a circumferentially spaced position that is generally aligned with the second rocker 1039 in a direction parallel to the central longitudinal wand axis W. In such a manner the electrical cables 1086 are spaced circumferentially about the wand 1000 from the connecting cable 1034 by around 90 degrees.

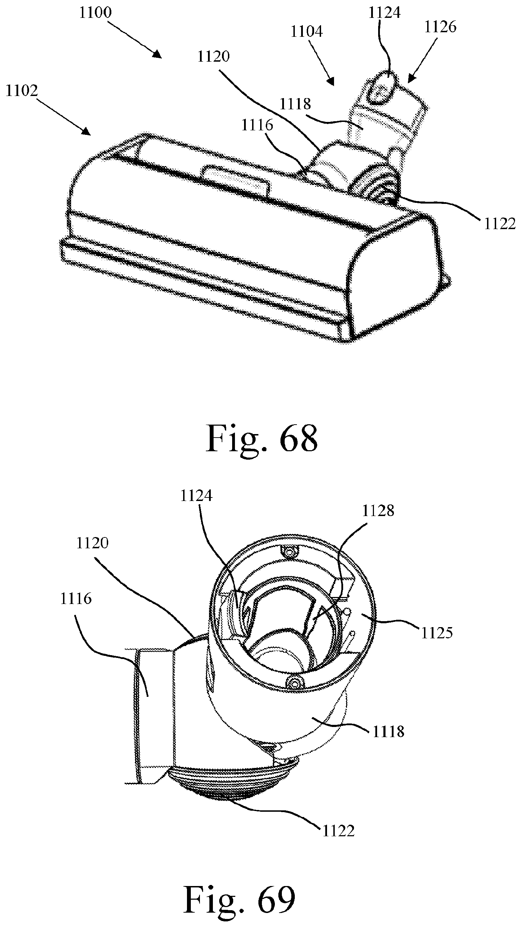

The cleanerhead 1100 is illustrated in Figures 68 to 69. The cleanerhead comprises a main cleanerhead housing 1102, and a neck portion 1104.

The main cleanerhead housing 1102 is generally hollow and comprises an internal chamber 1106. A base of the main cleanerhead housing 1102 comprises an airflow inlet. A brushbar and a drive motor are located within the chamber, with the drive motor configured to drive rotation of the brushbar within the chamber.

The neck portion 1104 extends outwardly from the main cleanerhead housing 1102, and comprises a fixed duct 1116, a movable duct 1118, first 1120 and second 1122 wheels, a cleanerhead catch 1124, and a cleanerhead electrical connection 1125.

The fixed duct 1116 extends outwardly from the main cleanerhead housing 1102, and is generally hollow and cylindrical in form. The fixed duct 1116 is fixed relative to the main cleanerliead housing 1102, and defines an airflow outlet of the main cleanerhead housing 1102. The movable duct 1118 is generally hollow in form, and is movably mounted relative to the fixed duct 1116. The movable duct 1118 has a free end 1126 remote from the fixed duct 1116, and four rib receiving channels 1128 are located on an interior surface of the free end 1126. The rib receiving channels 1128 are each shaped and dimensioned to receive a respective one of the four tapered ribs 1084 of the outer surface of the cleaning nozzle 1012 of the wand 1000. The free end 1126 of the movable duct 1118 is shaped and dimensioned to overlie the cleaning nozzle 1012 of the wand 1000 when the cleanerhead 1100 is connected to the wand 1000. An internal surface of the free end 1126 of the movable duct 1118 is configured to overlie the bleed holes 1079, such that airflow through the bleed holes 1079 is inhibited, when the cleanerhead 1100 is connected to the wand 1000.

The first 1120 and second 1222 wheels are rotatably mounted to the movable duct 1118, and facilitate motion of the cleanerhead 1100 over a surface in use.

The cleanerhead catch 1124 is located at the free end 1126 of the movable duct 1118, and comprises a resiliently biased hook portion, and a ramped surface. The resiliently biased hook portion is shaped and dimensioned to engage with the cleanerhead connecting portion 1028 of the second connecting cuff 1008 of the wand 1000, to hold the cleanerhead 1100 and wand 1000 in place relative to one another. The ramped surface is shaped and dimensioned to selectively engage with the projecting wedge 1054 of the breaking wedge 1040 to move a position of the resiliently biased hook portion.

The cleanerhead electrical connection 1125 is located at the free end 1126 of the movable duct 1118, and is located diametrically opposite to the cleanerhead catch 1124. The cleanerhead electrical connection 1125 is releasably connectable to the second connecting cuff electrical connector 1030 to enable electrical power and control commands to be delivered to the drive motor 1114.

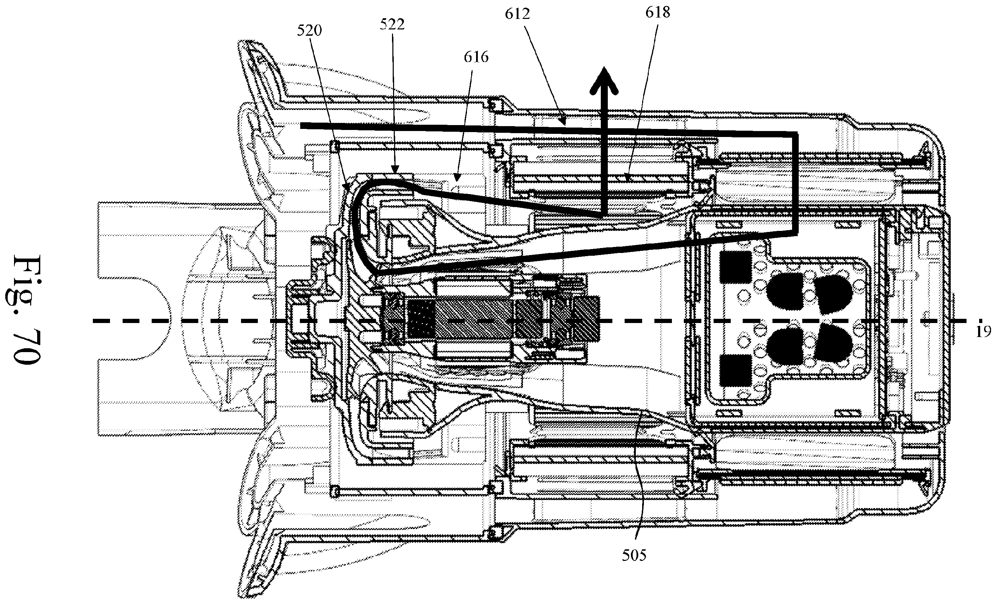

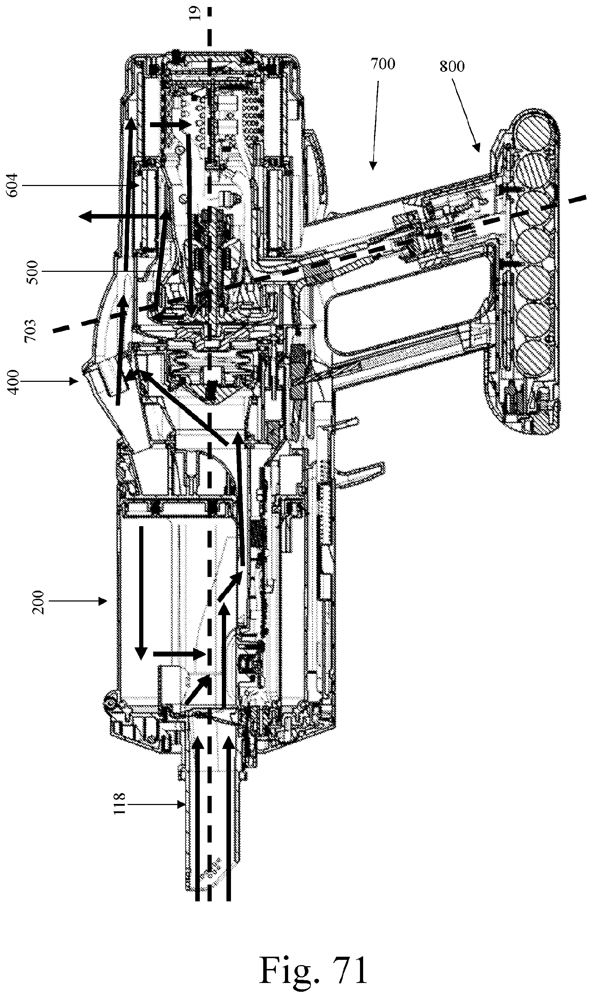

The main unit 10 is shown in a vertical orientation in Figures 70 and 71.

With the main unit 10 arranged vertically, a central longitudinal axis 19 of the main unit 10 extends vertically. The central longitudinal axis 19 of the main unit 10 is coaxial with the central longitudinal axis 119 of the base nozzle 118. The bin assembly 100 extends annularly about the central longitudinal axis 19 of the main unit 10 and, in this example, has a central longitudinal axis that is coaxial with the central longitudinal axis 19 of the main unit 10.

The bin push rod 356 is slidable in a direction that is parallel to the central longitudinal axis 19 of the main unit 10. The hinge axis 123 of the bin base 102 extends in a direction substantially orthogonally to the central longitudinal axis 19, and hence substantially orthogonally to the central longitudinal axis 119 of the base nozzle 118. The hinge axis 123 is positioned on an opposite side of bin assembly 100 to the runner assembly 350, such that the bin base 102 is openable in a direction that pivots away from the runner assembly 350.

The fabric hinge 148 defines a pivot axis about which the inlet valve member 146 pivots between its open and closed positions. The pivot axis of the fabric hinge 148 is substantially parallel to the hinge axis 123 of the bin base 102. In this vertical orientation, the inlet valve member 146 pivots to the closed position, and thus dirt collected in the chamber 105 of the bin assembly 100 is prevented from escaping through the base nozzle 118.

The primary separation system 200 is positioned such that the first core portion 212 is located within the bin case 174 of the bin assembly 100. The first core portion 212 is offset from the central longitudinal axis 19 of the main unit 10, and hence offset from the central axis 19 of the bin nozzle 118. The central longitudinal axis 19 of the main unit 10, like that of the central axis of the bin nozzle 118, extends through the airflow channel 220 defined by the first core portion 212 and the primary filter 204, such that the first core portion 212 and the primary filter 204 wrap partly around the central longitudinal axis 19 of the main unit 10.

In this vertical orientation, the trough of the U-shaped of the first core portion 2 12 faces in a direction toward the front of the bin assembly 100 on which the bin hinge portion 175 is formed.

The primary filter 204 overlies the primary outlet passage 226, with the insert 274 located behind a peripheral edge of the mesh 270 of the primary filter 204. An upstream surface of the primary filter 204 faces toward the central longitudinal axis 19 of the main unit 10, and hence toward the central axis 119 of the bin nozzle 118. Again, in this vertical orientation, a trough of the primary filter 204 faces in a direction towards the front of the bin assembly 100 on which the bin hinge portion 175 is formed. The primary filter 204 extends away from the airflow inlet 134 in a direction parallel to the central longitudinal axis 19 of the main unit 10, and hence parallel to the central longitudinal axis 119 of the base nozzle 118.

The impact area 280 of the dirt detection assembly 210 is positioned between the airflow inlet 134 and the primary filter 204, and the inlet valve member 146 partially overlies the impact area 280 when the inlet valve member 146 is in an open configuration.

The first 206 and second 208 auxiliary filters are positioned such that, in this vertical orientation, the first 206 and second 208 auxiliary filters are located towards a bottom end of the bin assembly 100. The outer, upstream surfaces of the first 206 and second 208 auxiliary filters face in a direction generally opposite to that of the primary filter 204, with upstream surfaces of the first 206 and second 208 auxiliary filters facing in a direction towards the rear of the bin assembly, and thus in a direction towards the runner assembly 350. The first 206 and second 208 auxiliary filters are spaced apart from one another about the convex surface of the first core portion 212, and hence are also spaced apart within the chamber 105 of the bin assembly 100.

The primary outlet passage 226 extends in a direction parallel to the central longitudinal axis 19 of the main unit 10, and hence parallel to the central axis 119 of the bin nozzle 118, but is spaced radially from the central longitudinal axes 19,119. The primary outlet passage 226 is in fluid communication with the chamber 105 of the bin assembly 100 via the primary filter 204.

The first 234 and second 236 auxiliary outlet passages are located within the first core portion 212 such that, when the main unit 10 is held vertically, the first 234 and second 236 auxiliary outlet passages are located further towards the rear of the bin assembly 100 than that of the primary outlet passage 226. The first 240 and second 242 linking passages extend between the respective first 234 and second 236 auxiliary outlet passages and the primary outlet passage 226, and fluidically connect the first 234 and second 236 auxiliary outlet passages and the primary outlet passage 226.

The first 228 and second 230 dirt collection chambers extend longitudinally along an entire length of the first core portion 212 and hence along an entire length of the bin assembly 100. The first 228 and second 230 dirt collection chambers are located further from the central longitudinal axis 19 of the main unit 10, in a radial direction, than the primary outlet passage 206.

The looming passages 232 extends longitudinally along an entire length of the first core portion 212 and hence along an entire length of the bin assembly 100. The looming passage 232 is located further from the central longitudinal axis 19 of the main unit 10, in a radial direction, than the primary outlet passage 206. The looming passage 232 is located closer to the rear of the bin assembly 100 than the primary outlet passage 226.

The electrical connector 238 of the primary separation system 200 is located at the end of the looming passage 232 proximal to the airflow inlet 134, and extends through the plate aperture 122.

The second core portion 214 is located at an end of the first core portion 212 that is distal the airflow inlet 134. The end wall 244 of the second core portion 214 extends across substantially an entirety of an internal diameter of the bin body 110, with the annular bin body seal 250 forming a fluid seal against an internal surface of the bin body 110. The bin release catch 252 is seated within the catch recess, such that the bin release catch is located on a same side of the bin body 110 as the hinged connection between the bin base 102 and the bin body 110.

The compaction plate sub-assembly 302 of the compaction assembly 300 is located within the bin case 174 such that the first core portion 212 is received within the front plate through-hole 322. The compaction plate sub-assembly 302 is positioned adjacent to the bin plate 244 of the second core portion 214, with the compaction plate sub-assembly 302 located closer to the airflow inlet 134 than the bin plate 244. The front flange 324 of the front plate 314 of the compaction plate sub-assembly 302 extends from the front plate 314 in a direction toward the airflow inlet 134. The front flange 324 underlies the looking channel 232 of the first core portion 212, such that the front flange 324 is located toward the side of the bin case 174 closest to the runner assembly 350.

The core wiping member 304 extends about a periphery of the first core portion 212 that is distal from the air inlet, such that the core wiping member 304 does not overlie the primary filter 204. The bin wiping member 306 extends about, and is in contact with, an inner surface of the bin case 174.

The first 334 and second 336 compaction handle connectors are aligned with and slidably mounted on the compaction rails 364 of the handle assembly 312 so that the first compaction handle 334 slides along a first compaction rail and the second compaction handle slides along a second compaction rail. The first 334 and second 336 compaction handle connectors are substantially parallel with the central longitudinal axis 19 of the main unit, and hence with the central axis B of the bin case 174. The first 308 and second 310 compaction rods extend through the channel 477 of the cone assembly 408 of the secondary separation system 400.

The compaction handle 332 of the compaction handle assembly 312- is slidably received within the runner assembly 350, such that the compaction handle 332 protrudes downwardly from the runner assembly 350. The compaction handle 332 extends outwardly from the runner assembly 350 to a greater extent than the handle portion 372 of the bin push rod 356.

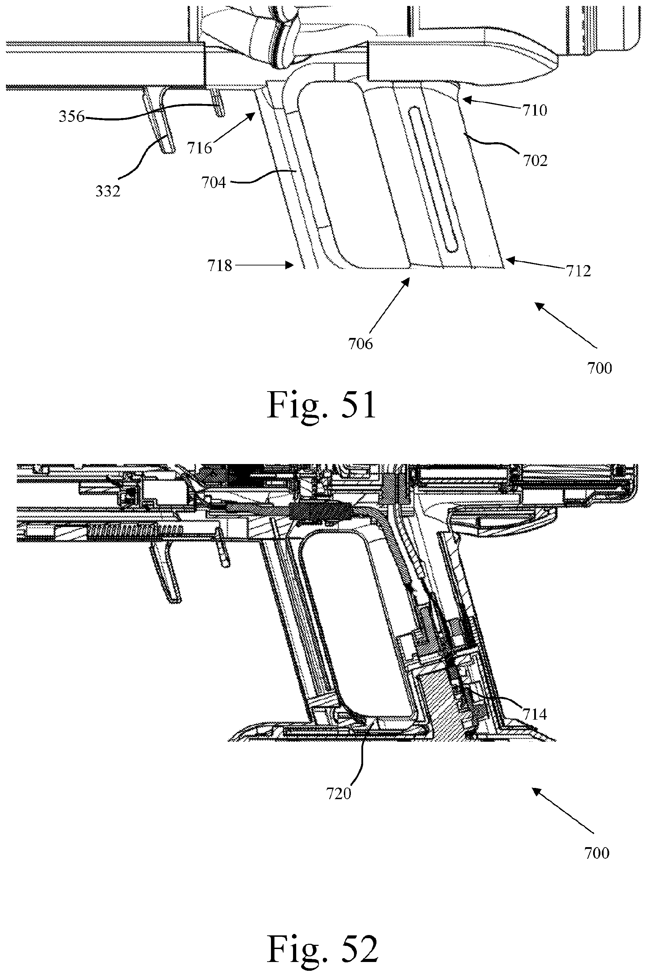

A relative arrangement between the compaction handle 332, the handle portion 372 of the handle portion 356 of the bin push rod 356, and the main handle body 702, and the guard body 704 of the handle portion 700 is shown in Figure 51. The guard body 704 is located closer to the airflow inlet 134, in a direction measured parallel to the central longitudinal axis 19 of the main unit 10, than the main handle body 702. The handle portion 372 of the bin push rod 356 is located closer to the airflow inlet 134, in a direction measured parallel to the central longitudinal axis 19 of the main unit 10, than the guard body 704. The compaction handle 332 is located closer to the airflow inlet 134, in a direction measured parallel to the central longitudinal axis 19 of the main unit 10, than the handle portion 372 of the bin push rod 356. TIle front plate 314 is located closer to the airflow inlet 134, in a direction measured parallel to the central longitudinal axis 19 of the main unit 10, than the compaction handle.

The secondary separation system 400 is located downstream of the primary separation system 200, with the aerodynamic insert 402 of the secondary separation system 400 in fluid communication with the outlet passage 256 of the second core portion 214 of the primary separation system 200. The flow separator 404 is located downstream of the aerodynamic insert 402, with the valve member 438 and the expansion member 440 located within the central bore 420 of flow separator 404. The connecting rod 444 of the vortex plate 410 is located such that it extends axially along the central longitudinal axis 19 of the main unit 10, and such that the expansion member 440 and the valve member 438 extend about, and are movable axially along, the central longitudinal axis 19 of the main unit 10.

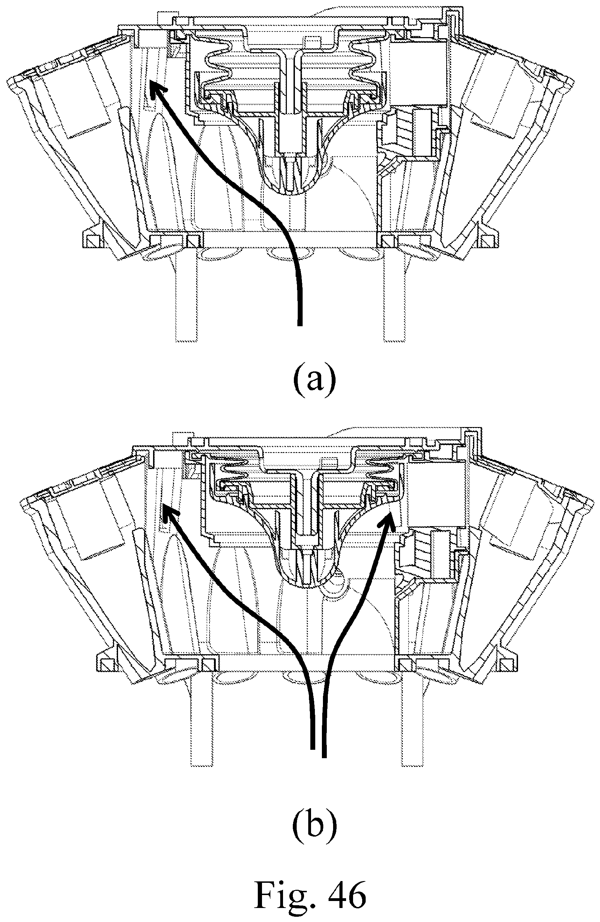

As shown in Figure 46, airflow to the cyclone inlets 472 of the first subset 474 of cyclone bodies 464 are uninhibited by the valve assembly 406 as indicated by the arrow through the central channel 462 in Figure 46(a). Airflow to the cyclone inlets 472 of the second subset 476 of cyclone bodies 464 travels through the outlet apertures 428 of the flow separator 404 when the valve assembly 406 is actuated.

The cyclone dirt outlets 473 of the first subset 474 of cyclone bodies 464 are in fluid communication with the first dirt transfer passage 258 of the second core portion 214 of the primary separation system 200, and hence also in fluid communication with the first dirt collection chamber 228 of the first core portion 212 of the primary separation system 200.

The cyclone dirt outlets 473 of the second subset 476 of cyclone bodies 464 are in fluid communication with the second dirt transfer passage 260 of the second core portion 214 of the primary separation system 200, and hence also in fluid communication with the second dirt collection chamber 230 of the first core portion 212 of the primary separation system 200.

The vortex finders 480 of the vortex plate 410 extend into the cyclone bodies 464 of the cone assembly 408, define air outlets of the secondary separation system 400, and are in fluid communication with the cyclone parts 606 of the housing and handle assembly 600. The motor inlet passageway 612 extends downstream of the cyclone outlets, in a direction away from the airflow inlet 134 parallel to the central longitudinal axis 19 of the main unit 10.

The suction motor 500 is positioned within the inner housing portion 614 of the main housing body 602 of the housing and handle assembly 600, such that the suction motor 500 is located downstream of the motor inlet passageway 612. The electric motor 502 of the suction motor 500 is positioned such that the shaft 516 lies along the central longitudinal axis 19 of the main unit 10, and such that the rotational axis R of the electric motor 502 is coaxial with the central longitudinal axis 19 of the main unit 10. The shaft 516 hence also lies parallel with a direction of bulk airflow through the airflow inlet 134, as does the rotational axis R of the electric motor 502.

The electric motor 502 is positioned radially inwardly of both the motor inlet passageway 612 and the motor outlet passageway 616. The electric motor 502 of the suction motor 500 is positioned such that an inlet of the electric motor 502, via an inlet of the motor can 505, is located further away from the airflow inlet 134, in a direction parallel to the central longitudinal axis of the main unit 10, than an outlet of the electric motor 502.

The impeller 504 is located downstream of the electric motor 502, and is positioned within the inner housing portion 614 of the main housing body 602 of the housing and handle assembly 600 such that the impeller 504 is located closer to the airflow inlet 134, in a direction parallel to the central longitudinal axis of the main unit 10, than the electric motor 502.

The diffuser 506 is located downstream of the electric motor 502, and is positioned within the inner housing portion 614 of the main housing body 602 of the housing and handle assembly 600 such that the radial portion 520 of the diffuser 506 extends radially relative to the central longitudinal axis 19 of the main unit 10. The axial portion 522 of the diffuser 506 extends away from the radial portion 520 in a direction away from the air inlet 134, and generally parallel to the central longitudinal axis 19 of the main unit 10.

The motor outlet passageway 616 is located downstream of the diffuser 506, and extends in a direction away from the axial portion 522 of the diffuser 506 in a direction parallel to the central longitudinal axis 19 of the main unit 10.

The filter assembly 604 is mounted to the main body housing 602 at an end of the main body housing 602 distal the airflow inlet 134. The first and second locating tabs 674 are engaged with the inner housing portion 614 to releasably attach the filter assembly 604 to the main housing body 602. The display screen 636 and the first 638 and second 640 buttons are exposed through the through-hole 662 of the cap body 652 of the filter assembly 604. The cap seal 654 is engaged with an end of the inner housing portion 614.

The pre-filter frame 678 is disposed between the motor inlet passageway 612 and the curved surface of the inner housing portion 614 that comprises the plurality of inlet apertures 626, such that the pre-filter media 680 is located between the motor inlet passageway 612 and the plurality of inlet apertures 626. The pre-filter media 680 is located annularly about the central longitudinal axis 19 of the main unit 10.

The first outer seal 682 seals against an inner surface of the outer wall 608 of the main body housing 602. The second outer seal 684 seals against an inner surface of the inner wall 610 of the main body housing 602.

The post-filter frame 698 is located closer to the airflow inlet 134 than the pre-filter frame 678 in a direction along the central longitudinal axis 19 of the main unit 10. The post-filter frame 698 is located annularly about, and spaced from, the motor can 505, such that the post-filter frame 698 partly defines the motor outlet passageway 616.

TIle post-filter media 699 is located between the motor outlet passageway 616 and the first 618 and second 620 housing outlets. The post-filter media 699 is located annularly about the central longitudinal axis 19 of the main unit 10. The post-filter media 699 is located closer to the airflow inlet 134 than the pre-filter media 680 in a direction parallel to the central longitudinal axis 19 of the main unit 10. The post-filter media 699 is located radially closer to the central longitudinal axis 19 of the main unit 10 than the pre-filter media 680. The face seal 697 seals against the radial extension 611 of the inner wall 610 of the main body housing 602.

The main handle body 702 extends from the outer wall 608 of the main housing body 602 of the housing and handle assembly 600 such that a central handle axis 703 of the main handle body 702 is angled relative to the central longitudinal axis 19 of the main unit 10, with an angle between the central handle axis 703 and the central longitudinal axis 19 of the main unit 10 of between 90 and 120 degrees and, in this example, is around 105 degrees. Thus an angle between the axis 119 of the base nozzle 118 through which airflow enters the chamber 105 and the central handle axis 703 of the handle portion 700 is likewise between 90 and 120 degrees and, in this example, is around 105 degrees.

The main handle body 702 is located further away from the airflow inlet 134, in a direction measured parallel to the central longitudinal axis 19 on the main unit 10, than each of the primary separation system 200 and the secondary separation system 200.

The battery assembly 800 is located at the second end 712 of the main handle body 702, with the terminal housing portion 810 of the battery assembly 800 located within the second end 712 of the main handle body 702, and the battery connector 812 of the battery assembly 800 connected to the battery terminal connection 714 of the main handle body 702. The battery assembly 800 is positioned with the battery cells 804 aligned in a row along a direction parallel to the central longitudinal axis 19 of the main unit 10. The catch member 814 of the battery pack release mechanism 806 is engaged with the hook 720 of the battery connection body 706 to retain the battery assembly 800 relative to the handle portion 700.

As can be seen from Figure 71, the primary separation system 200, the secondary separation system 400, the suction motor 500, and the filter assembly 604, are aligned along the central longitudinal axis 19 of the main unit 10. Moreover, the central axis C of the cone assembly 408 is coaxial with the longitudinal axis 19 of the main unit 10, and therefore the individual cyclone body axes of the cyclone bodies 464 converge towards the longitudinal axis 19 of the main unit 10. A minimal distance between the primary separation system 200 and the airflow inlet 134, in a direction parallel to the central longitudinal axis 19 of the main unit 10, is less than a minimal distance between the secondary separation system 400 and the airflow inlet 134. A minimal distance between the secondary separation system 400 and the airflow inlet 134, in a direction parallel to the central longitudinal axis 19 of the main unit 10, is less than a minimal distance between the suction motor 500 and the airflow inlet 134. A minimal distance between the suction motor 500 and the airflow inlet 134, in a direction parallel to the central longitudinal axis 19 of the main unit 10, is less than a minimal distance between the filter assembly 604 and the airflow inlet 134.

With the central longitudinal axis 19 of the main unit 10 arranged vertically, and the base nozzle 118 directed downwardly, the primary separation system 100 is located vertically above the base nozzle 118. The secondary separation system 400 is then located vertically above the primary separation system 200. The suction motor 500 is located vertically above the secondary separation system 400. Moreover, the suction motor 500 is arranged or oriented such that the electric motor 502 is located vertically above the impeller 504. The PCB assembly 627 is then located above the suction motor 500. The filter assembly 604 is likewise located vertically above the secondary separation system 400. The pre-filter sub-assembly 648 of the filter assembly 604 is located vertically above the post-filter sub-assembly 650 of the filter assembly 604. Moreover, the pre-filter sub-assembly 648 is located at a higher position than that of the suction motor. TIle filter assembly 604 is then removable from the main unit 10 in an upward direction.

The handle portion 700 is located behind the suction motor 500 at a position higher than that of the primary separation system 200 and the secondary separation system 400. The battery assembly 800 in then located behind the handle portion 700, and is also at a position higher than the primary separation system 200 and the secondary separation system 400. Consequently, when the main unit 10 is oriented horizontally (i.e., with the central longitudinal axis 19 of the main unit 10 extending horizontally), the suction motor 500 is located vertically above the handle portion 700, and the handle portion 700 is located vertically above the battery assembly 800.

When the main unit 10 is arranged horizontally (i.e., with the central longitudinal axis 19 of the main unit 10 extending horizontally), the handle portion 700 is located below the central longitudinal axis 19 of the main unit and thus below the longitudinal axis 199 of the base nozzle 118, and the primary filter 204 of the primary separation system 200 is located below and extends upwardly to partly surround the longitudinal axis 19.

In use, airflow flows from the secondary separation system 400 to the pre-filter sub-assembly 648 in a first direction. The airflow then flows through the suction motor 500 in a second direction opposite to the first direction, and from the suction motor 500 to the post-filter sub-assembly in the first direction. Airflow is therefore drawn into an inlet of the impeller 504 in the second direction and is discharged from an outlet of the diffuser 506 in the first direction. When the main unit 10 is arranged vertically with the base nozzle 118 directed downwardly, as shown in Figure 71, the first direction is an upward direction and the second direction is a downward direction. Airflow then flows through the pre-filter sub-assembly 648 and the post-filter sub-assembly 650 in a generally horizontal direction (i.e., in a radial direction normal to the central longitudinal axis 19).

During use of the vacuum cleaner 1, the main unit 10 will typically be held in the orientation shown in Figures 1 and 2, with the base nozzle 118 directed downwards at an angle of about 45 degrees relative to the horizontal. In this orientation, the trough formed by the U-shaped cross-section of the core 202 and primary filter 204 faces generally upwards. The concave portion of the core 202 therefore faces generally upwards whilst the convex portion, on which the auxiliary filters 206,208 are attached, faces generally downwards.

With the wand 1000 connected to the main unit 10, the central longitudinal wand axis W is substantially coaxial with the central longitudinal axis 19 of the main unit 10. The wand catch 1022 connects the wand 1000 to the main unit 10 via engagement of the biased hook 1027 with the locking projection 135 on the base nozzle 118 of the bin assembly 100. The first connecting cuff electrical connector 1026 is engaged with the electrical connection 238 of the primary separation system 200.

The contact member 1024 of the first connecting cuff 1006 of the wand 1000 is engaged with the wand abutment portion 156 of the wand interlock actuator 152 such that the wand interlock actuator 152 and the wand interlock slider 154 are in their third positions. The hook 168 of the wand interlock slider 154 engages the hook 188 of the bin body 110 to prevent opening of the bin base 102 relative to the bin body 110. The base nozzle 118 of the bin assembly 100 is housed within the inner wall 1002 of the wand 1000.

The user actuable collar 1032 is slidable in a direction parallel to the central longitudinal axis 19 of the main unit 10, with the connecting cable 1034 extending generally in a direction parallel to the central longitudinal axis 19 of the main unit 10.

The cleanerhead 1100 is connected to the second end 1020 of the wand 1000, with the cleanerhead catch 1124 engaged with the cleanerhead connecting portion 1028. The cleaning nozzle 1012 is housed within the free end 1126 of the movable duct 1118 of the neck portion 1104 of the cleanerhead 1100.

In use, a user can utilise one of the first 638 and second 640 buttons to turn on the vacuum cleaner 1, with electrical power being provided from the battery assembly 800 to the electric motor 502. The vacuum cleaner 1 is operable in one of a low power mode, a medium power mode, or a high power mode. Upon initial turn-on of the vacuum cleaner 1, the vacuum cleaner operates in the medium power mode, with the user able to toggle one of the first 638 and second 640 buttons to switch through the operating modes. In the discussion that follows, the vacuum cleaner 1 is initially assumed to be in the medium power mode. The electric motor 502 causes rotation of the impeller 504, which generates an airflow through the main unit 10, the wand 1000, and the cleanerhead 1100.

The user can grasp the main handle body 702, and by moving their arm can in turn manoeuvre the cleanerhead 1100 over a surface to be cleaned. Electrical power is provided from the battery assembly 800 to the cleanerhead 1100, via the electrical connection 238, the first connecting cuff electrical connector 1026, the wand electrical connection 1013, the second connecting cuff electrical connector 1030, and the cleanerhead electrical connection 1125. The drive motor 1114 drives rotation of the brushbar 1112 within the internal chamber 1106, with the brushbar 1112 acting to agitate the surface to be cleaned.

A path of airflow through the vacuum cleaner 1 is illustrated schematically in Figures 70 and 71. Airflow enters the cleanerhead 1100 via the airflow inlet 1110 along with entrained dirt such as dirt. Airflow passes through the internal chamber 1106, and exits the cleanerhead 1100 via the fixed duct 1116 and the movable duct 1118.

Airflow passes into the wand 1000, and flows through the wand flow path toward the base nozzle 118 of the bin base 102. Airflow passes through the base nozzle 118, and into the chamber 105 of the bin assembly 100 via the airflow inlet 134. The suction generated by the suction motor 500 within the chamber 105 causes the inlet valve member 146 to pivot from its closed position to its open position to enable airflow to enter the chamber 105 via the airflow inlet 134. Depending on the power mode of the vacuum cleaner 1, as well as the type of surface on which the vacuum cleaner 1 is used, airflow at the airflow inlet 134 has a flow rate of between 5 l/s and 25 l/s. A direction of airflow at the airflow inlet 134 is parallel to the central longitudinal axis 19 of the main unit 10. The direction of airflow at the airflow inlet 134 can be thought of as being in a direction from a bottom of the bin assembly 100 to the top of the bin assembly when the base nozzle 118 is directed downwardly.

The inlet valve member 146 directs airflow leaving the airflow inlet 134 toward the impact area 280 of the dirt detection assembly 210, and toward the primary filter 204. The inlet valve member 146 shapes the airflow leaving the airflow inlet 134 to a general U-shape when viewed in a plane normal to the central longitudinal axis 19 of the main unit 10. More specifically, the airflow shaped by the inlet valve member 146 has a cross-sectional shape, in a plane normal to the longitudinal axis 19 of the main unit 10 and thus normal to the longitudinal axis 119 of the base nozzle 118, and a centreline of the cross-sectional shape is generally U-shaped.

The dirt laden airflow from the airflow inlet 134 hitting the impact area 280 enables the piezoelectric acoustic sensor 282 to sense a number and/or a size of particulate matter entrained within the airflow, and in some examples can enable a corresponding visualisation of number and/or size of particulate matter to be displayed to the user via the display screen 636.

The airflow from the airflow inlet 134 flows over the primary filter 204 in a direction generally parallel to the central longitudinal axis 19 of the main unit 10. As the airflow flows over the primary filter 204, a first portion of the airflow passes through the mesh 270 of the primary filter 204, with the primary filter 204 acting to filter out relatively large dirt from the airflow. Such filtered dirt is collected within the chamber 105 of the bin assembly 100. Airflow that has passed through the primary filter 204 flows into the primary outlet passage 226 of the first core portion 212.

A second portion of the airflow (i.e., that portion which has not passed through the primary filter 204) remains within the chamber 105 of the bin assembly 100, and recirculates generally toward the airflow inlet 134 as a result of the positioning of the first 206 and second 208 auxiliary filters. Such recirculation can, in some examples, draw dirt toward a lower region of the chamber 105 adjacent the airflow inlet 134, such that the chamber 105 fills with dirt in a direction from a lower end 181 of the bin body 110 to an upper end 182 of the bin body 110.

Airflow passes through the first 206 and second 208 auxiliary filters into the respective first 234 and second 236 auxiliary outlet passages. The first 206 and second 208 auxiliary filters, similar to the primary filter 204, act to filter out relatively large dirt from the airflow. Such filtered dirt is collected within the chamber 105 defined by the bin assembly 100.

Airflow passes from the first 234 and second 236 auxiliary outlet passages, through the respective first 240 and second 242 linking passages, to the primary outlet passage 226. Airflow then passes from the primary outlet passage 226 of the first core portion 212 into the outlet passage 256 of the second core portion 214.

From the outlet passage 256, airflow passes into the aerodynamic insert 402 of the secondary separation system 400. As noted above, the vacuum cleaner 1 is in the medium power mode. In the medium power mode, the valve assembly 406 acts to inhibit airflow through the second subset 476 of cyclone bodies 464 of the secondary separation system 400, as can be seen in Figure 46(a).

In particular, the coil 486 of the valve actuator assembly 448 is not energised, and the blocking member 484 is resiliently biased by spring 494 to a position where the blocking member 484 blocks airflow through the first airflow path 488, and allows airflow through the second 490 and third 492 airflow paths. As the second airflow path 490 is in fluid communication with a location downstream of the electric motor 502, and airflow is permitted through the second 490 and third 492 airflow paths, a pressure is passed to the interior of the expansion member 440 that holds the expansion member 440 in an expanded state. In such an expanded state, the expansion member 440 urges the valve member 438 to engage with the valve seat 422 of the flow separator 404.

With the valve member 438 engaged with the valve seat 422 of the flow separator 404, airflow is inhibited from passing through the central bore 420 of the flow separator 404, and is inhibited from passing through the outlet apertures 428 of the flow separator 404. As the cyclone inlets 472 of the second subset 476 of cyclone bodies 464 are in fluid communication with the outlet apertures 428 of the flow separator 404, airflow is inhibited from passing into the second subset 476 of cyclone bodies. In contrast, airflow is permitted to pass through to the cyclone inlets 472 of the first subset 474 of cyclone bodies 464 because the airflow bypasses the valve assembly 406. Thus airflow passes into the first subset 474 of cyclone bodies 464 via the respective cyclone inlets 472. The position of the cyclone inlets 472 is such that airflow is introduced tangentially into the first subset 474 of cyclone bodies 464. The first subset 474 of cyclone bodies 464 act to cyclonically separate dirt from the airflow.

Dirt separated from the airflow by the first subset 474 of cyclone bodies 464 is free to fall through the respective cyclone dirt outlets 473, through the first dirt transfer passage 258 of the second core portion 214 of the primary separation system 200, and into the first dirt collection chamber 228 of the first core portion 212.

Airflow leaves the first subset 474 of cyclone bodies via the respective vortex finders 480, and passes through the respective cyclone parts 606 of the main housing body 602 into the motor inlet passageway 612. Airflow flows through the motor inlet passageway away from the airflow inlet 134, and hence away from the secondary separation system 400, in a direction substantially parallel to the central longitudinal axis 19 of the main unit 10. The airflow turns radially inwardly and passes through the pre-filter media 680, and into the inner housing portion 614 via the plurality of inlet apertures 626 of the inner housing portion 614.

The impeller 504 then draws the airflow through the motor can 505 and over the electric motor 502 in a direction toward the airflow inlet 134, and toward the secondary separation system 400, in a direction substantially parallel to the central longitudinal axis 19 of the main unit 10. Airflow passes through the impeller 504 and radially outwardly into the radial portion 520 of the diffuser 506, before turning and passing through the axial portion 522 of the diffuser 506. Airflow passes through the axial portion 522 of the diffuser 506 away from the airflow inlet 134, and away from the secondary separation system 400, in a direction substantially parallel to the central longitudinal axis 19 of the main unit 10.

Airflow passes from the axial portion 522 of the diffuser 506 into the motor outlet passageway 616, and flows through the motor outlet passageway 616 generally away from the airflow inlet 134, and away from the secondary separation system 400, in a direction substantially parallel to the central longitudinal axis 19 of the main unit 10. Airflow turns radially outwardly and passes through the post-filter media 699, and then is vented to an ambient external environment of the vacuum cleaner 1 via the channels 644 of the first 618 and second 620 housing outlets. Airflow is vented through the first 618 and second 620 housing outlets in a direction substantially orthogonal to the central longitudinal axis 19 of the main unit 10. The airflow through the main unit 110 between the secondary cyclones 400 and the first 618 and second 620 housing outlets is shown in Figure 70. The complete airflow through the vacuum cleaner 1 is shown in Figure 71.

In use of the vacuum cleaner 10, the chamber 105 of the bin assembly 100 fills with relatively coarse dirt. To extend a period of time for which the user can clean without needing to empty the bin assembly 100, the user can utilise the compaction assembly 300 to compact dirt contained within the chamber 105.

To utilise the compaction assembly, a user grasps the handle body 340 of the compaction handle 332, and pivots the compaction handle 332 relative to the first 334 and second 336 compaction handle connectors. Pivoting of the compaction handle 332 moves the magnet 354 away from the hall sensor, which results in a control signal being sent to the controller 526 of the suction motor 500. The control signal causes the controller 526 of the suction motor 500 to cause operation of the motor 500 to cease, such that airflow is no longer generated through the vacuum cleaner 1.

Once the first 342 and second 344 connection portions are pivoted out of the of the runner assembly 350, the user slides the compaction handle 332 relative to the runner assembly 350 in a direction toward the bin base 102, substantially parallel to the central longitudinal axis 19 of the main unit 10. As the user slides the compaction handle 332, the compaction plate sub-assembly 302 slides within the bin body 110, with the first 308 and second 310 compaction rods sliding within the rails 364 of the runner assembly 350.

As the compaction plate sub-assembly 302 slides within the bin body 110, the front plate 314 of the compaction assembly 300 acts to compact dirt contained within the chamber 105 of the bin assembly 100. Furthermore, as the compaction plate sub-assembly 302 slides within the bin body 110, the core wiping member 304 is in contact with the periphery of the first core portion 212, and the bin wiping member 306 is in contact with an inner surface of the bin case 174. The core wiping member 304 wipes dirt from the first core portion 212, including from upstream faces of the primary filter 204 and the first 206 and second 208 auxiliary filters. The bin wiping member 306 wipes dirt from the inner surface of the bin case 174. Thus, a single actuation of the compaction handle 332 wipes both the first core portion 212 and the bin body 110. The compaction handle 332 may be considered to be a handle of the wiping mechanism, for actuating the wiping mechanism. Dirt wiped by the core wiping member 304 and the bin wiping member 306 is compacted by the front plate 314 of the compaction assembly 300. With the bin base 102 in the open configuration, at least part of the wiping mechanism (such as at least part of the core wiping member 304, the bin wiping member 306) and/or the compaction assembly 300 (such as the compaction handle 332) may be moveable from a position within the bin body 110 to a position beyond the end of the bin body 110, so as to aid in wiping dirt from the bin 110. In this example, actuation of the compaction assembly 300 to compact dirt collected within the bin body 110 actuates the wiping mechanism. In other examples, though, the compaction assembly 300 and the wiping mechanism may be independently actuable.

Once a compaction action has been performed by the user, the user can retract the compaction plate sub-assembly 302 to its initial position by sliding the compaction handle 332 in a direction away from the airflow inlet 134, substantially parallel to the central longitudinal axis 19 of the main unit 10. In some examples, the first 342 and second 344 connection portions can comprise latches that provide haptic feedback so that the user knows when the compaction handle 332 is relocated in its proper position. With the compaction handle 332 back in its initial position, the user can press one of the first 638 and second 640 buttons to restart the electric motor 502.

When desired, the user can also empty dirt from the chamber 105, and the first 228 and second 230 dirt collection chambers. To do so, the user must first remove the wand 1000 from the main unit 10. As noted above, with the wand 1000 connected to the main unit 10, the contact member 1024 of the first connecting cuff 1006 of the wand 1000 is engaged with the wand abutment portion 156 of the wand interlock actuator 152 such that the wand interlock actuator 152 and the wand interlock slider 154 are in their third positions. In such a position, the hook 168 of the slidable interlock member 154 engages the hook 188 of the bin body 110 to prevent opening of the bin base 102 relative to the bin body 110.

To remove the wand 1000 from the main unit 10, such that the bin base 102 is able to open relative to the bin case 174, the user manually releases the wand catch 1022 of the first connecting cuff 1006 of the wand 1000 by pressing the wand catch 1022 to move the resiliently biased hook 1027 out of contact with the locking projection 135 on the base nozzle 118 of the bin assembly 100. The user can then slide the wand 1000 away from the main unit 10 in a direction substantially parallel to the central longitudinal axis 19 of the main unit 10.

With the wand 1000 removed from the main unit 10, the wand interlock actuator 152 and the wand interlock slider 154 move to their second positions. In such a position, the hook 168 of the wand interlock slider 154 is spaced from the hook 188 of the bin body 110 in a direction generally normal to the central longitudinal axis 19 of the main unit 10. Thus the hook 168 of the wand interlock slider 154 is no longer engaged with the hook 188 of the bin base 110, and no longer inhibits opening of the bin base 102 relative to the bin body 110.

To move the bin base 102 to the open position, the user grasps the handle portion 372 of the bin push rod 356 and applies a force to the handle portion 372 in a direction toward the bin base 102. This causes the bin push rod 356 to slide within the push-rod channel 360 in a direction toward the bin base 102, substantially parallel to the central longitudinal axis 19 of the main unit 10. As the bin push rod 356 slides within the push-rod channel 360, the bin push rod 356 contacts the compaction handle 332, and causes pivot of the compaction handle 332 in the manner previously described. Thus sliding the bin push rod 356 can turn off the suction motor 500.

As the user continues to push the handle portion 372 of the bin push rod 356, the wedge-shaped end of the bin push rod 356 contacts the bin closure clasp 112, and more particularly the first 190 and second 192 clasps. The end of the bin push rod 356 forces the first 190 and second 192 clasps apart. Thus the first 190 and second 192 clasps no longer inhibit movement of the bin base 102 relative to the bin body 110.

As the user further continues to push the handle portion 372 of the bin push rod 356, the end of the bin push rod 356 contacts the bin push rod engaging protrusion 125 of the bin base 102. The bin push rod 356 is thereby able to push the bin base 102 away from the bin body 110. Although the bin assembly 100 comprises a spring 115 that biases the bin base 102 to the open position, the engagement of the bin base seal 107 with the bin case 174 and the engagement of the dirt collection chamber seal 108 with the first core portion 212 may mean that the bin base 102 does not automatically move to the open position when the bin closure clasp 112 moves to the expanded configuration. It is for this reason that the bin base 102 includes an engaging protrusion 125 against which the bin push rod 356 is able to contact and push. When the bin base 102 moves to the open position, the chamber 105 of the bin assembly 100 and the first 228 and second 230 dirt collection chambers of the core 202 are no longer closed by the bin base 102, such that dirt contained therein may be emptied simultaneously.

It will be appreciated that sliding of the bin push rod 356 by the user also causes sliding of the compaction handle 332, and hence sliding of the compaction plate sub-assembly 302 within the bin body 110. Thus the front plate 314 of the compaction plate sub-assembly 302 can assist with ejecting dirt from the coarse dirt collection chamber 171, with wiping of the first core portion 212 and the bin case 174 occurring at the same time.

Once dirt has been emptied from the bin chamber 105 and the first 228 and second 230 dirt collection chambers, the user can manually return the bin base 102 to the closed position relative to the bin body 110, and can return the compaction handle 332 and the handle portion 372 of the bin push rod 356 to their initial positions. As the bin push rod 356 is retracted, the extension spring 193 of the bin closure clasp 112 returns the first 190 and second 192 clasps into the contracted configuration to hold the bin base 102 in its closed position relative to the bin body 110.

If the user wishes to reconnect the wand 1000 to the main unit 10, the first connecting cuff 1000 of the wand 1000 is slid over the base nozzle 118, when the bin base 102 is closed relative to the bin case 174, such that the resiliently biased hook 1027 of the wand catch 1022 engages with the locking projection 135 on the base nozzle 118 of the bin assembly 100.

The contact member 1024 of the first connecting cuff 1006 of the wand 1000 engages with the wand abutment portion 156 of the wand interlock actuator 152 such that the wand interlock actuator 152 and the wand interlock slider 154 move to their second positions. In such a position, the hook 168 of the wand interlock slider 154 engages the hook 188 of the bin body 110 to prevent opening of the bin base 102 relative to the bin body 110.

In some examples, the user may wish to remove the cleanerhead 1100 from the wand 1000 prior to removing the wand 1000 from the main unit 10, may wish to remove the cleanerhead 1100 for the wand 1000 to enable attachment of an alternative cleanerhead to the wand 1000, or may wish to remove the cleanerhead 1100 from the wand 1000 to enable use of the cleaning nozzle 1012 at the second end 1020 of the wand 1000. To remove the cleanerhead 1100 from the wand 1000, the user can manually release the resiliently biased hook portion from the cleanerhead connecting portion 1028 using the cleanerhead catch 1224 by pressing the resiliently biased hook portion away from the cleanerhead connecting portion 1028 at the second end 1020 of the wand 1000. Alternatively, the user can make use of the connection release mechanism 1010 by using the user actuable collar 1032 located at the first end 1018 of the wand 1000. When the user slides the user actuable collar 1032 in a direction toward the second end 1020 of the wand 1000, in a direction parallel to the central longitudinal wand axis W, the user actuable collar 1032 pulls the connecting cable 1034 over the pulley 1036. This causes the breaking wedge 1040 to be pulled in a direction toward the first end 1018 of the wand 1000, in a direction parallel to the central longitudinal wand axis W.

As the breaking wedge 1040 moves toward the first end 1018 of the wand 1000, the projecting wedge 1054 engages with the cleanerhead catch 1124 to move the resiliently biased hook portion of the cleanerhead catch member 1124 out of engagement with the cleanerhead connecting portion 1028 of the second connecting cuff 1008 of the wand 1000. This enables the cleanerhead 1100 to be slid away from the wand 1000 in a direction parallel to the central longitudinal wand axis W.

As the breaking wedge 1040 moves toward the first end 1018 of the wand 1000, the first end 1056 of the body portion 1052 contacts the free ends of the first rocker arm 1048 of the first rocker 1038 and the first rocker arm 1041 of the second rocker 1039 to move the first rocker 1038 and the first rocker arm 1041 of the second rocker 1039 in a direction toward the first end 1018 of the wand 1000. This moves the second rocker arm 1050 of the first rocker 1038 and the second rocker arm 1043 of the second rocker 1039 in a direction toward the second end 1020 of the wand 1000.

Free ends of the second rocker arm 1050 of the first rocker 1038 and the second rocker arm 1043 of the second rocker 1039 contact the respective first 1042 and second 1045 push members, and cause the first 1042 and second 1045 push members to slide within the respective first 1060 and second 1068 sliding channels. The first end 1062 of the first push member 1042 and the first end 1070 of the second push member 1045 each contact the movable duct 1118 of the cleanerhead 1100 to push the cleanerhead 1100 away from the wand 1000 in a direction parallel to the central longitudinal wand axis W.

Thus the cleanerhead 1100 can be released from connection with the wand by a user remotely from the cleanerhead 1100, using the user actuable collar 1032 located at the first end 1018 of the wand. It will be appreciated by a person skilled in the art that such release of the cleanerhead 1100 from the wand 1000 can also take place when the wand 1000 is not connected to the main unit 10.

When the user wishes to reconnect the cleanerhead 1100 to the wand 1000, the movable duct 1118 can push the first 1042 and second 1045 push members back into their initial positions.

It will be appreciated by a person skilled in the art that the vacuum cleaner 1 can be used when the wand 1000 is connected to the main unit 10 without the cleanerhead 1100 being connected to the wand 1000, or indeed without either of the wand 1000 or the cleanerhead 1100 being connected to the main unit 10. In the former situation, the cleaning nozzle 1012 of the wand 1000 can be used to contact a surface to be cleaned. In the latter situation, the base nozzle 118 can be used to contact a surface to be cleaned. It will still further be appreciated that the cleanerhead 1100 can be connected to the main unit 10 without the wand 1000 as an intermediate component.

As noted above, the vacuum cleaner 1 can also be utilised in a high power mode. To place the vacuum cleaner 1 in the high power mode, a user can toggle an appropriate one of the first 638 and second 640 buttons. In the high power mode, the valve assembly 406 permits airflow to pass through the second subset 476 of cyclone bodies 464 of the secondary separation system 400, as shown in Figure 46(b).

The coil 486 of the valve actuator assembly 448 is energised such that the valve blocking member 484 is moved, against the action of the spring 494 to a position where the blocking member 484 blocks airflow through the second airflow path 490, and allows airflow through the first 488 and third 392 airflow paths. As the first airflow path 488 is in fluid communication with a location upstream of the electric motor 502, and airflow is permitted through the first 488 and third 492 airflow paths, a pressure is passed to the interior of the expansion member 440 that holds the expansion member 440 in a retracted state. In such a retracted state, the valve member 438 is disengaged with the valve seat 422 of the flow separator 404.

With the valve member 438 disengaged with the valve seat 422 of the flow separator 404, airflow is permitted to pass through the central bore 420 of the flow separator 404, and is permitted to pass through the outlet apertures 428 of the flow separator 404. As the cyclone inlets 472 of the second subset 476 of cyclone bodies 464 are in fluid communication with the outlet apertures 428 of the flow separator 404, airflow is permitted to pass into the second subset 476 of cyclone bodies, as shown in Figure 46(b).

Similarly, airflow is permitted to pass through to the cyclone inlets 472 of the first subset 474 of cyclone bodies 464 because the flow separator 404 does not inhibit the flow to the cyclone inlets 472 of the first set of cyclone bodies 464, as can be seen in Figure 46(a).

Thus in the high power mode, airflow flows in parallel through each of the first subset 474 of cyclone bodies 464 and the second subset 476 of cyclone bodies 464. Each of the first subset 474 of cyclone bodies 464 and the second subset 476 of cyclone bodies 464 acts to separate dirt from the airflow.

Dirt separated from the airflow by the first subset 474 of cyclone bodies 464 is free to fall through the respective cyclone dirt outlets 473, through the first dirt transfer passage 258 of the second core portion 214 of the primary separation system 200, and into the first dirt collection chamber 228 of the first core portion 212. Dirt separated from the airflow by the second subset 476 of cyclone bodies 464 is free to fall through the respective cyclone dirt outlets 473, through the second dirt transfer passage 260 of the second core portion 214 of the primary separation system 200, and into the second dirt collection chamber 223 of the first core portion 212.

It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the accompanying claims.

## Claims

1. A wand (1000) for a vacuum cleaner (1), wherein the wand (1000) comprises a first end (1018) connectable to a main unit (10) of the vacuum cleaner (1), a second end (1020) connectable to a cleanerhead (1100) of the vacuum cleaner (1), the first end (1018) opposite to the second end (1020), and a connection release mechanism (1010) for releasing a connection between the wand (1000) and the cleanerhead (1100), the connection release mechanism (1010) comprising a user actuable portion located at or near the first end (1018) of the wand (1000), and a connection breaking member (1040) located at the second end (1020) of the wand (1000), wherein actuation of the user actuable portion in a first direction causes movement of the connection breaking member (1040) in a second direction different to the first direction.

2. The wand (1000) of claim **1,** wherein the second direction is opposite to the first direction.

3. The wand (1000) of claim 1 or claim 2, wherein each of the first direction and the second direction is a linear direction.

4. The wand (1000) of any one of the preceding claims, wherein the first direction is a direction toward the second end (1020) of the wand (1000), and the second direction is a direction toward the first end (1018) of the wand (1000).

5. The wand (1000) of any one of the preceding claims, wherein the wand (1000) comprises a central longitudinal wand axis (W), and the first direction and the second direction are substantially parallel to the central longitudinal wand axis (W).

6. The wand (1000) of any one of the preceding claims, wherein the wand (1000) comprises an outer wall (1004), and the user actuable portion is a user actuable collar (1032) that is located about the outer wall (1004).

7. The wand (1000) of any one of the preceding claims, wherein:
the connection release mechanism (1010) comprises a cable (1034), wherein a first end of the cable (1034) is connected to the user actuable portion, and a second end of the cable (1034) is connected to the connection breaking member (1040);
optionally, the wand (1000) comprises a central longitudinal wand axis (W), and wherein the cable (1034) is movable in a direction that is parallel to the central longitudinal wand axis (W);
optionally, the wand (1000) comprises an inner wall (1002) and an outer wall (1004), wherein an inner surface of the inner wall (1002) defines a wand flowpath along which an airflow passes through the wand (1000) in use, and wherein the cable (1034) is located between the inner wall (1002) and the outer wall (1004);
optionally, the connection release mechanism (1010) comprises a pulley (1036), and wherein an intermediate portion of the cable (1034), located between the first and second ends of the cable (1034), is looped over the pulley (1036) and, further optionally, the wand (1000) comprises a central longitudinal wand axis (W), and wherein the pulley (1036) has a rotational pulley axis (P) that extends orthogonally to the central longitudinal wand axis (W); and
optionally, the wand (1000) comprises a central longitudinal wand axis (W) and electrically-conductive power lines that extend between the first end (1018) of the wand (1000) and the second end (1020) of the wand (1000), and wherein the electrically-conductive power lines are circumferentially offset from the cable (1034) relative to the central longitudinal wand axis (W).

8. A system, comprising:
the wand (1000) of any one of the preceding claims; and
the cleanerhead (1100), to which the second end (1020) of the wand (1000) is connectable.

9. The system of claim 8, wherein:
the wand (1000) is according to claim 7, wherein the cleanerhead (1100) has a base and wherein, when the cleanerhead (1100) is connected to the wand (1000) with the base facing towards a surface to be cleaned, the cable (1034) is located on a topside portion of the wand (1000).

10. The system of claim 8 or 9, wherein the cleanerhead (1100) comprises a cleanerhead catch (1124) for releasably connecting to the second end (1020) of the wand (1000), and, when the cleanerhead (1100) is connected to the second end (1020) of the wand (1000), movement of the connection breaking member (1040) releases a connection between the cleanerhead catch (1124) and the second end (1020) of the wand (1000).

11. The system of claim 10, wherein:
the second end (1020) of the wand (1000) comprises a cleanerhead connecting aperture, and wherein the cleanerhead catch (1124) is for releasably engaging with the cleanerhead connecting aperture; and
optionally, the connection breaking member (1040) comprises breaking wedge having a body portion (1052) and a projecting wedge (1054), that protrudes outwardly from the body portion (1052), wherein the cleanerhead catch (1124) comprises a hook portion and a ramped surface, wherein the hook portion is configured to selectively engage with the cleanerhead connecting aperture to hold the cleanerhead (1100) and wand (1000) in place relative to each other, and wherein the ramped surface is configured to engage with the projecting wedge (1054) to move a position of the hook portion relative to the cleanerhead connecting aperture.

12. The system according to any one of claims 8 to 11, wherein:
the connection release mechanism (1010) comprises one or more push members (1042, 1045) for pushing the cleanerhead (1100) away from the wand (1000) when the cleanerhead (1100) is connected to the second end (1020) of the wand (1000);
optionally, when the cleanerhead (1100) is connected to the second end (1020) of the wand (1000), the actuation of the user actuable portion in the first direction causes the one or more push members (1042, 1045) to push the cleanerhead (1100) away from the wand (1000);
optionally, the wand (1000) is configured such that, when the cleanerhead (1100) is connected to the second end of the wand (1000), the, or each of the, one or more push members (1042, 1045) is for pushing the cleanerhead (1100) away from the wand (1000) in the first direction;
optionally, the cleanerhead (1100) has a base and wherein when the cleanerhead (1100) is connected to the wand (1000) with the base facing towards a surface to be cleaned, the, or each of the, one or more push members (1042, 1045) is located on an underside portion of the wand (1000); and
optionally, the, or each of the, one or more push members (1042, 1045) is biased away from the cleanerhead (1100) when the cleanerhead (1100) is connected to the second end (1020) of the wand (1000).

13. The system according to any one of claims 8 to 12, wherein:
the wand (1000) and the cleanerhead (1100) have respective co-operable features that cooperate to guide movement of the cleanerhead (1100) away from the wand (1000) during disconnection of the cleanerhead (1100) from the wand (1000); and
optionally, the respective co-operable features comprise one or more tapered ribs on an outer surface of the wand (1000) and one or more corresponding rib receiving channels on an internal surface of the cleanerhead (1100).

14. The system according to any one of claims 8 to 13, wherein:
the wand (1000) comprises a nozzle (1012) at the second end of the wand (1000), and wherein the nozzle (1012) is exposed when the cleanerhead (1100) is disconnected from the wand (1000);
optionally, the nozzle (1012) is received within the cleanerhead (1100) when the cleanerhead (1100) is connected to the wand (1000); and
optionally, the nozzle (1012) comprises one or more bleed holes (141) that extend through a wall of the nozzle (1012), and, further optionally:
the cleanerhead (1100) has a base and, when the cleanerhead (1100) is connected to the wand (1000) with the base facing towards a surface to be cleaned, the, or each of the, one or more bleed holes (141) is located on a lateral side of the nozzle (1012); and/or
the cleanerhead (1100) is configured to overlie the one or more bleed holes (141), such that airflow through the one or more bleed holes (141) is inhibited when the cleanerhead (1100) is connected to the wand (1000).

15. A vacuum cleaner (1), comprising:
the system of any one of claims 8 to 14; and
the main unit (10), to which the first end (1018) of the wand (1000) of the system is connectable;
wherein, optionally, the vacuum cleaner (1) is a handheld vacuum cleaner.

## Patentansprüche

1. Stab (1000) für einen Staubsauger (1), wobei der Stab (1000) ein erstes Ende (1018), das mit einer Haupteinheit (10) des Staubsaugers (1) verbindbar ist, ein zweites Ende (1020), das mit einem Reinigungskopf (1100) des Staubsaugers (1) verbindbar ist, wobei das erste Ende (1018) dem zweiten Ende (1020) gegenüberliegt, und einen Verbindungsfreigabemechanismus (1010) zum Lösen einer Verbindung zwischen dem Stab (1000) und dem Reinigungskopf (1100) umfasst, wobei der Verbindungsfreigabemechanismus (1010) einen vom Benutzer betätigbaren Abschnitt, der sich an oder in der Nähe des ersten Endes (1018) des Stabs (1000) befindet, und ein Verbindungsunterbrechungselement (1040), das sich an dem zweiten Ende (1020) des Stabs (1000) befindet, umfasst, wobei eine Betätigung des vom Benutzer betätigbaren Abschnitts in einer ersten Richtung eine Bewegung des Verbindungsunterbrechungselements (1040) in einer zweiten Richtung bewirkt, die sich von der ersten Richtung unterscheidet.

2. Stab (1000) nach Anspruch 1, wobei die zweite Richtung der ersten Richtung entgegengesetzt ist.

3. Stab (1000) nach Anspruch 1 oder Anspruch 2, wobei die erste Richtung und die zweite Richtung jeweils eine lineare Richtung sind.

4. Stab (1000) nach einem der vorhergehenden Ansprüche, wobei die erste Richtung eine Richtung zum zweiten Ende (1020) des Stabs (1000) hin ist und die zweite Richtung eine Richtung zum ersten Ende (1018) des Stabs (1000) hin ist.

5. Stab (1000) nach einem der vorhergehenden Ansprüche, wobei der Stab (1000) eine zentrale Stablängsachse (W) umfasst und die erste Richtung und die zweite Richtung im Wesentlichen parallel zu der zentralen Stablängsachse (W) sind.

6. Stab (1000) nach einem der vorhergehenden Ansprüche, wobei der Stab (1000) eine Außenwand (1004) umfasst und der vom Benutzer betätigbare Abschnitt ein vom Benutzer betätigbarer Kragen (1032) ist, der um die Außenwand (1004) herum angeordnet ist.

7. Stab (1000) nach einem der vorhergehenden Ansprüche, wobei:
der Verbindungsfreigabemechanismus (1010) ein Kabel (1034) umfasst, wobei ein erstes Ende des Kabels (1034) mit dem vom Benutzer betätigbaren Abschnitt verbunden ist und ein zweites Ende des Kabels (1034) mit dem Verbindungsunterbrechungselement (1040) verbunden ist;
optional der Stab (1000) eine zentrale Stablängsachse (W) umfasst, wobei das Kabel (1034) in einer Richtung beweglich ist, die parallel zu der zentralen Stablängsachse (W) ist;
optional der Stab (1000) eine Innenwand (1002) und eine Außenwand (1004) umfasst, wobei eine Innenfläche der Innenwand (1002) einen Stabströmungspfad definiert, entlang dem ein Luftstrom im Gebrauch durch den Stab (1000) strömt, und wobei sich das Kabel (1034) zwischen der Innenwand (1002) und der Außenwand (1004) befindet;
optional der Verbindungsfreigabemechanismus (1010) eine Seilrolle (1036) umfasst, wobei ein Zwischenabschnitt des Kabels (1034), der sich zwischen dem ersten und dem zweiten Ende des Kabels (1034) befindet, über die Seilrolle (1036) geschlungen ist, und ferner optional der Stab (1000) eine zentrale Stablängsachse (W) umfasst, wobei die Seilrolle (1036) eine Drehachse (P) aufweist, die sich orthogonal zur zentralen Stablängsachse (W) erstreckt; und
optional der Stab (1000) eine zentrale Stablängsachse (W) und elektrisch leitfähige Stromleitungen umfasst, die sich zwischen dem ersten Ende (1018) des Stabs (1000) und dem zweiten Ende (1020) des Stabs (1000) erstrecken, wobei die elektrisch leitfähigen Stromleitungen gegenüber dem Kabel (1034) in Umfangsrichtung relativ zur zentralen Stablängsachse (W) versetzt sind.

8. System, umfassend:
den Stab (1000) nach einem der vorhergehenden Ansprüche; und
den Reinigungskopf (1100), mit dem das zweite Ende (1020) des Stabs (1000) verbindbar ist.

9. System nach Anspruch 8, wobei:
der Stab (1000) nach Anspruch 7 ausgebildet ist, wobei der Reinigungskopf (1100) eine Basis aufweist und wobei, wenn der Reinigungskopf (1100) mit dem Stab (1000) verbunden ist und die Basis einer zu reinigenden Oberfläche zugewandt ist, sich das Kabel (1034) an einem oberseitigen Abschnitt des Stabs (1000) befindet.

10. System nach Anspruch 8 oder 9, wobei der Reinigungskopf (1100) eine Reinigungskopfarretierung (1124) zum lösbaren Verbinden mit dem zweiten Ende (1020) des Stabs (1000) umfasst und, wenn der Reinigungskopf (1100) mit dem zweiten Ende (1020) des Stabs (1000) verbunden ist, eine Bewegung des Verbindungsunterbrechungselements (1040) eine Verbindung zwischen der Reinigungskopfarretierung (1124) und dem zweiten Ende (1020) des Stabs (1000) löst.

11. System nach Anspruch 10, wobei:
das zweite Ende (1020) des Stabs (1000) eine Reinigungskopfverbindungsöffnung umfasst, wobei die Reinigungskopfarretierung (1124) zum lösbaren Eingriff mit der Reinigungskopfverbindungsöffnung dient; und
optional das Verbindungsunterbrechungselement (1040) einen Brechkeil mit einem Körperabschnitt (1052) und einem vorstehenden Keil (1054) umfasst, der von dem Körperabschnitt (1052) nach außen vorsteht, wobei die Reinigungskopfarretierung (1124) einen Hakenabschnitt und eine Rampenfläche umfasst, wobei der Hakenabschnitt dazu ausgelegt ist, selektiv mit der Reinigungskopfverbindungsöffnung in Eingriff zu treten, um den Reinigungskopf (1100) und den Stab (1000) relativ zueinander in ihrer Lage zu halten, und wobei die Rampenfläche dazu ausgelegt ist, mit dem vorstehenden Keil (1054) in Eingriff zu treten, um die Position des Hakenabschnitts relativ zur Reinigungskopfverbindungsöffnung zu verändern.

12. System nach einem der Ansprüche 8 bis 11, wobei:
der Verbindungsfreigabemechanismus (1010) ein oder mehrere Schubelemente (1042, 1045) zum Wegschieben des Reinigungskopfes (1100) vom Stab (1000) umfasst, wenn der Reinigungskopf (1100) mit dem zweiten Ende (1020) des Stabs (1000) verbunden ist;
optional die Betätigung des vom Benutzer betätigbaren Abschnitts in der ersten Richtung, wenn der Reinigungskopf (1100) mit dem zweiten Ende (1020) des Stabs (1000) verbunden ist, bewirkt, dass das eine oder die mehreren Schubelemente (1042, 1045) den Reinigungskopf (1100) vom Stab (1000) wegdrücken;
optional der Stab (1000) dazu ausgelegt ist, dass, wenn der Reinigungskopf (1100) mit dem zweiten Ende des Stabs (1000) verbunden ist, das eine Schubelement bzw. jedes der mehreren Schubelemente (1042, 1045) dazu dient, den Reinigungskopf (1100) in der ersten Richtung vom Stab (1000) wegzuschieben;
optional der Reinigungskopf (1100) eine Basis aufweist und wobei sich, wenn der Reinigungskopf (1100) mit dem Stab (1000) verbunden ist und die Basis einer zu reinigenden Oberfläche zugewandt ist, das eine Schubelement bzw. jedes der mehreren Schubelemente (1042, 1045) an einem Unterseitenabschnitt des Stabs (1000) befindet; und
optional das eine Schubelement bzw. jedes der mehreren Schubelemente (1042, 1045) vom Reinigungskopf (1100) weg vorgespannt ist, wenn der Reinigungskopf (1100) mit dem zweiten Ende (1020) des Stabs (1000) verbunden ist.

13. System nach einem der Ansprüche 8 bis 12, wobei:
der Stab (1000) und der Reinigungskopf (1100) jeweilige zusammenwirkende Merkmale aufweisen, die zusammenwirken, um die Bewegung des Reinigungskopfs (1100) vom Stab (1000) weg während des Lösens des Reinigungskopfs (1100) vom Stab (1000) zu führen; und
optional die jeweiligen zusammenwirkenden Merkmale eine oder mehrere sich verjüngende Rippen auf einer Außenfläche des Stabs (1000) und einen oder mehrere entsprechende Rippenaufnahmekanäle auf einer Innenfläche des Reinigungskopfes (1100) umfassen.

14. System nach einem der Ansprüche 8 bis 13, wobei:
der Stab (1000) eine Düse (1012) am zweiten Ende des Stabs (1000) umfasst, wobei die Düse (1012) freiliegt, wenn der Reinigungskopf (1100) vom Stab (1000) getrennt ist;
optional die Düse (1012) innerhalb des Reinigungskopfes (1100) aufgenommen ist, wenn der Reinigungskopf (1100) mit dem Stab (1000) verbunden ist; und
optional die Düse (1012) ein oder mehrere Nebenluftöffnungen (141) umfasst, die sich durch eine Wand der Düse (1012) erstrecken, und ferner optional:
der Reinigungskopf (1100) eine Basis aufweist und sich, wenn der Reinigungskopf (1100) mit dem Stab (1000) verbunden ist und die Basis einer zu reinigenden Oberfläche zugewandt ist, die eine Nebenluftöffnung bzw. jede der mehreren Nebenluftöffnungen (141) auf einer lateralen Seite der Düse (1012) befindet; und/oder
der Reinigungskopf (1100) dazu ausgelegt ist, die eine oder die mehreren Nebenluftöffnungen (141) zu überdecken, so dass ein Luftstrom durch die eine oder die mehreren Nebenluftöffnungen (141) gehemmt wird, wenn der Reinigungskopf (1100) mit dem Stab (1000) verbunden ist.

15. Staubsauger (1), umfassend:
das System nach einem der Ansprüche 8 bis 14; und
die Haupteinheit (10), mit der das erste Ende (1018) des Stabs (1000) des Systems verbindbar ist;
wobei optional der Staubsauger (1) ein Handstaubsauger ist.

## Revendications

1. Tube (1000) pour aspirateur (1), le tube (1000) comprenant une première extrémité (1018) pouvant être reliée à une unité principale (10) de l'aspirateur (1), une seconde extrémité (1020) pouvant être reliée à une tête d'aspirateur (1100) de l'aspirateur (1), la première extrémité (1018) étant opposée à la seconde extrémité (1020), et un mécanisme de libération de liaison (1010) pour libérer une liaison entre le tube (1000) et la tête de nettoyage (1100), le mécanisme de libération de liaison (1010) comprenant une partie actionnable par l'utilisateur située au niveau ou à proximité de la première extrémité (1018) du tube (1000), et un élément de rupture de liaison (1040) situé au niveau de la seconde extrémité (1020) du tube (1000), l'actionnement de la partie actionnable par l'utilisateur dans une première direction provoquant le déplacement de l'élément de rupture de liaison (1040) dans une seconde direction différente de la première direction.

2. Tube (1000) selon la revendication 1, la seconde direction étant opposée à la première direction.

3. Tube (1000) selon la revendication 1 ou la revendication 2, chacune de la première direction et de la seconde direction étant une direction linéaire.

4. Tube (1000) selon l'une quelconque des revendications précédentes, la première direction étant une direction vers la seconde extrémité (1020) du tube (1000), et la seconde direction étant une direction vers la première extrémité (1018) du tube (1000).

5. Tube (1000) selon l'une quelconque des revendications précédentes, le tube (1000) comprenant un axe longitudinal central (W) de tube, et la première direction et la seconde direction étant sensiblement parallèles à l'axe de tube longitudinal central (W).

6. Tube (1000) selon l'une quelconque des revendications précédentes, le tube (1000) comprenant une paroi extérieure (1004), et la partie actionnable par l'utilisateur étant un collier actionnable par l'utilisateur (1032) qui est situé autour de la paroi extérieure (1004).

7. Tube (1000) selon l'une quelconque des revendications précédentes,
le mécanisme de libération de liaison (1010) comprenant un câble (1034), une première extrémité du câble (1034) étant reliée à la partie actionnable par l'utilisateur, et une seconde extrémité du câble (1034) étant reliée à l'élément de rupture de liaison (1040) ; éventuellement, le tube (1000) comprenant un axe de tube longitudinal central (W) et le câble (1034) étant mobile dans une direction qui est parallèle à l'axe de tube longitudinal central (W) ;
éventuellement, le tube (1000) comprenant une paroi interne (1002) et une paroi externe (1004), une surface interne de la paroi interne (1002) définissant un chemin d'écoulement de tube le long duquel un flux d'air passe à travers le tube (1000) lors de l'utilisation, et le câble (1034) étant situé entre la paroi interne (1002) et la paroi externe (1004) ;
éventuellement, le mécanisme de libération de liaison (1010) comprenant une poulie (1036), et une partie intermédiaire du câble (1034), située entre les première et seconde extrémités du câble (1034), étant en boucle sur la poulie (1036) et, éventuellement en outre, le tube (1000) comprenant un axe de tube longitudinal central (W), et la poulie (1036) présentant un axe de rotation (P) qui s'étend orthogonalement à l'axe de tube longitudinal central (W) ; et
éventuellement, le tube (1000) comprenant un axe de tube longitudinal central (W) et des lignes de puissance électriquement conductrices s'étendant entre la première extrémité (1018) du tube (1000) et la seconde extrémité (1020) du tube (1000), et les lignes de puissance électriquement conductrices étant décalées circonférentiellement du câble (1034) par rapport à l'axe de tube longitudinal central (W).

8. Système, comprenant :
le tube (1000) selon l'une quelconque des revendications précédentes ; et
la tête de nettoyage (1100), à laquelle la seconde extrémité (1020) du tube (1000) peut être reliée.

9. Système selon la revendication 8,
le tube (1000) étant selon la revendication 7, la tête de nettoyage (1100) comportant une base et, lorsque la tête de nettoyage (1100) est reliée du tube (1000) avec la base tournée vers une surface à nettoyer, le câble (1034) étant situé sur une partie supérieure du tube (1000).

10. Système selon la revendication 8 ou 9, la tête de nettoyage (1100) comprenant un cliquet de tête de nettoyage (1124) pour une liaison amovible à la seconde extrémité (1020) du tube (1000), et, lorsque la tête de nettoyage (1100) est reliée à la seconde extrémité (1020) du tube (1000), le déplacement de l'élément de rupture de liaison (1040) libérant une liaison entre le cliquet de tête de nettoyage (1124) et la seconde extrémité (1020) du tube (1000).

11. Système selon la revendication 10,
la seconde extrémité (1020) du tube (1000) comprenant une ouverture de liaison de tête de nettoyage, et le cliquet de tête de nettoyage (1124) étant destiné à venir en prise amovible avec l'ouverture de liaison de tête de nettoyage ; et
éventuellement, l'élément de rupture de liaison (1040) comprenant un coin de rupture présentant une partie corps (1052) et un coin saillant (1054), qui fait saillie vers l'extérieur à partir de la partie corps (1052), le cliquet de tête de nettoyage (1124) comprenant une partie crochet et une surface inclinée, la partie crochet étant conçue pour venir en prise sélectivement avec l'ouverture de liaison de tête de nettoyage pour maintenir la tête de nettoyage (1100) et le tube (1000) en place l'un par rapport à l'autre, et la surface inclinée étant conçue pour venir en prise avec le coin saillant (1054) afin de déplacer une position de la partie crochet par rapport à l'ouverture de liaison de tête de nettoyage.

12. Système selon l'une quelconque des revendications 8 à 11,
le mécanisme de libération de liaison (1010) comprenant un ou plusieurs éléments de poussée (1042, 1045) pour pousser la tête de nettoyage (1100) à l'opposé du tube (1000) lorsque la tête de nettoyage (1100) est reliée à la seconde extrémité (1020) du tube (1000) ; éventuellement, lorsque la tête de nettoyage (1100) est reliée à la seconde extrémité (1020) du tube (1000), l'actionnement de la partie actionnable par l'utilisateur dans la première direction amenant le ou les éléments de poussée (1042, 1045) à pousser la tête de nettoyage (1100) à l'opposé du tube (1000) ;
éventuellement, le tube (1000) étant conçu de sorte que, lorsque la tête de nettoyage (1100) est reliée à la seconde extrémité du tube (1000), le ou chacun des éléments de poussée (1042, 1045) soient aptes à pousser la tête de nettoyage (1100) à l'opposé du tube (1000) dans la première direction ;
éventuellement, la tête de nettoyage (1100) comportant une base et, lorsque la tête de nettoyage (1100) est reliée au tube (1000) avec la base tournée vers une surface à nettoyer, le ou chacun des éléments de poussée (1042, 1045) étant situé sur une partie inférieure du tube (1000) ; et
éventuellement, le ou chacun des éléments de poussée (1042, 1045) étant sollicité à l'opposé de la tête de nettoyage (1100) lorsque la tête de nettoyage (1100) est reliée à la seconde extrémité (1020) du tube (1000).

13. Système selon l'une quelconque des revendications 8 à 12,
le tube (1000) et la tête de nettoyage (1100) présentant des caractéristiques coopérantes respectives qui coopèrent pour guider le déplacement de la tête de nettoyage (1100) à l'opposé du tube (1000) pendant la séparation de la tête de nettoyage (1100) du tube (1000) ; et
éventuellement, les caractéristiques coopérantes respectives comprenant une ou plusieurs nervures coniques sur une surface extérieure du tube (1000) et un ou plusieurs canaux de réception de nervures correspondants sur une surface intérieure de la tête de nettoyage (1100).

14. Système selon l'une quelconque des revendications 8 à 13,
le tube (1000) comportant une buse (1012) au niveau de la seconde extrémité du tube (1000), et la buse (1012) étant exposée lorsque la tête de nettoyage (1100) est séparée du tube (1000) ;
éventuellement, la buse (1012) étant reçue dans la tête de nettoyage (1100) lorsque la tête de nettoyage (1100) est reliée au tube (1000) ; et
éventuellement, la buse (1012) comprenant un ou plusieurs trous de purge (141) qui s'étendent à travers une paroi de la buse (1012), et, en outre éventuellement :
la tête de nettoyage (1100) comportant une base et, lorsque la tête de nettoyage (1100) est reliée au tube (1000) avec la base tournée vers une surface à nettoyer, un ou plusieurs trous de purge (141) étant situés sur un côté latéral de la buse (1012) ; et/ou
la tête de nettoyage (1100) étant conçue pour recouvrir le ou les trous de purge (141), de sorte que l'écoulement d'air à travers le ou les trous de purge (141) soit empêché lorsque la tête de nettoyage (1100) est reliée au tube (1000).

15. Aspirateur (1) comprenant :
le système selon l'une quelconque des revendications 8 à 14 ; et
l'unité principale (10) à laquelle la première extrémité (1018) du tube (1000) du système peut être reliée ;
éventuellement, l'aspirateur (1) étant un aspirateur portatif.
